# EUROPEAN PATENT APPLICATION

(11) **EP 4 456 182 A1**
(43) Date of publication of application: **30.10.2024**
(21) Application number: 24743644.7
(22) Date of filing: 18.01.2024
(51) Int. Cl.: H01M 4/1391, C08F 2/44, C08F 259/08, C08F 261/06, H01G 11/06, H01G 11/38, H01M 4/131, H01M 4/525, H01M 4/62, H01M 10/052, H01M 10/0562

(54) **MIXTURE FOR ELECTROCHEMICAL DEVICE, MIXTURE SHEET FOR ELECTROCHEMICAL DEVICE, ELECTRODE, AND ELECTROCHEMICAL DEVICE**

(30) Priority: 18.01.2023 JP 2023006089; 18.01.2023 JP 2023006115
(71) Applicant: DAIKIN INDUSTRIES, LTD., Osaka-shi, Osaka 530-0001 (JP)
(72) Inventor: NISHIMURA, Kenta, Osaka-Shi, Osaka 530-0001 (JP); KATO, Taketo, Osaka-Shi, Osaka 530-0001 (JP); YAMADA, Takaya, Osaka-Shi, Osaka 530-0001 (JP); NAGAI, Shota, Osaka-Shi, Osaka 530-0001 (JP); INOUE, Ryo, Osaka-Shi, Osaka 530-0001 (JP); TERADA, Junpei, Osaka-Shi, Osaka 530-0001 (JP); YAMANAKA, Taku, Osaka-Shi, Osaka 530-0001 (JP)
(74) Representative: Hoffmann Eitle
(86) International application number: PCT/JP2024/001276
(87) International publication number: WO 2024/154777

(57) **Abstract**

The disclosure provides an electrochemical device mixture capable of providing a mixture sheet exhibiting excellent strength and excellent flexibility while containing a small amount of binder, and an electrochemical device mixture sheet, an electrode, and an electrochemical device each containing the electrochemical device mixture. The electrochemical device mixture contains an electrode active material and/or a solid electrolyte; and a binder. The binder contains a tetrafluoroethylene-based polymer composition. the tetrafluoroethylene-based polymer composition contains a tetrafluoroethylene-based polymer and a macromolecular compound containing an ionic group. The binder is contained in an amount of 0.3% by mass or more and 8% by mass or less relative to the electrochemical device mixture.

## Description

### TECHNICAL FIELD

The disclosure relates to electrochemical device mixtures, electrochemical device mixture sheets, electrodes, and electrochemical devices.

### BACKGROUND ART

Secondary batteries such as lithium-ion secondary batteries are high-voltage, high-energy-density batteries with low self-discharge and low memory effect and can be made extremely lightweight, and are therefore used in small and portable electric and electronic devices such as laptop PCs, cellular phones, smart phones, tablet PCs, and Ultrabooks, and are also being commercialized as a wide variety of power sources, including in-vehicle power sources for driving automobiles and large power sources for stationary applications. Secondary batteries are now demanded to have even higher energy densities and further improved battery characteristics.

Patent Literature 1 discloses an energy storage device in which at least one of the cathode or the anode includes a polytetrafluoroethylene composite binder material.

Patent Literature Documents 2 to 6 each describe use of polytetrafluoroethylene as a binder for batteries.

### CITATION LIST

### - Patent Literature

Patent Literature 1: JP 2017-517862 T
Patent Literature 2: WO 2021/181887 A1
Patent Literature 3: WO 2021/181888 A1
Patent Literature 4: WO 2021/192541 A1
Patent Literature 5: WO 2022/138942 A1
Patent Literature 6: WO 2022/138939 A1

### SUMMARY OF INVENTION

### - Technical Problem

The disclosure aims to provide an electrochemical device mixture capable of providing a mixture sheet exhibiting excellent strength and excellent flexibility while containing a small amount of binder, and an electrochemical device mixture sheet, an electrode, and an electrochemical device each containing the electrochemical device mixture.

### - Solution to Problem

The disclosure (1) relates to an electrochemical device mixture containing:
an electrode active material and/or a solid electrolyte; and
a binder,
the binder containing a tetrafluoroethylene-based polymer composition,
the tetrafluoroethylene-based polymer composition containing a tetrafluoroethylene-based polymer and a macromolecular compound containing an ionic group,
the binder being contained in an amount of 0.3% by mass or more and 8% by mass or less relative to the electrochemical device mixture.

The disclosure (2) relates to the electrochemical device mixture according to the disclosure (1), wherein the ionic group includes at least one selected from the group consisting of -SO₃M^{a}, -PO₃M^{a}, and -COOM^{a}, wherein M^{a} is -H, a metal atom, -NR²₄, imidazolium optionally containing a substituent, pyridinium optionally containing a substituent, or phosphonium optionally containing a substituent, where R² is H or an organic group.

The disclosure (3) relates to the electrochemical device mixture according to the disclosure (2), wherein the ionic group includes at least one selected from the group consisting of -SO₃M^{a} and -COOM^{a}, wherein M^{a} is -H or an alkali metal atom.

The disclosure (4) relates to the electrochemical device mixture according to any one of the disclosures (1) to (3), wherein the ionic group is contained in an amount of 0.8 meq/g or more relative to the macromolecular compound.

The disclosure (5) relates to the electrochemical device mixture according to any one of the disclosures (1) to (4), wherein the tetrafluoroethylene-based polymer and the macromolecular compound are contained in a total amount of 99.95% by mass or more of the tetrafluoroethylene-based polymer composition.

The disclosure (6) relates to the electrochemical device mixture according to any one of the disclosures (1) to (5), wherein the macromolecular compound is contained in an amount of 0.08% by mass or more and 1.0% by mass or less relative to the tetrafluoroethylene-based polymer.

The disclosure (7) relates to the electrochemical device mixture according to any one of the disclosures (1) to (6), wherein a proportion of hydrogen atoms replaced by fluorine atoms among those bonded to any carbon atom of the macromolecular compound is 50% or more.

The disclosure (8) relates to the electrochemical device mixture according to any one of the disclosures (1) to (7), wherein the macromolecular compound has an ion exchange ratio of 53 or lower.

The disclosure (9) relates to the electrochemical device mixture according to any one of the disclosures (1) to (8), wherein the macromolecular compound is a water-soluble macromolecular compound.

The disclosure (10) relates to the electrochemical device mixture according to any one of the disclosures (1) to (9), wherein the macromolecular compound includes at least one selected from the group consisting of a polymer (I) containing a polymerized unit (I) based on a monomer represented by the following formula (I) and a compound (II) represented by the following formula (II),
the formula (I) being:

   CX¹X³=CX²R(-CZ¹Z²-A⁰)ₘ (I)

   wherein X¹ and X³ are each independently F, Cl, H, or CF₃; A⁰ is an anionic group; X² is H, F, an alkyl group, or a fluorine-containing alkyl group; R is a linking group; Z¹ and Z² are each independently H, F, an alkyl group, or a fluorine-containing alkyl group; and m is an integer of 1 or greater,
the formula (II) being:

   T^{X}-X^{A}-R^{FA1}-R^{FA2}-X^{A}-T^{X}' (II)

   wherein
   R^{FA1} is -Rf¹ₚ-R^{F}-O_{q}-;
   R^{FA2} is -Rf²ₚ-R^{FX}-O_{q}-;
   R^{F} is a divalent fluoropolyether group;
   R^{FX} is a divalent fluoropolyether group containing an anionic group;
   Rf¹ and Rf² are each independently a C1-C6 alkylene group optionally substituted by one or more fluorine atoms;
   ps are each independently 0 or 1;
   qs are each independently 0 or 1;
   X^{A}s are each independently a single bond or a divalent to decavalent group; and
   T^{X} and T^{X}' are each independently selected from the group consisting of (i) a C1-C24 (hydro)(fluoro)carbon group optionally containing one or more species of H, O, and Cl and being free from the anionic group and (ii) a C1-C24 (hydro)(fluoro)carbon group containing at least one group identical with the anionic group.

The disclosure (11) relates to the electrochemical device mixture according to the disclosure (10), wherein the macromolecular compound is the polymer (I) and, in the formula (I), X¹ and X³ are each independently F or H; A⁰ is -SO₃M^{a} or -COOM^{a}, wherein M^{a} is -H or an alkali metal atom; X² is F; R is a C1-C4 fluorinated alkylene group containing an ether bond; Z¹ and Z² are each independently F or CF₃; and m is 1.

The disclosure (12) relates to the electrochemical device mixture according to any one of the disclosures (1) to (11), wherein the tetrafluoroethylene-based polymer is polytetrafluoroethylene.

The disclosure (13) relates to the electrochemical device mixture according to any one of the disclosures (1) to (12), wherein the tetrafluoroethylene-based polymer contains a tetrafluoroethylene unit and a modifying monomer unit based on a modifying monomer copolymerizable with tetrafluoroethylene.

The disclosure (14) relates to the electrochemical device mixture according to any one of the disclosures (1) to (13), wherein the binder has a fibrous structure having a fibril diameter (median) of 100 nm or smaller.

The disclosure (15) relates to the electrochemical device mixture according to any one of the disclosures (1) to (14), wherein the tetrafluoroethylene-based polymer composition has a standard specific gravity of 2.280 or lower.

The disclosure (16) relates to the electrochemical device mixture according to any one of the disclosures (1) to (15), wherein the solid electrolyte is a sulfide-based solid electrolyte or an oxide-based solid electrolyte.

The disclosure (17) relates to the electrochemical device mixture according to any one of the disclosures (1) to (16), wherein the electrode active material is a lithium-nickel composite oxide.

The disclosure (18) relates to the electrochemical device mixture according to any one of the disclosures (1) to (17), wherein the electrochemical device mixture is in a form of a self-supporting film.

The disclosure (19) relates to the electrochemical device mixture according to any one of the disclosures (1) to (18), wherein the electrochemical device mixture has a thickness of 300 µm or smaller.

The disclosure (20) relates to the electrochemical device mixture according to any one of the disclosures (1) to (19), wherein the electrochemical device mixture is a mixture for a secondary battery.

The disclosure (21) relates to the electrochemical device mixture according to the disclosure (20), wherein the electrochemical device mixture is a mixture for a lithium-ion secondary battery.

The disclosure (22) relates to the electrochemical device mixture according to the disclosure (20) or (21), wherein the electrochemical device mixture is a mixture for a solid-state secondary battery.

The disclosure (23) relates to the electrochemical device mixture according to any one of the disclosures (1) to (19), wherein the electrochemical device mixture is a mixture for a capacitor.

The disclosure (24) relates to an electrochemical device mixture sheet containing the electrochemical device mixture according to any one of the disclosures (1) to (22) .

The disclosure (25) relates to an electrode containing the electrochemical device mixture sheet according to the disclosure (24).

The disclosure (26) relates to an electrochemical device including the electrode according to the disclosure (25) .

### - Advantageous Effects of Invention

The disclosure can provide a secondary battery mixture capable of providing a mixture sheet exhibiting excellent strength and excellent flexibility while containing a small amount of binder, and a secondary battery mixture sheet, an electrode, and a secondary battery each containing the secondary battery mixture.

### BRIEF DESCRIPTION OF DRAWINGS

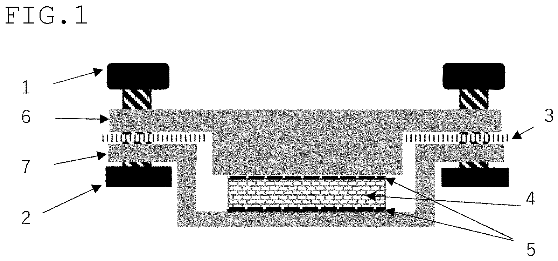

FIG. 1 is a schematic cross-sectional view of a pressure cell used in ion-conductivity measurement on solid electrolyte mixture sheets in EXAMPLES.

### DESCRIPTION OF EMBODIMENTS

The term "organic group" herein means a group containing one or more carbon atoms or a group formed by removing one hydrogen atom from an organic compound.

The disclosure will be specifically described below.

The disclosure provides an electrochemical device mixture containing: an electrode active material and/or a solid electrolyte; and a binder, the binder containing a tetrafluoroethylene-based (TFE-based) polymer composition, the TFE-based polymer composition containing a TFE-based polymer and a macromolecular compound containing an ionic group, the binder being contained in an amount of 0.3% by mass or more and 8% by mass or less relative to the electrochemical device mixture.

Containing a specific binder, the electrochemical device mixture of the disclosure can provide a mixture sheet exhibiting excellent strength and excellent flexibility while containing a small amount of binder. The electrochemical device mixture therefore can contain larger amounts of materials for improving battery characteristics, such as an active material and a conductive aid.

In the electrochemical device mixture of the disclosure, the amount of the binder is 0.3% by mass or more and 8% by mass or less relative to the electrochemical device mixture. To improve the binding force and the strength and flexibility of a mixture sheet, the amount is preferably 0.4% by mass or more, more preferably 0.5% by mass or more, still more preferably 1.0% by mass or more. To increase the amounts of materials for improving battery characteristics, the amount is preferably 6% by mass or less, more preferably 4% by mass or less, still more preferably 3% by mass or less, further preferably 2% by mass or less, particularly preferably less than 2% by mass.

The TFE-based polymer composition used for the binder contains a TFE-based polymer as well as a macromolecular compound containing an ionic group. The presence of the ionic group can improve the binding force.

The TFE-based polymer is not encompassed by the macromolecular compound.

Whether the ionic group is present is determined by the following method.

The macromolecular compound is extracted with methanol and the resulting methanol extract is combined with water, followed by vacuum distillation. Thereby, an aqueous solution is obtained. Based on the potential difference of the aqueous solution obtained, whether the ionic group is present is determined.

The ionic group is preferably an anionic group, and examples thereof include a sulfate group, -COOM^{a} (carboxylate group), a phosphate group, -PO₃M^{a} (phosphonate group), -SO₃M^{a} (sulfonate group), and -C(CF₃)₂OM^{a}, wherein M^{a} is -H, a metal atom, -NR²₄, imidazolium optionally containing a substituent, pyridinium optionally containing a substituent, or phosphonium optionally containing a substituent, where R² is H or an organic group.

Preferred among these is at least one selected from the group consisting of -SO₃M^{a}, -PO₃M^{a}, and -COOM^{a}, more preferred is at least one selected from the group consisting of -SO₃M^{a} and -COOM^{a}, still more preferred is at least one selected from the group consisting of -SO₃M^{a} and -COOM^{a}, wherein M^{a} is -H or an alkali metal atom.

The ionic group is contained in an amount of preferably 0.80 meq/g or more, more preferably 1.20 meq/g or more, still more preferably 1.75 meq/g or more, further preferably 2.00 meq/g or more, particularly preferably 2.50 meq/g or more relative to the macromolecular compound. The amount may be 10.0 meq/g or less, or may be 8.00 meq/g or less, or may be 5.00 meq/g or less.

The amount of the ionic group can be determined by calculation from the composition of the macromolecular compound.

The macromolecular compound preferably contains a fluorine atom and the proportion of hydrogen atoms replaced by fluorine atoms among those bonded to any carbon atom of the macromolecular compound is preferably 50% or more. The "proportion of hydrogen atoms replaced by fluorine atoms among those bonded to any carbon atom of the macromolecular compound" can be determined as the proportion of the number of fluorine atoms to the total number of the hydrogen atoms bonded to any carbon atom and the halogen atoms (including fluorine atoms) bonded to any carbon atom. The proportion of hydrogen atoms replaced by fluorine atoms among those bonded to any carbon atom in the macromolecular compound is more preferably 70% or higher, still more preferably 80% or higher, further preferably 90% or higher, particularly preferably 95% or higher, most preferably 100%, but not limited thereto.

The macromolecular compound has an ion exchange ratio (IXR) of preferably 53 or lower. The IXR is defined as the number of carbon atoms in the main chain of the macromolecular compound relative to the ionic group. A precursor group (e.g., -SO₂F) to be ionic as a result of hydrolysis is not regarded as an ionic group in the context of IXR determination.

The IXR is preferably 0.5 or higher, more preferably 1 or higher, still more preferably 3 or higher, further preferably 4 or higher, further more preferably 5 or higher. The IXR is also preferably 43 or lower, more preferably 33 or lower, still more preferably 23 or lower.

The ionic groups in the macromolecular compound are typically distributed along the polymer main chain. Preferably, the macromolecular compound also has repeated side chains bonded to the polymer main chain and these side chains have an ionic group.

The macromolecular compound is preferably a water-soluble macromolecular compound. The "water-soluble" means an ability to easily dissolve or disperse in an aqueous medium. For a macromolecular compound having water solubility, dynamic light scattering (DLS), for example, cannot measure its particle size or can indicate a particle size of 5 nm or smaller. In contrast, for a macromolecular compound having water insolubility, dynamic light scattering (DLS), for example, can measure a particle size of greater than 5 nm.

The following method can also determine that the macromolecular compound is a water-soluble macromolecular compound.

A methanol solution containing the macromolecular compound is combined with water, followed by vacuum distillation at 40°C. Thereby, an aqueous solution is obtained.

About 1 g of the resulting aqueous solution is dried at 60°C in a vacuum dryer for 60 minutes and the mass of the heating residue is weighed. The proportion of the mass of the heating residue to the mass of the aqueous solution is expressed by percentage. In the case where this value is 0.1% by mass or higher, the compound is determined as a water-soluble polymer.

The macromolecular compound has a number average molecular weight of preferably higher than 0.1 × 10⁴, more preferably 0.15 × 10⁴ or higher, still more preferably 0.2 × 10⁴ or higher, further preferably 0.3 × 10⁴ or higher, further more preferably 0.5 × 10⁴ or higher, still further more preferably 1.0 × 10⁴ or higher, particularly preferably 2.0 × 10⁴ or higher, most preferably 3.0 × 10⁴ or higher. The number average molecular weight is also preferably 75.0 × 10⁴ or lower, more preferably 50.0 × 10⁴ or lower, still more preferably 40.0 × 10⁴ or lower, further preferably 30.0 × 10⁴ or lower, particularly preferably 20.0 × 10⁴ or lower.

The macromolecular compound has a weight average molecular weight of preferably higher than 0.1 × 10⁴, more preferably 0.2 × 10⁴ or higher, still more preferably 0.4 × 10⁴ or higher, further preferably 0.6 × 10⁴ or higher, further more preferably 1.0 × 10⁴ or higher, particularly preferably 2.0 × 10⁴ or higher, most preferably 5.0 × 10⁴ or higher. The weight average molecular weight is also preferably 150.0 × 10⁴ or lower, more preferably 100.0 × 10⁴ or lower, still more preferably 80.0 × 10⁴ or lower, further preferably 60.0 × 10⁴ or lower, particularly preferably 40.0 × 10⁴ or lower.

The number average molecular weight and the weight average molecular weight are molecular weight values calculated by gel permeation chromatography (GPC) with monodisperse polystyrene standard or monodisperse polyethylene oxide (PEO) and polyethylene glycol (PEG) standards. In the case where GPC measurement is not available, the number average molecular weight of the macromolecular compound can be obtained from the correlation of the number average molecular weight calculated from the number of end groups obtained by NMR or FT-IR, for example, and the melt flow rate. The melt flow rate can be determined in conformity with JIS K7210.

The macromolecular compound is preferably substantially free from a fraction having a molecular weight of 1000 or lower, more preferably substantially free from a fraction having a molecular weight of lower than 1500, still more preferably substantially free from a fraction having a molecular weight of lower than 2000, particularly preferably substantially free from a fraction having a molecular weight of lower than 3000.

The phrase "substantially free from a fraction" means that the amount of the fraction is 3.0% by mass or less of the macromolecular compound. The amount of the fraction is preferably 1.0% by mass or less, more preferably 0.5% by mass or less, still more preferably 0.1% by mass or less of the macromolecular compound.

The amount of the fraction can be determined by gel permeation chromatography (GPC) or liquid chromatography-mass spectrometry (LC-MS).

The macromolecular compound is preferably substantially free from a fluorine-containing compound having a molecular weight of 1000 or lower. The phrase "substantially free from a fluorine-containing compound" means that the amount of the fluorine-containing compound is 25 ppb by mass or less in the macromolecular compound.

The amount of the fluorine-containing compound is more preferably less than 25 ppb by mass, still more preferably 10 ppb by mass or less, further preferably less than 10 ppb by mass, further more preferably 5 ppb by mass or less, still further more preferably 3 ppb by mass or less, much more preferably 1 ppb by mass or less, particularly preferably less than 1 ppb by mass. The lower limit is not limited, and may be an amount below the detection limit.

The fluorine-containing compound having a molecular weight of 1000 or lower and a quantification method therefor will be described below.

The macromolecular compound includes at least one selected from the group consisting of a polymer (I) containing a polymerized unit (I) based on a monomer represented by the following formula (I) and a compound (II) represented by the following formula (II), and is preferably a polymer (I),
the formula (I) being:

   CX¹X³=CX²R(-CZ¹Z²-A⁰)ₘ (I)

   wherein X¹ and X³ are each independently F, Cl, H, or CF₃; A⁰ is an anionic group; X² is H, F, an alkyl group, or a fluorine-containing alkyl group; R is a linking group; Z¹ and Z² are each independently H, F, an alkyl group, or a fluorine-containing alkyl group; and m is an integer of 1 or greater,
the formula (II) being:

   T^{X}-X^{A}-R^{FA1}-R^{FA2}-X^{A}-T^{X}' (II)

   wherein
   R^{FA1} is -Rf¹ₚ-R^{F}-O_{q}-;
   R^{FA2} is -Rf²ₚ-R^{FX}-O_{q}-;
   R^{F} is a divalent fluoropolyether group;
   R^{FX} is a divalent fluoropolyether group containing an anionic group;
   Rf¹ and Rf² are each independently a C1-C6 alkylene group optionally substituted by one or more fluorine atoms;
   ps are each independently 0 or 1;
   qs are each independently 0 or 1;
   X^{A}s are each independently a single bond or a divalent to decavalent group; and
   T^{X} and T^{X}' are each independently selected from the group consisting of (i) a C1-C24 (hydro)(fluoro)carbon group optionally containing one or more species of H, O, and Cl and being free from the anionic group and (ii) a C1-C24 (hydro)(fluoro)carbon group containing at least one group identical with the anionic group.

The polymer (I) is a polymer containing a polymerized unit (I) based on a monomer (I). The monomer (I) is represented by the following formula (I):

CX¹X³=CX²R(-CZ¹Z²-A⁰)ₘ (I)

wherein X¹ and X³ are each independently F, Cl, H, or CF₃; X² is H, F, an alkyl group, or a fluorine-containing alkyl group; A⁰ is an anionic group; R is a linking group; Z¹ and Z² are each independently H, F, an alkyl group, or a fluorine-containing alkyl group; and m is an integer of 1 or greater.
X¹ and X³ are each preferably F or H. X² is preferably F, Cl, H, or CF₃, more preferably F. Z¹ and Z² are each preferably F or CF₃.

In the disclosure, the anionic group encompasses anionic groups such as a sulfate group and a carboxylate group, as well as functional groups to give an anionic group such as an acid group, e.g., -COOH, and an acid salt group, e.g., -COONH₄. The anionic group is preferably a sulfate group, a carboxylate group, a phosphate group, a phosphonate group, a sulfonate group, or -C(CF₃)₂OM^{a} (wherein M^{a} is -H, a metal atom, -NR²₄, imidazolium optionally containing a substituent, pyridinium optionally containing a substituent, or phosphonium optionally containing a substituent, where R² is H or an organic group), more preferably -SO₃M^{a} or -COOM^{a} (wherein M^{a} is defined as described above), still more preferably -SO₃M^{b} or -COOM^{b} (wherein M^{b} is -H or an alkali metal atom).

In the production method of the disclosure, the monomer (I) represented by the formula (I) may include one monomer or two or more monomers.

R is a linking group. The "linking group" herein is a (m+1)-valent linking group, and is a divalent linking group when m is 1. The linking group may be a single bond and preferably contains at least one carbon atom. The number of carbon atoms may be 2 or greater, or may be 4 or greater, or may be 8 or greater, or may be 10 or greater, or may be 20 or greater. The upper limit may be, but is not limited to, 100 or smaller or 50 or smaller.

The linking group may be linear or branched, may have a cyclic or acyclic structure, may be saturated or unsaturated, may be substituted or unsubstituted, may contain one or more heteroatoms selected from the group consisting of sulfur, oxygen, and nitrogen if necessary, and may contain one or more functional groups selected from the group consisting of ester, amide, sulfonamide, carbonyl, carbonate, urethane, urea, and carbamate if necessary. The linking group may contain no carbon atom and may be a catenary heteroatom such as oxygen, sulfur, or nitrogen.

For the linking group, m is an integer of 1 or greater, preferably 1 or 2, more preferably 1. When m is an integer of 2 or greater, Z¹, Z², and A⁰ may be the same as or different from each other.

Next described is a preferred structure of the formula (I) in which m is 1.

R is preferably a catenary heteroatom, such as oxygen, sulfur, or nitrogen, or a divalent organic group, for example.

When R is a divalent organic group, a hydrogen atom bonded to any carbon atom may be replaced by a halogen other than fluorine, such as chlorine, and the group may or may not contain a double bond. R may be either linear or branched, and may be either cyclic or acyclic. R may contain a functional group (e.g., ester, ether, ketone (keto group), amine, or halide).

R may also be a non-fluorinated divalent organic group or may be a partially fluorinated or perfluorinated divalent organic group.

R may be a hydrocarbon group in which no fluorine atom is bonded to a carbon atom, a hydrocarbon group in which any of hydrogen atoms bonded to any carbon atom is replaced by a fluorine atom, or a hydrocarbon group in which every hydrogen atom bonded to any carbon atom is replaced by a fluorine atom, and each of these groups may contain an oxygen atom, may contain a double bond, and may contain a functional group.

R is preferably a C1-C100 hydrocarbon group optionally containing an ether bond or a keto group, and any or every hydrogen atom bonded to any carbon atom in this hydrocarbon group may be replaced by fluorine.

R is more preferably a C1-C4 fluorinated alkylene group optionally containing an ether bond, still more preferably a C1-C4 fluorinated alkylene group containing an ether bond.

R preferably includes at least one selected from - (CH₂)ₐ-, - (CF₂)ₐ-, -O- (CF₂)ₐ-, - (CF₂)ₐ-O-(CF₂)_{b}-, -O(CF₂)ₐ-O-(CF₂)_{b}-, -(CF₂)ₐ-[O-(CF₂)_{b}]_{c}-, -O(CF₂)ₐ-[O-(CF₂)_{b}]_{c}-, -[(CF₂)ₐ-O]_{b}-[(CF₂)_{c}-O]_{d}-, -O[(CF₂)ₐ-O]_{b}-[(CF₂)_{c}-O]_{d}-, -O-[CF₂CF(CF₃)O]ₐ-(CF₂)_{b}-, -[CF₂CF(CF₃)O]ₐ-, -[CF(CF₃)CF₂O]ₐ-, - (CF₂)ₐ-O-[CF(CF₃)CF₂O]ₐ-, -(CF₂)ₐ-O-[CF(CF₃)CF₂O]ₐ-(CF₂)_{b}-, - [CF₂CF(CF₃)]ₐ-CO-(CF₂)_{b}-, and a combination of any of these.

In the formula, a, b, c, and d are each independently 1 or greater; a, b, c, and d each may be 2 or greater, may be 3 or greater, may be 4 or greater, may be 10 or greater, and may be 20 or greater; the upper limit of a, b, c, and d may be 100, for example.

R is preferably a divalent group represented by the formula (r1):

-CF₂-O-(CX⁶₂)ₑ-{O-CF(CF₃)}_{f}-(O)_{g}- (r1)

wherein X⁶s are each independently H, F, or CF₃; e is an integer of 0 to 3; f is an integer of 0 to 3; and g is 0 or 1, more preferably a divalent group represented by the formula (r2):

-CF₂-O-(CX⁷₂)ₑ-(O)_{g}- (r2)

wherein X⁷s are each independently H, F, or CF₃; e is an integer of 0 to 3; and g is 0 or 1.

Specific examples of preferred R include -CF₂-O-, - CF₂-O-CF₂-, -CF₂-O-CH₂-, -CF₂-O-CH₂CF₂-, -CF₂-O-CF₂CF₂-, -CF₂-O-CF₂CH₂-, -CF₂-O-CF₂CF₂CH₂-, -CF₂-O-CF(CF₃)-, -CF₂-O-CF(CF₃)CF₂-, -CF₂-O-CF(CF₃)CF₂-O-, -CF₂-O-CF(CF₃)CF₂-O-CF₂-, and -CF₂-O-CF(CF₃)CH₂-. In particular, R is preferably a perfluoroalkylene group optionally containing an oxygen atom, specifically preferably -CF₂-O-, -CF₂-O-CF₂-, -CF₂-O-CF₂CF₂-, -CF₂-O-CF(CF₃)-, -CF₂-O-CF(CF₃)CF₂-, or -CF₂-O-CF(CF₃)CF₂-O-.

-R-CZ¹Z²- in the formula (I) is preferably one represented by the formula (s1):

-CF₂-O-(CX⁶₂)ₑ-{O-CF(CF₃)}_{f}-(O)_{g}-CZ¹Z²- (s1)

wherein X⁶s are each independently H, F, or CF₃; e is an integer of 0 to 3; f is an integer of 0 to 3; g is 0 or 1; and Z¹ and Z² are each independently H, F, an alkyl group, or a fluorine-containing alkyl group, more preferably one represented by the formula (s1) in which Z¹ and Z² are each F or CF₃, still more preferably one in which one of these is F and the other is CF₃.

-R-CZ¹Z²- in the formula (I) is also preferably one represented by the formula (s2):

-CF₂-O-(CX⁷₂)ₑ-(O)_{g}-CZ¹Z²- (s2)

wherein X⁷s are each independently H, F, or CF₃; e is an integer of 0 to 3; g is 0 or 1; and Z¹ and Z² are each independently H, F, an alkyl group, or a fluorine-containing alkyl group, more preferably one represented by the formula (s2) in which Z¹ and Z² are each F or CF₃, still more preferably one in which one of these is F and the other is CF₃.

-R-CZ¹Z²- in the formula (I) is preferably -CF₂-O-CF₂-, -CF₂-O-CF(CF₃)-, -CF₂-O-C(CF₃)₂-, -CF₂-O-CF₂-CF₂-, -CF₂-O-CF₂-CF(CF₃)-, -CF₂-O-CF₂-C(CF₃)₂-, -CF₂-O-CF₂CF₂-CF₂-, -CF₂-O-CF₂CF₂-CF(CF₃)-, -CF₂-O-CF₂CF₂-C(CF₃)₂-, -CF₂-O-CF(CF₃)-CF₂-, -CF₂-O-CF(CF₃)-CF(CF₃)-, -CF₂-O-CF(CF₃)-C(CF₃)₂-, -CF₂-O-CF(CF₃)CF₂-CF₂-, -CF₂-O-CF(CF₃)CF₂-CF(CF₃)-, -CF₂-O-CF(CF₃)CF₂-C(CF₃)₂-, -CF₂-O-CF(CF₃)CF₂-O-CF₂-, -CF₂-O-CF(CF₃)CF₂-O-CF(CF₃)-, or -CF₂-O-CF(CF₃)CF₂-O-C(CF₃)₂-, more preferably -CF₂-O-CF(CF₃)-, -CF₂-O-CF₂-CF(CF₃)-, -CF₂-O-CF₂CF₂-CF(CF₃)-, -CF₂-O-CF(CF₃)-CF(CF₃)-, -CF₂-O-CF(CF₃)CF₂-CF(CF₃)-, or -CF₂-O-CF(CF₃)CF₂-O-CF(CF₃)-.

The polymer (I) may also preferably be highly fluorinated. For example, except for the anionic groups (A⁰) such as a phosphate group portion (e.g., CH₂OP(O)(OM^{a})₂) and a sulfate group portion (e.g., CH₂OS(O)₂OM^{a}), 80% or more, 90% or more, 95% or more, or 100% of the C-H bonds in the polymer (I) are preferably replaced by C-F bonds.

Except for the anionic groups (A⁰), the monomer (I) and the polymer (I) also preferably contain a C-F bond and contain no C-H bond. In other words, in the formula(I), preferably, all of X¹, X², and X³ are F and R is a C1 or higher perfluoroalkylene group, and the perfluoroalkylene group may be either linear or branched, may be either cyclic or acyclic, and may contain at least one catenary heteroatom. The carbon number of the perfluoroalkylene group may be 2 to 20 or may be 4 to 18.

The monomer (I) and the polymer (I) each may be partially fluorinated. In other words, except for the anionic groups (A⁰), the monomer (I) and the polymer (I) also preferably contain at least one hydrogen atom bonded to any carbon atom and at least one fluorine atom bonded to any carbon atom.

The anionic groups (A⁰) each may be -SO₃M^{a}, -OSO₃M^{a}, - COOM^{a}, -SO₂NR'CH₂COOM^{a}, -CH₂OP(O)(OM^{a})₂, [-CH₂O]₂P(O)(OM^{a}), - CH₂CH₂OP(O)(OM^{a})₂, [-CH₂CH₂O]₂P(O)(OM^{a}), -CH₂CH₂OSO₃M^{a}, - P(O)(OM^{a})₂, -SO₂NR'CH₂CH₂OP(O)(OM^{a})₂, [-SO₂NR'CH₂CH₂O]₂P(O)(OM^{a}), -CH₂OSO₃M^{a}, -SO₂NR'CH₂CH₂OSO₃M^{a}, or - C(CF₃)₂OM^{a}. Preferred among these is -SO₃M³, -OSO₃M^{a}, - COOM^{a}, -P(O)(OM^{a})₂, or C(CF₃)₂OM^{a}, more preferred is -COOM^{a}, -SO₃M^{a}, -OSO₃M^{a}, or C(CF₃)₂OM^{a}, still more preferred is - SO₃M^{a}, -COOM^{a}, or P(O)(OM^{a})₂, particularly preferred is - SO₃M^{a} or COOM^{a}, and most preferred is -COOM^{a}.

M^{a} is H, a metal atom, NR²₄, imidazolium optionally containing a substituent, pyridinium optionally containing a substituent, or phosphonium optionally containing a substituent, where R² is H or an organic group.

Examples of the metal atom include alkali metals (Group 1) and alkaline earth metals (Group 2), and preferred is Na, K, or Li.

M^{a} is preferably -H, a metal atom, or NR²₄, more preferably -H, an alkali metal (Group 1), an alkaline earth metal (Group 2), or NR²₄, still more preferably -H, -Na, - K, -Li, or NH₄, further preferably -H, -Na, -K, or NH₄, particularly preferably -H, -Na, or NH₄, most preferably -H or NH₄.

In the polymer (I), the polymerized units (I) may have different anionic groups or may have the same anionic groups. Examples of the monomer represented by the formula
(I) include CF₂=CF(OCF₂CF₂SO₃M^{a}), CF₂=CF(O(CF₂)₃SO₃M^{a}),

   CF₂=CF(O(CF₂)₄SO₃M^{a}), CF₂=CF(OCF₂CF(CF₃)SO₃M^{a}),

   CF₂=CF(OCF₂CF(CF₃)OCF₂CF₂SO₃M^{a}), CF₂=CF(OCF₂CF₂COOM^{a}),

   CF₂=CF(O(CF₂)₃COOM^{a}), CF₂=CF(O(CF₂)₄COOM^{a}),

   CF₂=CF(O(CF₂)₅COOM^{a}), CF₂=CF(OCF₂CF(CF₃)COOM³), and

   CF₂=CF(OCF₂CF(CF₃)O(CF₂)ₙCOOM^{a}), wherein n is greater than 1.

The monomer (I) is preferably a monomer (1) represented by the formula (1).

The polymer (I) is preferably a polymer (1) containing a polymerized unit (1) based on the monomer represented by the formula (1).

CX₂=CY(-CZ₂-O-Rf-A) (1)

wherein Xs are the same as or different from each other and are each -H or F; Y is -H, -F, an alkyl group, or a fluorine-containing alkyl group; Zs are the same as or different from each other and are each -H, -F, an alkyl group, or a fluoroalkyl group; Rf is a C1-C40 fluorine-containing alkylene group or a C2-C100 fluorine-containing alkylene group containing an ether bond; and A is -COOM^{a}, - SO₃M^{a}, -OSO₃M^{a}, or C(CF₃)₂OM^{a} wherein M^{a} is -H, a metal atom, -NR²₄, imidazolium optionally containing a substituent, pyridinium optionally containing a substituent, or phosphonium optionally containing a substituent, where R² is H or an organic group, and wherein at least one of X, Y, or Z contains a fluorine atom.

In the production method of the disclosure, the monomer (1) represented by the formula (1) may be copolymerized with a different monomer.

The polymer (1) may be a homopolymer of the monomer (1) represented by the formula (1) or may be a copolymer with a different monomer.

The C2-C100 fluorine-containing alkylene group containing an ether bond is an alkylene group that has no structure containing an oxygen atom at an end and that contains an ether bond between carbon atoms.

In the formula (1), X is -H or F. Both Xs may be -F or at least one of these may be -H. For example, one of these may be -F while the other may be -H, or both may be - H.

In the formula (1), Y is -H, -F, an alkyl group, or a fluorine-containing alkyl group. The alkyl group is an alkyl group containing no fluorine atom and the carbon number thereof is 1 or greater. The carbon number of the alkyl group is preferably 6 or smaller, more preferably 4 or smaller, still more preferably 3 or smaller. The fluorine-containing alkyl group is an alkyl group containing at least one fluorine atom, and the carbon number thereof is 1 or greater. The carbon number of the fluorine-containing alkyl group is preferably 6 or smaller, more preferably 4 or smaller, still more preferably 3 or smaller. Y is preferably -H, -F, or CF₃, more preferably - F.

In the formula (1), Zs are the same as or different from each other and are each -H, -F, an alkyl group, or a fluoroalkyl group. The alkyl group is an alkyl group containing no fluorine atom and the carbon number thereof is 1 or greater. The carbon number of the alkyl group is preferably 6 or smaller, more preferably 4 or smaller, still more preferably 3 or smaller. The fluorine-containing alkyl group is an alkyl group containing at least one fluorine atom, and the carbon number thereof is 1 or greater. The carbon number of the fluorine-containing alkyl group is preferably 6 or smaller, more preferably 4 or smaller, still more preferably 3 or smaller. Z is preferably -H, -F, or CF₃, more preferably -F.

In the formula (1), at least one of X, Y, or Z contains a fluorine atom. For example, X may be -H while Y and Z may be -F.

In the formula (1), Rf is a C1-C40 fluorine-containing alkylene group or a C2-C100 fluorine-containing alkylene group containing an ether bond.

The carbon number of the fluorine-containing alkylene group is preferably 2 or greater. The carbon number of the fluorine-containing alkylene group is also preferably 30 or smaller, more preferably 20 or smaller, still more preferably 10 or smaller, particularly preferably 6 or smaller, most preferably 3 or smaller. Examples of the fluorine-containing alkylene group include -CF₂-, -CH₂CF₂-, -CF₂CF₂-, -CF₂CH₂-, -CF₂CF₂CF₂-, -CF₂CF₂CH₂-, -CF(CF₃)-, - CF(CF₃)CF₂-, and -CF(CF₃)CH₂-. The fluorine-containing alkylene group is preferably a perfluoroalkylene group.

The carbon number of the fluorine-containing alkylene group containing an ether bond is preferably 3 or greater. The carbon number of the fluorine-containing alkylene group containing an ether bond is also preferably 60 or smaller, more preferably 30 or smaller, still more preferably 12 or smaller, particularly preferably 9 or smaller, most preferably 6 or smaller. For example, the fluorine-containing alkylene group containing an ether bond is also preferably a divalent group represented by the formula: 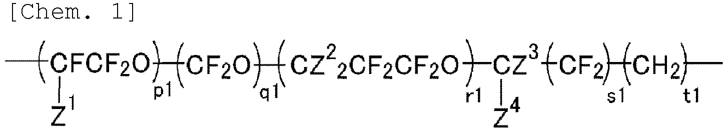 wherein Z¹ is F or CF₃; Z² and Z³ are each H or F; Z⁴ is H, F, or CF₃; p1 + q1 + r1 is an integer of 1 to 10; s1 is 0 or 1; and t1 is an integer of 0 to 5.

Specific examples of the fluorine-containing alkylene group containing an ether bond include -CF₂CF(CF₃)OCF₂CF₂-, -CF(CF₃)CF₂-O-CF(CF₃)-, -(CF(CF₃)CF₂-O)ₙ-CF(CF₃)- (wherein n is an integer of 1 to 10), -CF(CF₃)CF₂-O-CF(CF₃)CH₂-, - (CF(CF₃)CF₂-O)ₙ-CF(CF₃)CH₂- (wherein n is an integer of 1 to 10), -CH₂CF₂CF₂O-CH₂CF₂CH₂-, -CF₂CF₂CF₂O-CF₂-, -CF₂CF₂CF₂O-CF₂CF₂-, -CF₂CF₂CF₂O-CF₂CF₂CF₂-, -CF₂CF₂CF₂O-CF₂CF₂CH₂-, - CF₂CF₂O-CF₂-, and -CF₂CF₂O-CF₂CH₂-. The fluorine-containing alkylene group containing an ether bond is preferably a perfluoroalkylene group.

In the formula (1), A is -COOM^{a}, -SO₃M³, -OSO₃M^{a}, or C(CF₃)₂OM^{a}, wherein M^{a} is H, a metal atom, NR²₄, imidazolium optionally containing a substituent, pyridinium optionally containing a substituent, or phosphonium optionally containing a substituent, where R² is H or an organic group.

R² is preferably H or a C1-C10 organic group, more preferably H or a C1-C4 organic group, still more preferably H or a C1-C4 alkyl group.

Examples of the metal atom include alkali metals (Group 1) and alkaline earth metals (Group 2), and preferred is Na, K, or Li.

M^{a} is preferably H, a metal atom, or NR²₄, more preferably H, an alkali metal (Group 1), an alkaline earth metal (Group 2), or NR²₄, still more preferably H, Na, K, Li, or NH₄, further preferably H, Na, K, or NH₄, particularly preferably H, Na, or NH₄, most preferably H or NH₄.

A is preferably -COOM^{a} or SO₃M^{a}, more preferably - COOM^{a}.

An example of the monomer represented by the formula (1) is a monomer represented by the formula (1a):

CX₂=CFCF₂-O-(CF(CF₃)CF₂O)ₙ₅-CF(CF₃)-A (1a)

wherein Xs are the same as each other and are each F or H; n5 is 0 or an integer of 1 to 10; and A is defined as described above.

To form particles having a small primary particle size, n5 in the formula (1a) is preferably 0 or an integer of 1 to 5, more preferably 0, 1, or 2, still more preferably 0 or 1.

In the production method of the disclosure, the monomer represented by the formula (1a) may be copolymerized with a different monomer.

The polymer (1) may be a homopolymer of the monomer represented by the formula (1a) or may be a copolymer with a different monomer.

The monomer (1) is preferably a monomer represented by the formula (1A).

The polymerized unit (1) is preferably a polymerized unit (1A) based on the monomer represented by the formula (A) :

CH₂=CF(-CF₂-O-Rf-A) (1A)

wherein Rf and A are defined as described above.

In the production method of the disclosure, the monomer represented by the formula (1A) may be copolymerized with a different monomer.

The polymer (1) may be a homopolymer of the monomer represented by the formula (1A) or may be a copolymer with a different monomer.

A specific example of the monomer represented by the formula (1A) is a monomer represented by the formula: 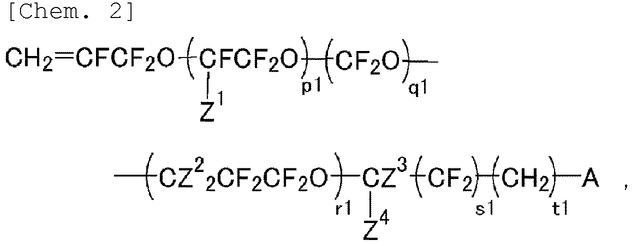 wherein Z¹ is F or CF₃; Z² and Z³ are each H or F; Z⁴ is H, F, or CF₃; p1 + q1 + r1 is an integer of 0 to 10; s1 is 0 or 1; and t1 is an integer of 0 to 5; when Z³ and Z⁴ are both H, p1 + q1 + r1 + s1 is not 0; and A is defined as described above. More specific preferred examples thereof include the following.

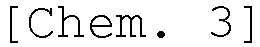

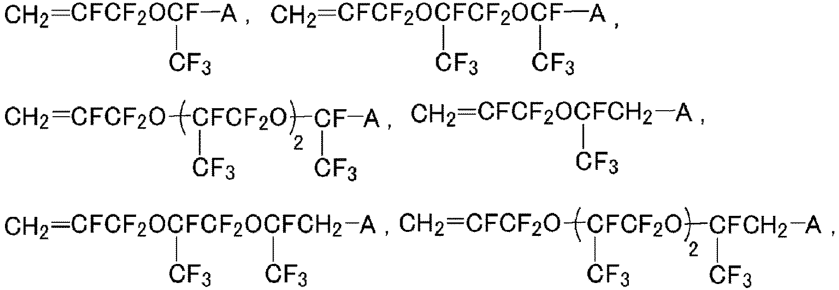

CH₂=CFCF₂OCH₂CF₂-A, CH₂=CFCF₂O(CH₂CF₂CF₂O)CH₂CF₂-A,

CH₂=CFCF₂OCH₂CF₂CH₂-A ,

CH₂=CFCF₂O(CH₂CF₂CF₂O)CH₂CF₂CH₂-A ,

CH₂=CFCF₂OCF₂CF₂-A , CH₂=CFCF₂O(CF₂CF₂CF₂O)CF₂CF₂₋A ,

CH₂=CFCF₂OCF₂CF₂CH₂-A ,

CH₂=CFCF₂O(CF₂CF₂CF₂O)CF₂CF₂CH₂-A ,

CH₂=CFCF₂OCF₂-A, CH₂=CFCF₂O(CF₂CF₂O)CF₂-A,

CH₂=CFCF₂OCF₂CH₂-A ,

CH₂=CFCF₂O(CF₂CF₂O)CF₂CH₂-A,

In particular, 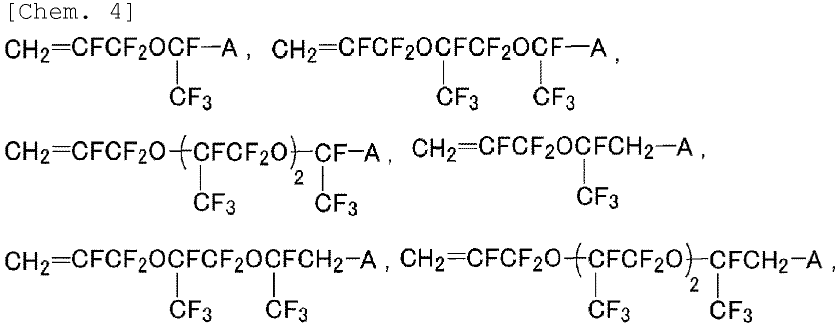 are preferred.

The monomer represented by the formula (1A) is preferably one represented by the formula (1A) in which A is -COOM^{a}; in particular, it preferably includes at least one selected from the group consisting of CH₂=CFCF₂OCF(CF₃)COOM^{a} and CH₂=CFCF₂OCF(CF₃)CF₂OCF(CF₃)COOM^{a}, wherein M^{a} is defined as described above, and is more preferably CH₂=CFCF₂OCF(CF₃)COOM^{a}.

The monomer (I) is also preferably a monomer (2) represented by the formula (2).

The polymer (I) is also preferably a polymer (2) containing a polymerized unit (2) based on the monomer represented by the formula (2):

CX₂=CY(-O-Rf-A) (2)

wherein Xs are the same as or different from each other and are each -H or F; Y is -H, -F, an alkyl group, or a fluorine-containing alkyl group; Rf is a C1-C40 fluorine-containing alkylene group or a C2-C100 fluorine-containing alkylene group containing an ether bond or a keto group; and A is defined as described above.

The monomer (I) is also preferably a monomer (3) represented by the formula (3).

The polymer (I) is also preferably a polymer (3) containing a polymerized unit (3) based on the monomer represented by the formula (3):

CX₂=CY(-Rf-A) (3)

wherein Xs are the same as or different from each other and are each -H or F; Y is -H, -F, an alkyl group, or a fluorine-containing alkyl group; Rf is a C1-C40 fluorine-containing alkylene group or a C2-C100 fluorine-containing alkylene group containing an ether bond; and A is defined as described above.

Examples of a monomer represented by the formula (I) in which m is an integer of 2 or greater include the following.

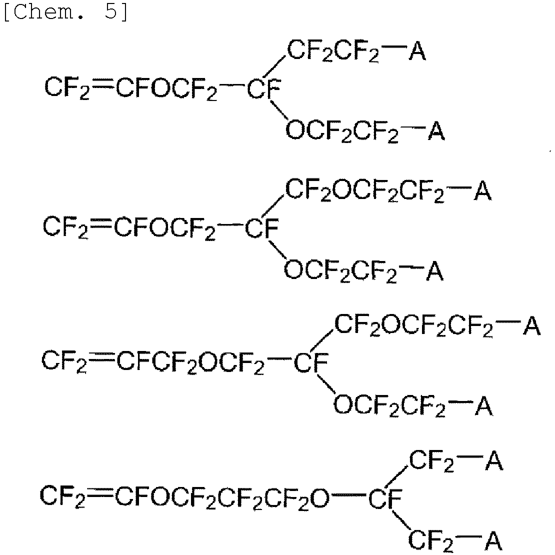

The polymer (I) commonly has an end group. The end group is an end group generated during polymerization. A typical end group is independently selected from hydrogen, iodine, bromine, a linear or branched alkyl group, and a linear or branched fluoroalkyl group, and may optionally contain at least one catenary heteroatom. The alkyl group or the fluoroalkyl group preferably has a carbon number of 1 to 20. These end groups are commonly generated from an initiator or chain transfer agent used in formation of the polymer (I) or generated during chain transfer reaction.

The polymer (I) contains the polymerized unit (I) in an amount, in order of preference, of 1.0 mol% or more, 3.0 mol% or more, 5.0 mol% or more, 10 mol% or more, 20 mol% or more, 30 mol% or more, 40 mol% or more, 50 mol% or more, 60 mol% or more, 70 mol% or more, 80 mol% or more, or 90 mol% or more of all polymerized units. Particularly preferably, the amount of the polymerized unit (I) is substantially 100 mol%. Most preferably, the polymer (I) consists of the polymerized unit (I).

The polymer (I) contains a polymerized unit based on a different monomer copolymerizable with the monomer represented by the formula (I) in an amount, in order of preference, of 99.0 mol% or less, 97.0 mol% or less, 95.0 mol% or less, 90 mol% or less, 80 mol% or less, 70 mol% or less, 60 mol% or less, 50 mol% or less, 40 mol% or less, 30 mol% or less, 20 mol% or less, or 10 mol% or less of all polymerized units. Particularly preferably, the amount of a polymerized unit based on a different monomer copolymerizable with the monomer represented by the formula (I) is substantially 0 mol%. Most preferably, the polymer (I) is free from a polymerized unit based on a different monomer.

The polymer (I) has a number average molecular weight of preferably 0.1 × 10⁴ or higher, more preferably 0.2 × 10⁴ or higher, still more preferably 0.3 × 10⁴ or higher, further preferably 0.4 × 10⁴ or higher, further more preferably 0.5 × 10⁴ or higher, particularly preferably 1.0 × 10⁴ or higher, more particularly preferably 3.0 × 10⁴ or higher, most preferably 3.1 × 10⁴ or higher. The number average molecular weight is also preferably 75.0 × 10⁴ or lower, more preferably 50.0 × 10⁴ or lower, still more preferably 40.0 × 10⁴ or lower, further preferably 30.0 × 10⁴ or lower, particularly preferably 20.0 × 10⁴ or lower. The number average molecular weight and the weight average molecular weight are molecular weight values calculated by gel permeation chromatography (GPC) with monodisperse polystyrene standard . In the case where GPC measurement is not available, the number average molecular weight of the polymer (I) can be obtained from the correlation of the number average molecular weight calculated from the number of end groups obtained by NMR or FT-IR, for example, and the melt flow rate. The melt flow rate can be determined in conformity with JIS K7210.

The lower limit of the weight average molecular weight of the polymer (I) is, in order of preference, 0.2 × 10⁴ or higher, 0.4 × 10⁴ or higher, 0.6 × 10⁴ or higher, 0.8 × 10⁴ or higher, 1.0 × 10⁴ or higher, 2.0 × 10⁴ or higher, 5.0 × 10⁴ or higher, 10.0 × 10⁴ or higher, 15.0 × 10⁴ or higher, 20.0 × 10⁴ or higher, or 25.0 × 10⁴ or higher. The upper limit of the weight average molecular weight of the polymer (I) is, in order of preference, 150.0 × 10⁴ or lower, 100.0 × 10⁴ or lower, 60.0 × 10⁴ or lower, 50.0 × 10⁴ or lower, or 40.0 × 10⁴ or lower.

The polymer (I) has an ion exchange ratio (IXR) of preferably 53 or lower. The IXR is defined as the number of carbon atoms in the polymer main chain relative to the ionic group. A precursor group (e.g., -SO₂F) to be ionic as a result of hydrolysis is not regarded as an ionic group in the context of IXR determination.

The IXR is preferably 0.5 or higher, more preferably 1 or higher, still more preferably 3 or higher, further preferably 4 or higher, further more preferably 5 or higher. The IXR is also more preferably 43 or lower, still more preferably 33 or lower, particularly preferably 23 or lower.

The polymer (I) has an ion exchange capacity, in order of preference, of 0.80 meq/g or higher, 1.50 meq/g or higher, 1.75 meq/g or higher, 2.00 meq/g or higher, 2.20 meq/g or higher, higher than 2.20 meq/g, 2.50 meq/g or higher, 2.60 meq/g or higher, 3.00 meq/g or higher, or 3.50 meq/g or higher. The ion exchange capacity corresponds to the amount of the ionic groups (anionic groups) in the polymer (I) and can be determined by calculation from the composition of the polymer (I).

The ionic groups (anionic groups) in the polymer (I) are typically distributed along the polymer main chain. Preferably, the polymer (I) has the polymer chain with repeated side chains bonded to this main chain and these side chains have an ionic group.

The polymer (I) preferably contains an ionic group having a pKa of smaller than 10, more preferably smaller than 7. The ionic group of the polymer (I) is preferably selected from sulfonate, carboxylate, phosphonate, and phosphate.

The phrase "sulfonate, carboxylate, phosphonate, and phosphate" is intended to refer to the respective salts or the corresponding acids capable of forming the respective salts. In the case of using a salt, this salt is preferably an alkali metal salt or an ammonium salt. The ionic group is preferably a sulfonate group.

The polymer (I) preferably has water solubility. The "water solubility" means an ability to easily dissolve or disperse in an aqueous medium. For the polymer (I) having water solubility, dynamic light scattering (DLS), for example, cannot measure its particle size or can indicate a particle size of 5 nm or smaller.

An aqueous solution of the polymer (I) has a viscosity of preferably 5.0 mPa·s or higher, more preferably 8.0 mPa·s or higher, still more preferably 10.0 mPa·s or higher, particularly preferably 12.0 mPa·s or higher, most preferably 14.0 mPa·s or higher, while preferably 100.0 mPa·s or lower, more preferably 50.0 mPa·s or lower, still more preferably 25.0 mPa·s or lower, further preferably 20.0 mPa·s or lower.

The viscosity of an aqueous solution of the polymer (I) can be specified by preparing an aqueous solution in which the amount of the polymer (I) in the aqueous solution is adjusted to 33% by mass of the aqueous solution and then measuring the viscosity of the resulting aqueous solution at 20°C using a tuning fork vibro viscometer (model: SV-10) available from A & D Co., Ltd.

The polymer (I) has a critical micelle concentration (CMC) of preferably 0.1% by mass or higher, more preferably 0.5% by mass or higher, still more preferably 1% by mass or higher, while preferably 20% by mass or lower, more preferably 10% by mass or lower, still more preferably 5% by mass or lower.

The critical micelle concentration of the polymer (I) can be determined by measuring the surface tension. The surface tension can be determined using a surface tensiometer model CBVP-A3 available from Kyowa Interface Science Co., Ltd., for example.

The polymer (I) has an acid value of preferably 60 or higher, more preferably 90 or higher, still more preferably 120 or higher, particularly preferably 150 or higher, most preferably 180 or higher; the upper limit is preferably, but is not limited to, 300 or lower.

In the case where the polymer (I) contains an anionic group different from an acid-form functional group, such as -COOM^{a}, -SO₃M^{a}, -OSOₐM^{a}, or C(CF₃)₂OM^{a} (wherein M^{a} is a metal atom, NR²₄, imidazolium optionally containing a substituent, pyridinium optionally containing a substituent, or phosphonium optionally containing a substituent, where R² is H or an organic group), the acid value of the polymer (I) can be determined by acid-base titration after the above group is converted into its acid-form group.

The polymer (I) used may also be a polymer (11) of a monomer (11) represented by the formula (11), which contains a polymerized unit (11) based on the monomer (11) in an amount of 50 mol% or more of all polymerized units of the polymer (11) and has a weight average molecular weight (Mw) of 38.0 × 10⁴ or higher.

Formula (11): CX₂=CY-CF₂-O-Rf-A

In the formula, X and Y are each independently H, F, CH₃, or CF₃, with at least one of X or Y being F; Rf is a C1-C40 fluorine-containing alkylene group or a C2-C100 fluorine-containing alkylene group containing an ether bond; and A is -COOM^{a}, -SO₃M^{a}, -OSO₃M^{a}, or C(CF₃)₂OM^{a}, wherein M^{a} is H, a metal atom, NR²₄, imidazolium optionally containing a substituent, pyridinium optionally containing a substituent, or phosphonium optionally containing a substituent, where R² is H or an organic group.

In the formula (11), X and Y are each independently H, F, CH₃, or CF₃, with at least one of X or Y being F. X is preferably H or F, more preferably H. Y is preferably H or F, more preferably F.

Rf and A in the formula (11) are defined as described for Rf and A in the formula (1) that expresses a monomer of the polymer (1).

The polymer (11) may be a homopolymer consisting of a polymerized unit (11) based on the monomer (11) or may be a copolymer containing a polymerized unit (11) and a polymerized unit based on a different monomer copolymerizable with the monomer (11). The different monomer is defined as described above. The polymerized units (11) at respective occurrences may be the same as or different from each other and the polymer (11) may contain polymerized units (11) based on two or more different monomers represented by the formula (11).

The polymer (11) contains the polymerized unit (11) in an amount, in order of preference, of 50 mol% or more, 60 mol% or more, 70 mol% or more, 80 mol% or more, 90 mol% or more, or 99 mol% or more of all polymerized units of the polymer (11). Particularly preferably, the amount of the polymerized unit (11) is substantially 100 mol%. Most preferably, the polymer (11) consists of the polymerized unit (11).

The polymer (11) contains a polymerized unit based on a different monomer copolymerizable with the monomer (11) in an amount, in order of preference, of 99.0 mol% or less, 97.0 mol% or less, 95.0 mol% or less, 90 mol% or less, 80 mol% or less, 70 mol% or less, 60 mol% or less, or 50 mol% or less of all polymerized units of the polymer (11). Particularly preferably, the amount of a polymerized unit based on a different monomer copolymerizable with the monomer (11) is substantially 0 mol%. Most preferably, the polymer (11) is free from a polymerized unit based on a different monomer.

The lower limit of the weight average molecular weight of the polymer (11) is, in order of preference, 38.0 × 10⁴ or higher or 40.0 × 10⁴ or higher. The upper limit of the weight average molecular weight of the polymer (11) is, in order of preference, 150.0 × 10⁴ or lower, 100.0 × 10⁴ or lower, or 60.0 × 10⁴ or lower.

The lower limit of the number average molecular weight of the polymer (11) is, in order of preference, 5.0 × 10⁴, 8.0 × 10⁴, 10.0 × 10⁴ or higher, or 12.0 × 10⁴ or higher. The upper limit of the number average molecular weight of the polymer (11) is, in order of preference, 75.0 × 10⁴ or lower, 50.0 × 10⁴ or lower, 40.0 × 10⁴ or lower, or 30.0 × 10⁴ or lower.

The polymer (I) used may also be a polymer (12) of a monomer (12) represented by the formula (12), which contains a polymerized unit (12) based on the monomer (12) in an amount of 50 mol% or more of all polymerized units of the polymer (12) and has a weight average molecular weight (Mw) of 1.4 × 10⁴ or higher.

Formula (12): CX₂=CX-O-Rf-A

In the formula, Xs are each independently F or CF₃; Rf is a C1-C40 fluorine-containing alkylene group or a C2-C100 fluorine-containing alkylene group containing an ether bond or a keto group; and A is -COOM^{a}, -SO₃M^{a}, -OSO₃M^{a}, or C(CF₃)₂OM^{a}, wherein M^{a} is -H, a metal atom, -NR²₄, imidazolium optionally containing a substituent, pyridinium optionally containing a substituent, or phosphonium optionally containing a substituent, where R² is H or an organic group.

In the formula (12), Xs are each independently F or CF₃. Preferably, at least one or more Xs are F; more preferably, both Xs are F.

Rf and A in the formula (12) are defined as described for Rf and A in the formula (2) that expresses a monomer of the polymer (2).

The polymer (12) may be a homopolymer consisting of a polymerized unit (12) based on the monomer (12) or may be a copolymer containing a polymerized unit (12) and a polymerized unit based on a different monomer copolymerizable with the monomer (12). The different monomer is defined as described above. The polymerized units (12) at respective occurrences may be the same as or different from each other and the polymer (12) may contain polymerized units (12) based on two or more different monomers represented by the formula (12).

The polymer (12) contains the polymerized unit (12) in an amount, in order of preference, of 40 mol% or more, 50 mol% or more, 60 mol% or more, 70 mol% or more, 80 mol% or more, 90 mol% or more, or 99 mol% or more of all polymerized units of the polymer (11). Particularly preferably, the amount of the polymerized unit (12) is substantially 100 mol%. Most preferably, the polymer (12) consists of the polymerized unit (12).

The polymer (12) contains a polymerized unit based on a different monomer copolymerizable with the monomer (12) in an amount, in order of preference, of 50 mol% or less, 40 mol% or less, 30 mol% or less, 20 mol% or less, 10 mol% or less, or 1 mol% or less of all polymerized units of the polymer (11). Particularly preferably, the amount of a polymerized unit based on a different monomer copolymerizable with the monomer (12) is substantially 0 mol%. Most preferably, the polymer (12) is free from a polymerized unit based on a different monomer.

The lower limit of the weight average molecular weight (Mw) of the polymer (12) is, in order of preference, 1.4 × 10⁴ or higher, 1.7 × 10⁴ or higher, 1.9 × 10⁴ or higher, 2.1 × 10⁴ or higher, 2.3 × 10⁴ or higher, 2.7 × 10⁴ or higher, 3.1 × 10⁴ or higher, 3.5 × 10⁴ or higher, 3.9 × 10⁴ or higher, 4.3 × 10⁴ or higher, 4.7 × 10⁴ or higher, or 5.1 × 10⁴ or higher. The upper limit of the weight average molecular weight (Mw) of the polymer (12) is, in order of preference, 150.0 × 10⁴ or lower, 100.0 × 10⁴ or lower, 60.0 × 10⁴ or lower, 50.0 × 10⁴ or lower, or 40.0 × 10⁴ or lower.

The lower limit of the number average molecular weight (Mn) of the polymer (12) is, in order of preference, 0.7 × 10⁴ or higher, 0.9 × 10⁴ or higher, 1.0 × 10⁴ or higher, 1.2 × 10⁴ or higher, 1.4 × 10⁴ or higher, 1.6 × 10⁴ or higher, or 1.8 × 10⁴ or higher. The upper limit of the number average molecular weight (Mn) of the polymer (12) is, in order of preference, 75.0 × 10⁴ or lower, 50.0 × 10⁴ or lower, 40.0 × 10⁴ or lower, 30.0 × 10⁴ or lower, or 20.0 × 10⁴ or lower.

The polymer (12) has a molecular weight distribution (Mw/Mn) of preferably 3.0 or lower, more preferably 2.4 or lower, still more preferably 2.2 or lower, particularly preferably 2.0 or lower, most preferably 1.9 or lower.

In the case where the polymer (12) contains a polymerized unit (12) and a polymerized unit based on a different monomer copolymerizable with the monomer (12), the amount of the polymerized unit (12) based on the monomer (12) is preferably 40 to 60 mol%, more preferably 45 to 55 mol% of all polymerized units of the polymer (12), while the amount of the polymerized unit based on the different monomer is preferably 60 to 40 mol%, more preferably 55 to 45 mol% of all polymerized units of the polymer (12). This structure is particularly suitable in the case where the polymerized unit based on the different monomer copolymerizable with the monomer (12) is a polymerized unit (M) based on a monomer represented by the formula CFR=CR₂.

In the case where the polymer (12) contains a polymerized unit (12) and a polymerized unit based on a different monomer copolymerizable with the monomer (12), the polymerized unit (12) and the polymerized unit based on the different monomer copolymerizable with the monomer (12) have an alternation percentage of preferably 40% or higher, more preferably 50% or higher, still more preferably 60% or higher, further preferably 70% or higher, particularly preferably 80% or higher, most preferably 90% or higher. The alternating percentage may be 40 to 99%, for example. This structure is particularly suitable in the case where the polymerized unit based on the different monomer copolymerizable with the monomer (12) is a polymerized unit (M) based on a monomer represented by the formula CFR=CR₂.

The alternating percentage of the polymerized unit (12) and the polymerized unit based on the different monomer copolymerizable with the monomer (12) in the polymer (12) can be determined by ¹⁹F-NMR analysis on the polymer (12).

The polymer (I) can be produced by a conventionally known method except that the above monomers are used.

The polymer (I) used may also be a polymer (13) of a monomer (13) represented by the formula (13), which contains a polymerized unit (13) based on the monomer (13) in an amount of 50% by mass or more of all polymerized units of the polymer (13). This polymer (13) is a novel polymer.

Formula (13): CX₂=CX-O-Rf-SO₃M^{a}

In the formula, Xs are each independently F or CF₃; Rf is a C1-C40 fluorine-containing alkylene group or a C2-C100 fluorine-containing alkylene group containing an ether bond or a keto group; and M^{a} is -H, a metal atom, -NR²₄, imidazolium optionally containing a substituent, pyridinium optionally containing a substituent, or phosphonium optionally containing a substituent, where R² is H or an organic group.

In the formula (13), Xs are each independently F or CF₃. Preferably, at least one or more Xs are F; more preferably, both Xs are F.

Rf and M^{a} in the formula (13) are defined as described for Rf and A in the formula (2) that expresses a monomer of the polymer (2).

The polymer (13) may be a homopolymer consisting of a polymerized unit (13) based on the monomer (13) or may be a copolymer containing a polymerized unit (13) and a polymerized unit based on a different monomer copolymerizable with the monomer (13). The different monomer is defined as described above. The polymerized units (13) at respective occurrences may be the same as or different from each other and the polymer (13) may contain polymerized units (13) based on two or more different monomers represented by the formula (13).

The polymer (13) contains the polymerized unit (13) based on the monomer (13) in an amount of 50% by mass or more of all polymerized units of the polymer (13). The amount of the polymerized unit (13) in the polymer (13) is, in order of preference, 50% by mass or more, 60% by mass or more, 70% by mass or more, 80% by mass or more, 90% by mass or more, or 99% by mass or more of all polymerized units of the polymer (13). Particularly preferably, the amount of the polymerized unit (13) is substantially 100% by mass. Most preferably, the polymer (13) consists of the polymerized unit (13).

The polymer (13) contains a polymerized unit based on a different monomer copolymerizable with the monomer (13) in an amount, in order of preference, of 50% by mass or less, 40% by mass or less, 30% by mass or less, 20% by mass or less, 10% by mass or less, or 1% by mass or less of all polymerized units of the polymer (11). Particularly preferably, the amount of a polymerized unit based on a different monomer copolymerizable with the monomer (13) is substantially 0% by mass. Most preferably, the polymer (13) is free from a polymerized unit based on a different monomer.

The lower limit of the number average molecular weight of the polymer (13) is, in order of preference, 0.3 × 10⁴ or higher, 0.4 × 10⁴ or higher, 0.5 × 10⁴ or higher, 0.7 × 10⁴ or higher, 0.8 × 10⁴ or higher, 1.0 × 10⁴ or higher, 1.2 × 10⁴ or higher, 1.4 × 10⁴, 1.6 × 10⁴ or higher, 1.8 × 10⁴ or higher, 2.0 × 10⁴ or higher, or 3.0 × 10⁴ or higher. The upper limit of the number average molecular weight of the polymer (13) is, in order of preference, 75.0 × 10⁴ or lower, 50.0 × 10⁴ or lower, 40.0 × 10⁴ or lower, 30.0 × 10⁴ or lower, or 20.0 × 10⁴ or lower.

The lower limit of the weight average molecular weight of the polymer (13) is, in order of preference, 0.4 × 10⁴ or higher, 0.5 × 10⁴ or higher, 0.6 × 10⁴ or higher, 0.8 × 10⁴ or higher, 1.0 × 10⁴ or higher, 1.2 × 10⁴ or higher, 1.4 × 10⁴ or higher, 1.7 × 10⁴ or higher, 1.9 × 10⁴ or higher, 2.1 × 10⁴ or higher, 2.3 × 10⁴ or higher, 2.7 × 10⁴ or higher, 3.1 × 10⁴ or higher, 3.5 × 10⁴ or higher, 3.9 × 10⁴ or higher, 4.3 × 10⁴ or higher, 4.7 × 10⁴ or higher, 5.1 × 10⁴ or higher, 10.0 × 10⁴ or higher, 15.0 × 10⁴ or higher, 20.0 × 10⁴ or higher, or 25.0 × 10⁴ or higher. The upper limit of the weight average molecular weight of the polymer (13) is, in order of preference, 150.0 × 10⁴ or lower, 100.0 × 10⁴ or lower, 60.0 × 10⁴ or lower, 50.0 × 10⁴ or lower, or 40.0 × 10⁴ or lower.

The polymer (13) has a molecular weight distribution (Mw/Mn), in order of preference, of 3.0 or lower, 2.4 or lower, 2.2 or lower, 2.0 or lower, 1.9 or lower, 1.7 or lower, 1.5 or lower, 1.4 or lower, or 1.3 or lower.

A dimer and trimer of the monomer (I) represented by the formula (I) are contained in an amount of preferably 1.0% by mass or less, more preferably 0.1% by mass or less, still more preferably 0.01% by mass or less, particularly preferably 0.001% by mass or less, most preferably 0.0001% by mass or less relative to the polymer (I).

The dimer and trimer can be removed by ultrafiltration, microfiltration, dialysis membrane treatment, or the like.

The macromolecular compound is in an amount of preferably 0.01% by mass or more, more preferably 0.05% by mass or more, still more preferably 0.08% by mass or more, while preferably 5.0% by mass or less, more preferably 3.0% by mass or less, still more preferably 2.0% by mass or less, further preferably 1.0% by mass or less relative to the TFE-based polymer.

The amount of the macromolecular compound can be determined by solid-state NMR spectroscopy.

Methods of analyzing the respective polymers are disclosed in WO 2014/099453, WO 2010/075497, WO 2010/075496, WO 2011/008381, WO 2009/055521, WO 1987/007619, JP S61-293476 A, WO 2010/075494, WO 2010/075359, WO 2012/082454, WO 2006/119224, WO 2013/085864, WO 2012/082707, WO 2012/082703, WO 2012/082451, WO 2006/135825, WO 2004/067588, WO 2009/068528, JP 2004-075978 A, JP 2001-226436 A, WO 1992/017635, WO 2014/069165, JP H11-181009 A, and the like. The method for determining the amount of the macromolecular compound may be any of the polymer analysis methods disclosed in the respective documents.

The TFE-based polymer in the TFE-based polymer composition of the disclosure may be a homopolymer of tetrafluoroethylene (TFE) or a TFE copolymer containing a polymerized unit based on TFE (TFE unit) and a polymerized unit based on a modifying monomer (hereinafter, also referred to as a "modifying monomer unit").

The homopolymer of TFE refers to a polymer containing a polymerized unit based on a modifying monomer copolymerizable with TFE in an amount of less than 0.0001% by mass of all polymerized units. The TFE copolymer contains a modifying monomer unit in an amount of 10% by mass or less.

The TFE-based polymer may be polytetrafluoroethylene (PTFE). The PTFE may be a homopolymer of TFE or may be a modified PTFE.

The modified PTFE may contain 99.0% by mass or more of the TFE unit and 1.0% by mass or less of the modifying monomer unit. The modified PTFE may consist of the TFE unit and the modifying monomer unit.

The TFE copolymer may be a modified PTFE.

To further reduce or prevent gas generation and deterioration of characteristics of an electrochemical device and to achieve improved binding force as well as improved strength and improved flexibility of a mixture sheet, the TFE-based polymer is preferably the TFE copolymer, more preferably the modified PTFE.

To further reduce or prevent gas generation and deterioration of characteristics of a battery and to achieve improved expandability and improved binding force as well as improved strength and improved flexibility of a mixture sheet, the TFE-based polymer preferably contains a modifying monomer unit in an amount falling within a range from 0.0001 to 10% by mass of all polymerized units. The lower limit of the amount of the modifying monomer unit is more preferably 0.001% by mass, still more preferably 0.005% by mass, further preferably 0.010% by mass, further more preferably 0.015% by mass. The upper limit of the amount of the modifying monomer unit is preferably 5.0% by mass, more preferably 3.0% by mass, still more preferably 1.0% by mass, further preferably 0.90% by mass, further preferably 0.80% by mass, further preferably 0.50% by mass, further preferably 0.40% by mass, further preferably 0.30% by mass, further preferably 0.20% by mass, further preferably 0.15% by mass, further preferably 0.10% by mass, further preferably 0.08% by mass, particularly preferably 0.05% by mass, most preferably 0.03% by mass.

The modifying monomer unit herein means a portion constituting the molecular structure of the TFE-based polymer and derived from a modifying monomer.

The amounts of the above polymerized units can be calculated by any appropriate combination of NMR, FT-IR, elemental analysis, and X-ray fluorescence analysis in accordance with the types of the monomers.

The modifying monomer may be any monomer copolymerizable with TFE. Examples thereof include perfluoroolefins such as hexafluoropropylene (HFP); hydrogen-containing fluoroolefins such as trifluoroethylene and vinylidene fluoride (VDF); perhaloolefins such as chlorotrifluoroethylene (CTFE); perfluorovinyl ether; perfluoroallyl ether; a (perfluoroalkyl)ethylene; and ethylene. One modifying monomer may be used or a plurality of modifying monomers may be used.

Examples of the perfluorovinyl ether include, but are not limited to, unsaturated perfluoro compounds represented by the following formula (A):

CF₂=CF-ORf (A)

(wherein Rf is a perfluoroorganic group). The "perfluoroorganic group" herein means an organic group in which all hydrogen atoms bonded to any carbon atom are replaced by fluorine atoms. The perfluoroorganic group may contain ether oxygen.

An example of the perfluorovinyl ether is a perfluoro(alkyl vinyl ether) (PAVE) represented by the formula (A) wherein Rf is a C1-C10 perfluoroalkyl group. The perfluoroalkyl group preferably has a carbon number of 1 to 5.

Examples of the perfluoroalkyl group in the PAVE include a perfluoromethyl group, a perfluoroethyl group, a perfluoropropyl group, a perfluorobutyl group, a perfluoropentyl group, and a perfluorohexyl group.

Examples of the perfluorovinyl ether include: those represented by the formula (A) wherein Rf is a C4-C9 perfluoro(alkoxyalkyl) group; those represented by the formula (A) wherein Rf is a group represented by the following formula: 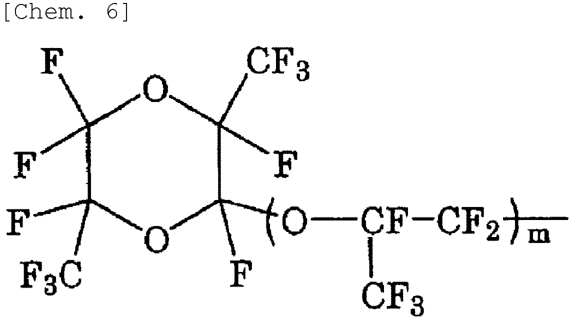 wherein m is 0 or an integer of 1 to 4; and those represented by the formula (A) wherein Rf is a group represented by the following formula: 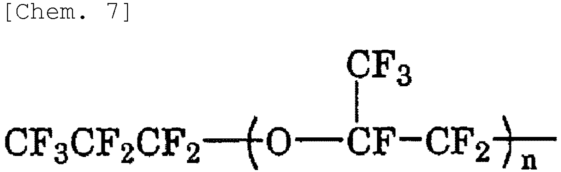 wherein n is an integer of 1 to 4.

Examples of the (perfluoroalkyl)ethylene (PFAE) include, but are not limited to, (perfluorobutyl)ethylene (PFBE) and (perfluorohexyl)ethylene.

Examples of the perfluoroallyl ether include fluoromonomers represented by the following formula (B):

CF₂=CF-CF₂-ORf¹ (B)

wherein Rf¹ is a perfluoroorganic group.

Rf¹ is preferably a C1-C10 perfluoroalkyl group or a C1-C10 perfluoroalkoxyalkyl group. The perfluoroallyl ether preferably includes at least one selected from the group consisting of CF₂=CF-CF₂-O-CF₃, CF₂=CF-CF₂-O-C₂F₅, CF₂=CF-CF₂-O-C₃F₇, and CF₂=CF-CF₂-O-C₄F₉, more preferably includes at least one selected from the group consisting of CF₂=CF-CF₂-O-C₂F₅, CF₂=CF-CF₂-O-C₃F₇, and CF₂=CF-CF₂-O-C₄F₉, and is still more preferably CF₂=CF-CF₂-O-CF₂CF₂CF₃.

To achieve improved expandability, improved binding force, and improved flexibility of a mixture sheet, the modifying monomer preferably includes at least one selected from the group consisting of PAVE, HFP, VDF, and CTFE, more preferably at least one selected from the group consisting of perfluoro(methyl vinyl ether) (PMVE), HFP, VDF, and CTFE, more preferably at least one selected from the group consisting of PMVE and HFP.

The TFE-based polymer may have a core-shell structure. An example of the TFE-based polymer having a core-shell structure is a modified PTFE including a core of high-molecular-weight PTFE and a shell of lower-molecular-weight PTFE or modified PTFE in a particle. An example of such a modified PTFE is a PTFE disclosed in JP 2005-527652 T.

To form an electrode mixture sheet with still higher strength, the TFE-based polymer preferably has an endothermic peak temperature of 320°C or higher, more preferably 325°C or higher, still more preferably 330°C or higher, further preferably 335°C or higher, further preferably 340°C or higher, further preferably 342°C or higher, particularly preferably 344°C or higher. The endothermic peak temperature is preferably 350°C or lower.

The endothermic peak temperature is the temperature corresponding to the minimum point on a heat-of-fusion curve obtained by differential scanning calorimetry (DSC) at a temperature-increasing rate of 10°C/min on a fluororesin that has no history of being heated to 300°C or higher. When two or more minimum points are present in one melting peak, both of these are defined as endothermic peak temperatures.

Preferably, the TFE-based polymer has one or more endothermic peaks in a range from 333°C to 347°C on a heat-of-fusion curve with a temperature-increasing rate of 10°C/min using a differential scanning calorimeter (DSC) and has a heat of fusion of 62 mJ/mg or higher at 290°C to 350°C calculated from the heat-of-fusion curve.

To form an electrode mixture sheet with still higher strength, the TFE-based polymer preferably has a number average molecular weight (Mn) of 0.5 × 10⁶ or higher, more preferably 1.0 × 10⁶ or higher, still more preferably 1.5 × 10⁶ or higher, further preferably 2.0 × 10⁶ or higher, particularly preferably 3.0 × 10⁶ or higher. The number average molecular weight is also preferably 20.0 × 10⁶ or lower, more preferably 15.0 × 10⁶ or lower, still more preferably 12.0 × 10⁶ or lower, further preferably 10.0 × 10⁶ or lower, particularly preferably 8.0 × 10⁶ or lower.

The number average molecular weight is the molecular weight determined in conformity with the method described in the following literature, based on the heat of crystallization estimated by temperature drop measurement with a differential scanning calorimeter (DSC) on the molten fluororesin. The measurement is performed five times and the average of the three values excluding the maximum and minimum values is used.

Literature: Suwa, T.; Takehisa, M.; Machi, S., J. Appl. Polym. Sci. vol. 17, pp. 3253 (1973).

The binder preferably has a fibrous structure having a fibril diameter (median) of 100 nm or smaller. The fibril diameter (median) is more preferably 80 nm or smaller, still more preferably 70 nm or smaller, further preferably 65 nm or smaller, particularly preferably 62 nm or smaller. The presence of a binder having such a fine fibril diameter in the secondary battery mixture and exertion of its effect of binding the powder particles of the components (e.g., electrode active material and solid electrolyte) constituting the secondary battery mixture can further improve the strength and flexibility of a mixture sheet.

Excessive fibrillation tends to reduce the flexibility. From the viewpoint of strength, the lower limit is preferably, but is not limited to, 5 nm or higher, more preferably 10 nm or higher, still more preferably 15 nm or higher, particularly preferably 20 nm or higher, for example.

The fibril diameter (median) is a value determined by the following method.
(1) A scanning electron microscope (model S-4800, available from Hitachi, Ltd.) is used to take a magnified image (7000x) of a secondary battery mixture sheet, whereby an image is obtained.
(2) This image is provided with two lines drawn at equal intervals in the horizontal direction, whereby the image is trisected.
(3) For all fibrillated binder pieces on the upper line, the diameter is measured at three points for each fibrillated binder piece, and the average is taken as the diameter of this fibrillated binder piece. The three points selected to measure the diameter include the intersection of the fibrillated binder piece and the line and the locations 0.5 µm above and below the intersection (excluding unfibrillated binder primary particles).
(4) The operation of the step (3) is performed for all fibrillated binder pieces on the lower line.
(5) Based on the first image, the field of view is moved 1 mm to the right, and another image is taken. The diameters of fibrillated binder pieces are measured through the steps (3) and (4) above. This process is repeated, and terminated when the number of measurements exceeds 80.
(6) The median of the diameters of all fibrillated binder pieces determined above is taken as the fibril diameter.

The TFE-based polymer composition used for the binder preferably consists essentially of the TFE-based polymer and the macromolecular compound. This allows for significant exertion of the effects owing to the TFE-based polymer and the macromolecular compound. The phrase "consists essentially of the TFE-based polymer and the macromolecular compound" means that the total amount of the TFE-based polymer and the macromolecular compound is 95.0% by mass or more of the TFE-based polymer composition.

The total amount of the TFE-based polymer and the macromolecular compound is preferably 98.0% by mass or more, more preferably 99.0% by mass or more, still more preferably 99.5% by mass or more, particularly preferably 99.9% by mass or more, most preferably 99.95% by mass or more of the TFE-based polymer composition.

The binder preferably consists essentially of the TFE-based polymer composition. This allows for significant exertion of the effects owing to the TFE-based polymer composition. The phrase "consists essentially of the TFE-based polymer composition" means that the amount of the PTFE composition is 95.0% by mass or more of the binder.

The amount of the TFE-based polymer composition is preferably 98.0% by mass or more, more preferably 99.0% by mass or more, still more preferably 99.5% by mass or more, particularly preferably 99.9% by mass or more, most preferably 99.95% by mass or more of the binder.

The TFE-based polymer composition is preferably substantially free from water. This can further reduce or prevent gas generation and deterioration of characteristics of a battery and can improve the strength of a mixture sheet. Moreover, the electrode active material or solid electrolyte to be combined can be selected from a wide range of selections, which is advantageous in terms of the production process. The phrase "substantially free from water" means that the water content of the TFE-based polymer composition is 0.050% by mass or less.

The water content is preferably 0.040% by mass or less, more preferably 0.020% by mass or less, still more preferably 0.010% by mass or less, further preferably 0.005% by mass or less, particularly preferably 0.002% by mass or less.

The water content is determined by the following method.

The mass of the TFE-based polymer composition is weighed before and after heating at 150°C for two hours, and the water content is calculated by the following formula. The sample is taken three times, and this calculation is performed for each sample and the values are averaged. Water content (% by mass) = [ (mass (g) of TFE-based polymer composition before heating) - (mass (g) of TFE-based polymer composition after heating)] / (mass (g) of TFE-based polymer composition before heating) × 100

The TFE-based polymer composition is preferably substantially free from a fluorine-containing compound having a molecular weight of 1000 or lower. The phrase "substantially free from a fluorine-containing compound" means that the amount of the fluorine-containing compound is 25 ppb by mass or less relative to the TFE-based polymer composition.

The amount of the fluorine-containing compound is preferably less than 25 ppb by mass, more preferably 10 ppb by mass or less, still more preferably less than 10 ppb by mass, further preferably 5 ppb by mass or less, further preferably 3 ppb by mass or less, further preferably 1 ppb by mass or less, particularly preferably less than 1 ppb by mass. The lower limit may be, but is not limited to, an amount below the lower limit of quantitation.

The amount of the fluorine-containing compound having a molecular weight of 1000 or lower is determined by the following method.

A 1-g portion of a sample weighed is combined with 10 g (12.6 mL) of methanol, followed by ultrasonication for 60 minutes, whereby an extract is obtained. The resulting extract is appropriately concentrated by nitrogen purge, and the fluorine-containing compound in the concentrated extract is subjected to a LC/MS/MS assay. Molecular weight information is extracted from the LC/MS spectrum obtained, and is checked for consistency with the structural formulas of candidate fluorine-containing compounds. Aqueous solutions of a standard substance at five or more different levels of amount are prepared, and the aqueous solutions of the respective amounts are subjected to LC/MS analysis . The relation between the amount and the area relative to the amount is plotted, so that a calibration curve is drawn. Based on the resulting calibration curve, the area of the fluorine-containing compound in the extract in the LC/MS chromatogram is converted to the amount of the fluorine-containing compound.

The lower limit of quantitation in this determination method is 10 ppb by mass.

The amount of the fluorine-containing compound having a molecular weight of 1000 or lower can also be determined by the following method.

A 1-g portion of a sample weighed is combined with 10 g (12.6 mL) of methanol, followed by ultrasonication at 60°C for two hours, standing at room temperature, and subsequent removal of solids, whereby an extract is obtained. The resulting extract is appropriately concentrated by nitrogen purge and the fluorine-containing compound in the concentrated extract is subjected to a LC/MS/MS assay. Molecular weight information is extracted from the LC/MS spectrum obtained and is checked for consistency with the structural formulas of candidate fluorine-containing compounds. Methanol standard solutions of a fluorine-containing compound at five different known levels of concentration are prepared and analyzed using a liquid chromatograph mass spectrometer. In each concentration range, first order approximation based on the concentration of the methanol standard solution and the peak integral value was used to create a calibration curve. Based on the resulting calibration curve, the amount of the fluorine-containing compound contained in the extract is determined and converted to the amount of the fluorine-containing compound contained in the sample.

The lower limit of quantitation in this determination method is 1 ppb by mass.

An example of the fluorine-containing compound having a molecular weight of 1000 or lower is a fluorine-containing compound having a molecular weight of 1000 g/mol or lower and containing a hydrophilic group. The molecular weight of the fluorine-containing compound is preferably 800 or lower, more preferably 500 or lower.

Polymerized particles obtained by polymerization performed in the presence of a fluorine-containing surfactant commonly contain the fluorine-containing surfactant in addition to the PTFE. The fluorine-containing surfactant herein is one used in polymerization.

The fluorine-containing compound having a molecular weight of 1000 or lower may be a compound that is not added in polymerization, for example, a compound that is produced as a by-product during polymerization.

When containing an anionic portion and a cationic portion, the fluorine-containing compound having a molecular weight of 1000 or lower refers to a fluorine-containing compound in which the anionic portion has a molecular weight of 1000 or lower. The fluorine-containing compound having a molecular weight of 1000 or lower does not include the PTFE.

The hydrophilic group may be, for example, -COOM, - SO₂M, or -SO₃M, and examples include anionic groups such as -COOM and -SO₃M wherein M is H, a metal atom, NR¹₄, imidazolium optionally containing a substituent, pyridinium optionally containing a substituent, or phosphonium optionally containing a substituent, where R¹ is H or an organic group.

The fluorine-containing surfactant used may also be a fluorine-containing surfactant in which the anionic portion has a molecular weight of 1000 or lower (fluorine-containing anionic surfactant). The "anionic portion" means a portion excluding the cation in the fluorine-containing surfactant. For example, in the case of F(CF₂)ₙ₁COOM, the anionic portion refers to the portion "F(CF₂)ₙ₁COO".

Examples of the fluorine-containing anionic surfactant include a compound represented by the following formula (N⁰):

Xⁿ⁰-Rfⁿ⁰-Y⁰ (N⁰)

wherein Xⁿ⁰ is H, Cl, or/and F; Rfⁿ⁰ is a C3-C20 linear, branched, or cyclic alkylene group in which any or all of Hs are replaced by Fs, where the alkylene group optionally contains one or more ether bonds and any H is optionally replaced by Cl; and Y⁰ is an anionic group.

The anionic group for Y⁰ may be -COOM, -SO₂M, or - SO₃M, and may be -COOM or -SO₃M.

M is H, a metal atom, NR¹₄, imidazolium optionally containing a substituent, pyridinium optionally containing a substituent, or phosphonium optionally containing a substituent, where R¹ is H or an organic group.

Examples of the metal atom include alkali metals (Group 1) and alkaline earth metals (Group 2), such as Na, K, and Li.

R¹ may be H or a C1-C10 organic group, or may be H or a C1-C4 organic group, or may be H or a C1-C4 alkyl group.

M may be H, a metal atom, or NR¹₄, or may be H, an alkali metal (Group 1), an alkaline earth metal (Group 2), or NR¹₄, or may be H, Na, K, Li, or NH₄.

In Rfⁿ⁰, 50% or more of H atoms may be replaced by fluorine.

The fluorine-containing surfactant may be a single fluorine-containing surfactant or may be a mixture containing two or more fluorine-containing surfactants.

Examples of the fluorine-containing surfactant include compounds represented by the following formulas. The fluorine-containing surfactant may be a mixture of any of these compounds:

F(CF₂)₇COOM,

F(CF₂)₅COOM,

H(CF₂)₆COOM,

H(CF₂)₇COOM,

CF₃O(CF₂)₃OCHFCF₂COOM,

C₃F₇OCF(CF₃)CF₂OCF(CF₃)COOM,

CF₃CF₂CF₂OCF(CF₃)COOM,

CF₃CF₂OCF₂CF₂OCF₂COOM,

C₂F₅OCF(CF₃)CF₂OCF(CF₃)COOM,

CF₃OCF(CF₃)CF₂OCF(CF₃)COOM,

CF₂ClCF₂CF₂OCF(CF₃)CF₂OCF₂COOM,

CF₂ClCF₂CF₂OCF₂CF(CF₃)OCF₂COOM,

CF₂ClCF(CF₃)OCF(CF₃)CF₂OCF₂COOM,

CF₂ClCF(CF₃)OCF₂CF(CF₃)OCF₂COOM, and

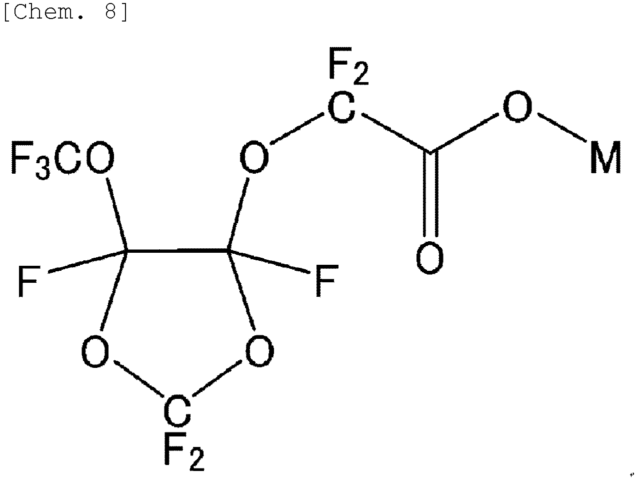

wherein M is H, a metal atom, NR¹₄, imidazolium optionally containing a substituent, pyridinium optionally containing a substituent, or phosphonium optionally containing a substituent, where R¹ is H or an organic group.

The PTFE composition of the disclosure is preferably substantially free from any of the fluorine-containing compounds represented by the above formulas.

In each of the above formulas, M may be H, a metal atom, or NR¹₄, or may be H, an alkali metal (Group 1), an alkaline earth metal (Group 2), or NR¹₄, or may be H, Na, K, Li, or NH₄.

R¹ may be H or a C1-C10 organic group, or may be H or a C1-C4 organic group, or may be H or a C1-C4 alkyl group.

The TFE-based polymer composition, when being substantially free from any of the fluorine-containing compounds represented by the above formulas, can further reduce or prevent gas generation and deterioration of characteristics of a battery and can further improve the strength of a mixture sheet.

The phrase "substantially free from any of the fluorine-containing compounds represented by the above formulas" means that the amount of the fluorine-containing compounds is 25 ppb by mass or less relative to the TFE-based polymer composition.

The amount of the fluorine-containing compounds is preferably less than 25 ppb by mass, more preferably 10 ppb by mass or less, still more preferably less than 10 ppb by mass, further preferably 5 ppb by mass or less, further preferably 3 ppb by mass or less, further preferably 1 ppb by mass or less, particularly preferably less than 1 ppb by mass. The lower limit may be, but is not limited to, an amount below the lower limit of quantitation.

The TFE-based polymer composition is also preferably substantially free from a fluorine-containing compound represented by the following formula:

[Cₙ₋₁F₂ₙ₋₁COO⁻]M⁺

wherein n is an integer of 9 to 14, preferably an integer of 9 to 12; and M⁺ is a cation. This can further reduce or prevent gas generation and deterioration of characteristics of a battery and can further improve the strength of a mixture sheet.

M of the cation M⁺ in the formula is defined as described for M.

The phrase "substantially free from the fluorine-containing compound represented by the above formula" means that the amount of the fluorine-containing compound is 25 ppb by mass or less relative to the TFE-based polymer composition.

The amount of the fluorine-containing compound is preferably less than 25 ppb by mass, more preferably 10 ppb by mass or less, still more preferably less than 10 ppb by mass, further preferably 5 ppb by mass or less, further preferably 3 ppb by mass or less, further preferably 1 ppb by mass or less, particularly preferably less than 1 ppb by mass. The lower limit may be, but is not limited to, an amount below the lower limit of quantitation.

The TFE-based polymer composition preferably has non-melt secondary processibility. The non-melt secondary processibility refers to a property of a polymer with which the melt flow rate is non-measurable at a temperature higher than the melting point in conformity with ASTM D1238 and D2116, in other words, a property with which the polymer does not easily flow even within a melting point range.

To further reduce or prevent gas generation and deterioration of characteristics of a battery and to achieve improved expandability and improved binding force as well as improved strength and improved flexibility of a mixture sheet, the TFE-based polymer composition has a standard specific gravity (SSG) of preferably 2.280 or lower, more preferably 2.250 or lower, still more preferably 2.220 or lower, further preferably 2.200 or lower, further preferably 2.190 or lower, further more preferably 2.180 or lower, particularly preferably 2.170 or lower.

The SSG is also preferably 2.130 or higher.

The SSG is determined by the water displacement method in conformity with ASTM D792 using a sample molded in conformity with ASTM D4895.

To further reduce or prevent gas generation and deterioration of characteristics of a battery and to achieve improved binding force as well as improved strength and improved flexibility of a mixture sheet, the TFE-based polymer composition has an extrusion pressure at a reduction ratio (RR) of 100 of preferably 10 MPa or higher, more preferably 12 MPa or higher, still more preferably 15 MPa or higher, further preferably 16 MPa or higher, particularly preferably 17 MPa or higher.

To achieve improved processibility, the extrusion pressure at a RR of 100 is preferably 50 MPa or lower, more preferably 40 MPa or lower, still more preferably 35 MPa or lower, further preferably 30 MPa or lower, further preferably 25 MPa or lower, further preferably 21 MPa or lower, particularly preferably 20 MPa or lower.

The extrusion pressure at a RR of 100 is determined by the following method in conformity with the method disclosed in JP 2002-201217 A.

A 100-g portion of the TFE-based polymer composition is combined with 21.7 g of lubricant (trade name: Isopar H^{®}, available from ExxonMobil Corp.), followed by mixing at room temperature in a glass bottle for three minutes. Next, the glass bottle is left to stand at room temperature (25°C) for at least one hour before extrusion, whereby a lubricated resin is obtained. The lubricated resin is paste-extruded through an orifice (diameter: 2.5 mm, land length: 11 mm, introduction angle: 30°) at room temperature at a reduction ratio of 100:1, whereby a uniform beading (extrudate) is obtained. The extrusion speed, i.e., ram speed is set to 20 inches/min (51 cm/min). The load at which the extrusion pressure reaches equilibrium in the paste extrusion is measured, and the value obtained is divided by the cross-sectional area of the cylinder used in the paste extrusion, whereby the extrusion pressure is calculated.

To further reduce or prevent gas generation and deterioration of characteristics of a a battery and to achieve improved binding force as well as improved strength and improved flexibility of a mixture sheet, the TFE-based polymer composition has an extrusion pressure at a RR of 300 of preferably 18 MPa or higher, more preferably 23 MPa or higher, still more preferably 25 MPa or higher, further preferably 28 MPa or higher, further more preferably 30 MPa or higher, particularly preferably 32 MPa or higher.

To achieve improved processibility, the extrusion pressure at a RR of 300 is preferably 45 MPa or lower, more preferably 40 MPa or lower.

The extrusion pressure at a RR of 300 is determined by the following method.

In a polyethylene container, 50 g of powder of the TFE-based polymer and 10.25 g of hydrocarbon oil (trade name: Isopar-G, available from ExxonMobil Corp.) as an extrusion aid are mixed for three minutes. The resulting mixture is packed into a cylinder of an extruder at room temperature (25°C). A load of 0.47 MPa is applied to a piston inserted into the cylinder and maintained for one minute. The mixture is then extruded through an orifice at a ram speed of 18 mm/min. The ratio of the cross-sectional area of the cylinder to the cross-sectional area of the orifice (reduction ratio) is 300. The value obtained by dividing the load (N) at which the pressure reaches equilibrium in the latter half of the extrusion operation by the cylinder cross-sectional area is defined as the extrusion pressure (MPa).

To further reduce or prevent gas generation and deterioration of characteristics of a battery and to achieve improved binding force as well as improved strength and improved flexibility of a mixture sheet, the TFE-based polymer composition is preferably expandable.

The term "expandable" means that an expanded article is obtainable in the following expansion test.

A beading obtained by the above paste extrusion at a RR of 100 is heated at 230°C for 30 minutes, whereby the lubricant is removed from the beading. The beading (extrudate) is then cut to an appropriate length and the resulting sample is clamped at each end with a gap between the clamps of 1.5 inches (38 mm), followed by heating to 300°C in an air-circulating furnace. The clamps are then moved apart at a desired speed (stretching speed) until the separation distance corresponds to a desired degree of stretching (total degree of stretching). Thereby, the expansion test (stretching test) is performed. The stretching method is essentially in conformity with the method disclosed in US 4576869 B except that the extrusion speed is different (not 84 cm/min but 51 cm/min). The "degree of stretching" refers to the increase in length attributable to expansion, and is typically expressed by the ratio to the original length. In the above stretching method, the stretching speed is 1000%/sec and the total degree of stretching is 2400%.

To further reduce or prevent gas generation and deterioration of characteristics of a battery and to achieve further improved binding force as well as further improved strength and further improved flexibility of a mixture sheet, the TFE-based polymer composition is preferably expandable to 24 times its size.

The phrase "expandable to 24 times its size" means that the composition does not break during expansion in the above expansion test.

To achieve further improved strength of a mixture sheet, the TFE-based polymer composition has a breaking strength of preferably 5 N or higher, more preferably 10 N or higher, still more preferably 15 N or higher. The upper limit of the breaking strength may be, but is not limited to, 50 N or lower, for example.

The breaking strength is a value obtained by the following method.

An expanded beading (article produced by stretching a beading) obtained in the above expansion test is clamped and fixed between movable jaws with a gauge length of 5.0 cm, and subjected to a tensile test at 25°C at a rate of 300 mm/min. The strength at break is measured as the breaking strength.

The TFE-based polymer composition may be in any form, and is preferably in the form of powder so as to be mixed with an electrode active material or a solid electrolyte without a large amount of dispersion medium.

The TFE-based polymer composition may be in a form other than powder, such as a dispersion.

The TFE-based polymer composition preferably has an average primary particle size of 100 to 350 nm. An average primary particle size within the above range may allow the TFE-based polymer to have a high molecular weight and may lead to improved binding force as well as improved flexibility of a mixture sheet.

The average primary particle size is more preferably 330 nm or smaller, still more preferably 320 nm or smaller, further preferably 300 nm or smaller, further preferably 280 nm or smaller, particularly preferably 250 nm or smaller, while more preferably 150 nm or greater, still more preferably 170 nm or greater, further preferably 200 nm or greater.

The average primary particle size is determined by the following method.

A TFE-based polymer aqueous dispersion is diluted with water to a solid content concentration of 0.15% by mass. The transmittance of 550-nm light relative to the unit length of the resulting diluted latex is measured. The Feret diameters in a transmission electron microscopic image are measured and the number-based length average particle size is determined therefrom. A calibration curve is obtained from these values. Using this calibration curve, the number average particle size is determined from the measured transmittance of 550-nm light incident on each sample, which is defined as the average primary particle size.

The average primary particle size can be determined by dynamic light scattering. In dynamic light scattering, a TFE-based polymer aqueous dispersion with a solid concentration adjusted to about 1.0% by mass is prepared and the measurement is performed by 70 measurement processes using ELSZ-1000S (available from Otsuka Electronics Co., Ltd.) at 25°C. The refractive index of the solvent (water) is 1.3328 and the viscosity of the solvent (water) is 0.8878 mPa·s.

The TFE-based polymer composition may have an average secondary particle size of 350 µm or greater, preferably 400 µm or greater, more preferably 450 µm or greater, still more preferably 500 µm or greater, further preferably 550 µm or greater, particularly preferably 600 µm or greater, while preferably 1000 µm or smaller, more preferably 900 µm or smaller, still more preferably 800 µm or smaller, further preferably 700 µm or smaller.

The average secondary particle size is determined in conformity with JIS K6891.

To achieve excellent handleability, the TFE-based polymer composition may have an average aspect ratio of 2.0 or lower, preferably 1.8 or lower, more preferably 1.7 or lower, still more preferably 1.6 or lower, further preferably 1.5 or lower, further preferably 1.4 or lower, further more preferably 1.3 or lower, particularly preferably 1.2 or lower, most preferably 1.1 or lower. The average aspect ratio may also be 1.0 or higher.

The average aspect ratio is determined as follows. A TFE-based polymer composition or a TFE-based polymer aqueous dispersion diluted to a solid concentration of about 1% by mass is observed using a scanning electron microscope (SEM) and 200 or more randomly extracted particles are imaged. The average of the ratios of the major axes to the minor axes of the particles is determined as the average aspect ratio.

To achieve good moldability and to provide a mixture sheet with high breaking strength, the TFE-based polymer composition preferably contains fibrous particles having an aspect ratio of 1.5 or higher in a proportion of 20% to 60% of all TFE-based polymer particles.

The proportion of the fibrous particles in all the particles can be calculated as follows.
(1) A TFE-based polymer powder containing the fibrous particles is imaged using a scanning electron microscope (SEM). The magnification may be set to 300x to 1000x, for example.
(2) The captured image is imported into a computer. Using image analysis software such as ImageJ, all particles are classified into the above fibrous particles and particles having an aspect ratio of lower than 1.5.
(3) The number of the above fibrous particles is divided by the number of all particles, i.e., the total number of the above fibrous particles and the particles having an aspect ratio of lower than 1.5, to calculate the percentage of the above fibrous particles in all particles.

The fibrous particles having an aspect ratio of 1.5 or higher are formed when, for example, the TFE-based polymer composition is mixed with an electrode active material or a solid electrolyte.

To achieve excellent handleability, the TFE-based polymer composition has an apparent density of preferably 0.40 g/mL or higher, more preferably 0.43 g/mL or higher, still more preferably 0.45 g/mL or higher, further preferably 0.48 g/mL or higher, particularly preferably 0.50 g/mL or higher. The upper limit may be, but is not limited to, 0.70 g/mL.

The apparent density is determined in conformity with JIS K6892.

The TFE-based polymer composition can suitably be produced, for example, by a method including a step (A) of polymerizing tetrafluoroethylene (TFE) in an aqueous medium in the presence of the macromolecular compound containing an ionic group to provide an aqueous dispersion containing the macromolecular compound, a TFE-based polymer, and the aqueous medium; a step (B) of coagulating the aqueous dispersion to provide wet powder; and a step (C) of drying the wet powder.

In the polymerization of the step (A), the amount of the macromolecular compound added is preferably more than 0.02% by mass and 10% by mass or lower relative to the aqueous medium, with a more preferred upper limit being 3% by mass, still more preferred upper limit being 1% by mass. Adding the macromolecular compound in an amount within this range enables smooth progress of polymerization of the monomer in the aqueous medium. The amount of the macromolecular compound added corresponds to the total amount of the macromolecular compound added in the polymerization.

In the polymerization, the macromolecular compound may be added in one lot or the macromolecular compound may be added continuously. Adding the macromolecular compound continuously means, for example, the macromolecular compound is not added in one lot but added over time without a break or in division. In the polymerization, an aqueous solution containing the macromolecular compound and water may be prepared and this aqueous solution may be added.

In the polymerization, preferably, adding the macromolecular compound is started before the solid content of the TFE-based polymer formed in the aqueous medium reaches 0.5% by mass and thereafter the macromolecular compound is added continuously. The timing of start adding the macromolecular compound is preferably before the solid content of the TFE-based polymer reaches 0.3% by mass, more preferably before the solid content reaches 0.2% by mass, still more preferably before the solid content reaches 0.1% by mass, particularly preferably simultaneous with the start of polymerization. The solid content refers to the amount of the TFE-based polymer relative to the sum of the aqueous medium and the TFE-based polymer.

Using at least one of the macromolecular compounds in the polymerization enables efficient production of the TFE-based polymer. Two or more compounds encompassed by the macromolecular compound may be used together, and a compound having a surfactant function different from the macromolecular compound may be used together as long as it has volatility or is allowed to remain in a molded article formed from the TFE-based polymer, for example.

In the polymerization, a nucleating agent may be used. The amount of the nucleating agent added may be selected as appropriate in accordance with the type of the nucleating agent. The amount of the nucleating agent added may be 5000 ppm by mass or less, preferably 1000 ppm by mass or less, more preferably 500 ppm by mass or less, still more preferably 100 ppm by mass or less, particularly preferably 50 ppm by mass or less, most preferably 10 ppm by mass or less relative to the aqueous medium.

In the polymerization, the nucleating agent is preferably added to the aqueous medium before start of the polymerization or before the solid content of the TFE-based polymer formed in the aqueous medium reaches 5.0% by mass. Adding the nucleating agent in an early stage of the polymerization enables production of an aqueous dispersion having a small average primary particle size and excellent stability.

The amount of the nucleating agent added in an early stage of the polymerization is preferably 5% by mass or less, more preferably 1.0% by mass or less, still more preferably 0.5% by mass or less, particularly preferably 0.1% by mass or less relative to the TFE-based polymer obtained. The lower limit of the amount of the nucleating agent added in an early stage of the polymerization may be, but is not limited to, 0.01 ppm by mass, for example.

Using the nucleating agent can lead to a TFE-based polymer having a smaller primary particle size in comparison with polymerization in the absence of the nucleating agent.

Examples of the nucleating agent include a dicarboxylic acid, a perfluoropolyether (PFPE) acid or a salt thereof, and a hydrocarbon-containing surfactant. The nucleating agent is preferably free from an aromatic ring, and is preferably an aliphatic compound.

The nucleating agent is preferably added before adding a polymerization initiator or simultaneously with adding the polymerization initiator; also, it may be added during polymerization to adjust the particle size distribution.

The amount of the dicarboxylic acid is preferably 1000 ppm by mass or less, more preferably 500 ppm by mass or less, still more preferably 100 ppm by mass or less relative to the aqueous medium.

The hydrocarbon-containing surfactant is added in an amount of preferably 40 ppm by mass or less, more preferably 30 ppm by mass or less, still more preferably 20 ppm by mass or less relative to the aqueous medium. The amount by ppm of a lipophilic nucleating portion present in the aqueous medium is presumed to be smaller than the amount of the above component added. Thus, the amount of the lipophilic nucleating portion is smaller than 40 ppm by mass, 30 ppm by mass, and 20 ppm by mass in the respective cases. The lipophilic nucleating portion seems to be present in the form of molecule, so that a slight amount of the hydrocarbon-containing surfactant can form a large amount of a lipophilic nucleating portion. Accordingly, adding merely about 1 ppm by mass of the hydrocarbon-containing surfactant to an aqueous medium can provide a beneficial effect. The lower limit is preferably 0.01 ppm by mass.

The hydrocarbon-containing surfactant encompasses a nonionic surfactant and a cationic surfactant, including siloxane surfactants such as those disclosed in US 7897682 B (Brothers et al.) and US 7977438 B (Brothers et al.).

The hydrocarbon-containing surfactant is preferably a nonionic surfactant (e.g., nonionic hydrocarbon surfactant). In other words, the nucleating agent is preferably a nonionic surfactant. The nonionic surfactant is preferably free from an aromatic portion.

An example of the nonionic surfactant is a nonionic surfactant that may be contained in a composition to be used for concentration.

In the polymerization, the macromolecular compound may be used together with a compound containing a functional group reactive in radical polymerization and a hydrophilic group.

In the polymerization, in addition to the macromolecular compound and a different compound having a surfactant function used as necessary, an additive may also be used to stabilize the compounds. Examples of the additive include a buffer, a pH adjuster, a stabilization aid, and a dispersion stabilizer.

The stabilization aid is preferably paraffin wax, fluorine-containing oil, a fluorine-containing solvent, silicone oil, or the like. One stabilization aid may be used alone or two or more stabilization aids may be used in combination. The stabilization aid is more preferably paraffin wax. The paraffin wax may be in the form of liquid, semi-solid, or solid at room temperature, and is preferably a saturated hydrocarbon containing 12 or more carbon atoms. The paraffin wax commonly preferably has a melting point of 40°C to 65°C, more preferably 50°C to 65°C.

The stabilization aid is used in an amount of preferably 0.1 to 12% by mass, more preferably 0.1 to 8% by mass based on the mass of the aqueous medium used. Preferably, the stabilization aid is sufficiently hydrophobic so that the stabilization aid is completely separated from the aqueous dispersion after polymerization and does not serve as a contaminating component.

The polymerization is performed by charging a polymerization reactor with an aqueous medium, the macromolecular compound, a monomer, and optionally a different additive, stirring the contents in the reactor, maintaining the reactor at a predetermined polymerization temperature, and then adding a predetermined amount of a polymerization initiator to start the polymerization reaction. After the polymerization reaction starts, the monomer, the polymerization initiator, a chain transfer agent, the macromolecular compound, and the like may be additionally fed in accordance with the purposes. The macromolecular compound may be added after the polymerization reaction starts.

Commonly, the polymerization temperature is 5°C to 120°C and the polymerization pressure is 0.05 to 10 MPaG. The polymerization temperature and the polymerization pressure are determined as appropriate in accordance with the types of the monomers used, the target molecular weight of the PTFE, and the reaction rate.

To exert an influence on the molecular weight distribution, i.e., to achieve a wide molecular weight distribution or to achieve bimodal or multimodal molecular weight distribution, the polymerization temperature may be changed during polymerization.

The polymerization medium may have a pH within a range from 2 to 11, preferably 3 to 10, most preferably 4 to 10.

The polymerization initiator may be any initiator capable of generating radicals within the polymerization temperature range, and any known oil-soluble and/or water-soluble polymerization initiator may be used. The polymerization initiator may be combined with a reducing agent, for example, into the form of a redox agent, which initiates the polymerization. The concentration of the polymerization initiator is appropriately determined in accordance with the types of the monomers, the target molecular weight of the TFE-based polymer, and the reaction rate.

The polymerization initiator used may be an oil-soluble radical polymerization initiator or a water-soluble radical polymerization initiator.

The water-soluble radical polymerization initiator may be a known water-soluble peroxide. Examples thereof include ammonium salts, potassium salts, and sodium salts of any of persulfuric acid, perboric acid, perchloric acid, perphosphoric acid, and percarbonic acid, organic peroxides such as disuccinic peroxide and diglutaric peroxide, t-butyl permaleate, and t-butyl hydroperoxide. The initiator may also contain a reducing agent such as a sulfite and the amount thereof used may be 0.1 to 20 times the peroxide.

For example, in the case of polymerization at a low temperature of 30°C or lower, a polymerization initiator used is preferably a redox initiator that is a combination of an oxidizing agent and a reducing agent. Examples of the oxidizing agent include a persulfate, an organic peroxide, potassium permanganate, manganese triacetate, and ammonium cerium nitrate. Examples of the reducing agent include a sulfite, bisulfite, bromate, diimine, and oxalic acid. Examples of the persulfate include ammonium persulfate and potassium persulfate. Examples of the sulfite include sodium sulfite and ammonium sulfite. To increase the decomposition rate of the initiator, the combination of the redox initiator is also preferably combined with a copper salt or an iron salt. An example of the copper salt is copper(II) sulfate and an example of the iron salt is iron(II) sulfate.

Examples of the redox initiator include combinations of potassium permanganate/oxalic acid, ammonium persulfate/bisulfite, manganese triacetate/oxalic acid, ammonium cerium nitrate/oxalic acid, and bromate/bisulfite, with potassium permanganate/oxalic acid preferred. In the case of using a redox initiator, an oxidizing agent or a reducing agent may be fed to a polymerization vessel in advance, and the other may be continuously or intermittently added to start polymerization. For example, in the case of using potassium permanganate/oxalic acid, preferably, oxalic acid is fed to a polymerization vessel and potassium permanganate is continuously added thereto.

The polymerization initiator may be added in any amount and is added in an amount equal to or more than the amount that does not significantly decrease the polymerization rate (e.g., concentration of several parts per million relative to water) in one lot in an early stage of polymerization or intermittently or continuously. The upper limit thereof falls within a range where the reaction temperature is allowed to increase while the heat is removed owing to the polymerization reaction heat through the device surfaces. The upper limit more preferably falls within a range where the polymerization reaction heat can be removed through the device surfaces.

The aqueous medium is a reaction medium in which polymerization is allowed to occur, and means a liquid that contains water. The aqueous medium may be any medium that contains water, and may be one containing water and, for example, a fluorine-free organic solvent such as an alcohol, ether, or ketone and/or a fluorine-containing organic solvent having a boiling point of 40°C or lower.

In the polymerization, a known chain transfer agent, radical scavenger, or decomposing agent may be further added in accordance with the purposes to adjust the polymerization rate and the molecular weight.

Examples of the chain transfer agent include esters such as dimethyl malonate, diethyl malonate, methyl acetate, ethyl acetate, butyl acetate, and dimethyl succinate, as well as isopentane, methane, ethane, propane, methanol, isopropanol, acetone, various mercaptans, various halogenated hydrocarbons such as carbon tetrachloride, and cyclohexane.

The chain transfer agent to be used may be a bromine compound or an iodine compound. An example of a polymerization method using a bromine compound or an iodine compound is a method of performing polymerization of a fluoromonomer in an aqueous medium substantially in the absence of oxygen and in the presence of a bromine compound or an iodine compound (iodine transfer polymerization). Representative examples of the bromine compound or the iodine compound to be used include compounds represented by the formula:

R^{a}IₓBr_{y}

wherein x and y are each an integer of 0 to 2 and satisfy 1 ≤ x + y ≤ 2; and R^{a} is a C1-C16 saturated or unsaturated fluorohydrocarbon or chlorofluorohydrocarbon group, or a C1-C3 hydrocarbon group, each of which optionally contains an oxygen atom. Use of a bromine compound or an iodine compound allows iodine or bromine to be introduced into the polymer to serve as a crosslinking point.

Examples of the bromine compound or iodine compound include 1,3-diiodoperfluoropropane, 2-iodoperfluoropropane, 1,3-diiodo-2-chloroperfluoropropane, 1,4-diiodoperfluorobutane, 1,5-diiodo-2,4-dichloroperfluoropentane, 1,6-diiodoperfluorohexane, 1,8-diiodoperfluorooctane, 1,12-diiodoperfluorododecane, 1,16-diiodoperfluorohexadecane, diiodomethane, 1,2-diiodoethane, 1,3-diiodo-n-propane, CF₂Br₂, BrCF₂CF₂Br, CF₃CFBrCF₂Br, CFClBr₂, BrCF₂CFClBr, CFBrClCFClBr, BrCF₂CF₂CF₂Br, BrCF₂CFBrOCF₃, 1-bromo-2-iodoperfluoroethane, 1-bromo-3-iodoperfluoropropane, 1-bromo-4-iodoperfluorobutane, 2-bromo-3-iodoperfluorobutane, 3-bromo-4-iodoperfluorobutene-1, 2-bromo-4-iodoperfluorobutene-1, and a monoiodo- and monobromo-substitution product, diiodo- and monobromo-substitution product, and (2-iodoethyl)- and (2-bromoethyl)-substitution product of benzene. These compounds may be used alone or in any combination.

From the viewpoints of polymerization reactivity, crosslinkability, availability, and the like, preferably used among these are 1,4-diiodoperfluorobutane, 1,6-diiodoperfluorohexane, and 2-iodoperfluoropropane.

The amount of the chain transfer agent used is commonly 1 to 50000 ppm by mass, preferably 1 to 20000 ppm by mass relative to the total amount of the fluoromonomer fed.

The chain transfer agent may be added to the reaction vessel in one lot before the start of polymerization, may be added in one lot after the start of polymerization, may be added in multiple portions during polymerization, or may be added continuously during polymerization.

The polymerization initiator used may be a persulfate (e.g., ammonium persulfate) or an organic peroxide such as disuccinic peroxide or diglutaric peroxide alone or in the form of a mixture of these. Any of these may be used in combination with a reducing agent such as sodium sulfite to form a redox system. Further, during polymerization, a radical scavenger such as hydroquinone or catechol may be added or a decomposing agent for a peroxide such as ammonium sulfite may be added to adjust the radical concentration in the system.

In the polymerization, a fluoromonomer may be polymerized in an aqueous medium in the presence of the macromolecular compound to produce an aqueous dispersion of fluoropolymer particles and, in this aqueous dispersion of the fluoropolymer particles, the fluoromonomer may be seed-polymerized to the fluoropolymer particles, whereby a fluoropolymer may be obtained.

The polymerization is preferably such that a fluoromonomer is polymerized substantially in the absence of a fluorine-containing surfactant (except for a compound containing a functional group reactive in radical polymerization and a hydrophilic group). This production method can provide PTFE even without a fluorine-containing surfactant.

The phrase "substantially in the absence of a fluorine-containing surfactant" herein means that the amount of the fluorine-containing surfactant is 10 ppm by mass or less relative to the aqueous medium. The amount of the fluorine-containing surfactant relative to the aqueous medium is preferably 1 ppm by mass or less, more preferably 100 ppb by mass or less, still more preferably 10 ppb by mass or less, further preferably less than 10 ppb by mass, further preferably 1 ppb by mass or less, particularly preferably less than 1 ppb by mass.

Examples of the fluorine-containing surfactant include those described above as fluorine-containing surfactants that are preferably substantially not contained in the TFE-based polymer composition of the disclosure.

The polymerization can provide an aqueous dispersion containing the TFE-based polymer, the macromolecular compound, and the aqueous medium. The amount (solid concentration) of the TFE-based polymer in the aqueous dispersion is commonly 10 to 50% by mass, more preferably 15% by mass or more, while preferably 40% by mass or less, more preferably 35% by mass or less.

The aqueous dispersion may be additionally combined with the macromolecular compound.

The coagulation in the step (B) can be performed by a known method.

In the case of an aqueous dispersion of the TFE-based polymer, the coagulation is commonly performed by diluting with water the aqueous dispersion obtained by polymerization, such as polymer latex, to a polymer concentration of 10 to 25% by mass (preferably a polymer concentration of 10 to 20% by mass), optionally adjusting the pH to a neutral or alkaline pH, and stirring the dilution in a container equipped with a stirrer more vigorously than the stirring during the reaction. In the coagulation, stirring may be performed while adding a coagulant such as a water-soluble organic compound, e.g., methanol or acetone, an inorganic salt, e.g., potassium nitrate or ammonium carbonate, or an inorganic acid, e.g., hydrochloric acid, sulfuric acid, or nitric acid. The coagulation may be performed continuously using a device such as an inline mixer.

In the step (C), the drying is commonly performed by means such as vacuum, high frequency, or hot air, while the wet powder is kept in a less flowing state, preferably in a stationary state. Friction between powder particles, especially at high temperature, generally has an unfavorable effect on a fine powdery TFE-based polymer. This is because particles of this TFE-based polymer are easily fibrillated even by a small shearing force to lose their original stable particle structure.

To lower the extrusion pressure, the drying temperature is preferably 300°C or lower, more preferably 250°C or lower, still more preferably 230°C or lower, further preferably 210°C or lower, further preferably 190°C or lower, particularly preferably 170°C or lower. To achieve improved breaking strength, the drying temperature is preferably 10°C or higher, more preferably 100°C or higher, still more preferably 150°C or higher, further preferably 170°C or higher, further preferably 190°C or higher, particularly preferably 210°C or higher. To further increase the strength ratio, the drying temperature is preferably appropriately adjusted within this temperature range.

The step (C) preferably includes placing the wet powder obtained in the step (B) in a container with air permeability on the bottom and/or sides and heating the powder at a temperature of 130°C to 300°C for two hours or longer. Heat treatment under such extremely limited conditions can efficiently remove the fluorine-containing compound having a molecular weight of 1000 or less together with water, which enables the amounts of the fluorine-containing compound and water to fall within the above respective ranges.

To more efficiently remove water and the fluorine-containing compound, the temperature of the heat treatment in the step (C) is preferably 140°C or higher, more preferably 150°C or higher, still more preferably 160°C or higher, further preferably 180°C or higher, still more preferably 200°C or higher, particularly preferably 220°C or higher, while preferably 280°C or lower, more preferably 250°C or lower.

To more efficiently remove water and the fluorine-containing compound, the duration of the heat treatment in the step (C) is preferably 5 hours or longer, more preferably 10 hours or longer, still more preferably 15 hours or longer. The upper limit thereof is preferably, but not limited to, 100 hours, more preferably 50 hours, still more preferably 30 hours, for example.

To more efficiently remove water and the fluorine-containing compound, the wind speed in the step (C) is preferably 0.01 m/s or higher, more preferably 0.03 m/s or higher, still more preferably 0.05 m/s or higher, further preferably 0.1 m/s or higher. To reduce or prevent powder scattering, the wind speed is preferably 50 m/s or lower, more preferably 30 m/s or lower, still more preferably 10 m/s or lower.

The heat treatment in the step (C) may be performed using an electric furnace or a steam furnace. For example, the heat treatment may be performed with an electric furnace such as a co-flow box electric furnace, a ventilated box electric furnace, a ventilated conveyor electric furnace, a band electric furnace, a radiant conveyor electric furnace, a fluidized bed electric furnace, a vacuum electric furnace, a stirring electric furnace, a convection electric furnace, or a hot air circulating electric furnace, or a steam furnace corresponding to any of the foregoing electric furnaces (a device of the type defined by replacing the "electric furnace" in the device name of the foregoing electric furnace with "steam furnace"). To more efficiently remove water, preferred are a co-flow box electric furnace, a ventilated box electric furnace, a ventilated conveyor electric furnace, a band electric furnace, a fluidized bed electric furnace, a hot air circulating electric furnace, and steam furnaces corresponding to the forgoing furnaces (devices of the types determined by replacing the "electric furnace" in the device names of the foregoing electric furnaces with "steam furnace").

To more efficiently remove water and the fluorine-containing compound, the heat treatment in the step (C) is preferably such that the wet powder is placed in a container with air permeability on the bottom and/or sides. The container with air permeability on the bottom and/or sides may be any container capable of withstanding the heat treatment temperature, and is preferably made of metal such as stainless steel.

The container with air permeability on the bottom and/or sides is preferably a tray (vat) having air permeability on the bottom and/or sides, more preferably a tray (mesh tray) having the bottom and/or sides made of mesh.

The mesh is preferably either a woven net or perforated metal.

The opening of the mesh is preferably 2000 µm or smaller (ASTM standard mesh No. 10 or higher), more preferably 595 µm or smaller (mesh No. 30 or higher), still more preferably 297 µm or smaller (mesh No. 50 or higher), further preferably 177 µm or smaller (mesh No. 80 or higher), further more preferably 149 µm or smaller (mesh No. 100 or higher), particularly preferably 74 µm or smaller (mesh No. 200 or higher). The opening is also preferably 25 µm or greater (mesh No. 500 or lower).

In the case where the mesh is a woven net, the woven net may be, for example, a plain-woven mesh, a twilled-woven mesh, a plain dutch-woven mesh, or a twilled dutch-woven mesh.

In the case where the mesh is a perforated metal, the porosity is preferably 10% or higher, more preferably 20% or higher, still more preferably 30% or higher. The porosity is also preferably 95% or lower.

To more efficiently remove water and the fluorine-containing compound, the amount of the wet powder placed in the step (C) is preferably 10 g/cm² or less, more preferably 8 g/cm² or less, still more preferably 5 g/cm² or less, particularly preferably 3 g/cm² or less, while preferably 0.01 g/cm² or more, more preferably 0.05 g/cm² or more, still more preferably 0.1 g/cm² or more.

To more efficiently remove water and the fluorine-containing compound, the water content of the wet powder to be heated in the step (C) is preferably 10% by mass or higher, more preferably 20% by mass or higher, still more preferably 30% by mass or higher, while preferably 150% by mass or lower, more preferably 100% by mass or lower of the wet powder.

To achieve excellent strength and flexibility without a support, the electrochemical device mixture of the disclosure is preferably in the form of a self-supporting film.

The self-supporting film herein means a film that can maintain its film shape by itself without a support such as a base. The self-supporting film is a film that is handleable alone, and is different from a film (supported film) formed on a support by vapor deposition, for example.

The self-supporting film may be bonded to or stacked on a base by an appropriate bonding technique such as adhesion or may be supported by a support in accordance with the application or mode of use thereof.

Whether the film is a self-supporting film or not is determined by the following method.

A film having a thickness of 10 µm or greater and 1000 µm or smaller is cut with a cutter to provide a piece having a size of 10 x 10 cm, and the center of gravity of this piece is picked with tweezers (PTS07, available from Engineer Inc.). When no crack or break occurs or no fold occurs, the film is determined as a self-supporting film.

The mixture of the disclosure is used in an electrochemical device such as a battery or a capacitor.

Examples of the battery include secondary batteries such as a lithium-ion battery.

The capacitor is preferably, but not limited to, an electrochemical capacitor. Examples of the electrochemical capacitor include an electric double layer capacitor, a hybrid capacitor, and a redox capacitor. Examples of the hybrid capacitor include a sodium ion capacitor, a lithium ion capacitor, and a magnesium ion capacitor. Particularly preferred among these is an electric double layer capacitor.

The electrochemical device mixture of the disclosure is preferably used in a battery, more preferably used in a secondary battery. In the case where the electrochemical device mixture is used in a secondary battery, it may be used for an electrode of a secondary battery using an electrolyte solution (electrolyte solution-containing secondary battery), for an electrode of a solid-state secondary battery, or for a solid electrolyte layer of a solid-state secondary battery.

The solid-state secondary battery herein is a secondary battery containing a solid electrolyte, and may be a semi-solid-state secondary battery containing a solid electrolyte and a liquid component as electrolytes, or an all-solid-state secondary battery containing a solid electrolyte alone as an electrolyte.

In the case where the secondary battery mixture is used for an electrode of an electrolyte solution-containing secondary battery, it commonly contains an electrode active material.

In the case where the secondary battery mixture is used for an electrode of a solid-state secondary battery, it commonly contains an electrode active material and a solid electrolyte.

In the case where the secondary battery mixture is used for a solid electrolyte layer of a solid-state secondary battery, it commonly contains a solid electrolyte.

Examples of the electrode active material include a positive electrode active material and a negative electrode active material.

The positive electrode active material may be any material that can electrochemically occlude and release alkali metal ions, and is preferably, for example, a material containing an alkali metal and at least one transition metal. Specific examples thereof include an alkali metal-containing transition metal complex oxide and an alkali metal-containing transition metal phosphate compound. Particularly preferred among these positive electrode active materials is an alkali metal-containing transition metal complex oxide which produces high voltage. Examples of the alkali metal ions include lithium ions, sodium ions, and potassium ions. In a preferred embodiment, the alkali metal ions may be lithium ions. In other words, in this embodiment, the alkali metal ion secondary battery is a lithium-ion secondary battery.

Examples of the alkali metal-containing transition metal complex oxide include:
an alkali metal-manganese spinel complex oxide (e.g., lithium-manganese spinel complex oxide) represented by:
formula: MₐMn_{2-b}M¹_{b}O₄

   wherein M includes at least one metal selected from the group consisting of Li, Na, and K; 0.9 ≤ a; 0 ≤ b ≤ 1.5; and M¹ includes at least one metal selected from the group consisting of Fe, Co, Ni, Cu, Zn, Al, Sn, Cr, V, Ti, Mg, Ca, Sr, B, Ga, In, Si, and Ge;
an alkali metal-nickel complex oxide (e.g., lithium-nickel complex oxide) represented by:
formula: MNi_{1-c}M²_{c}O₂

   wherein M includes at least one metal selected from the group consisting of Li, Na, and K; 0 ≤ c ≤ 0.5; and M² includes at least one metal selected from the group consisting of Fe, Co, Mn, Cu, Zn, Al, Sn, Cr, V, Ti, Mg, Ca, Sr, B, Ga, In, Si, and Ge; and
an alkali metal-cobalt complex oxide (e.g., lithium-cobalt complex oxide) represented by:

   formula: MCo_{1-d}M³_{d}O₂

   wherein M includes at least one metal selected from the group consisting of Li, Na, and K; 0 ≤ d ≤ 0.5; and M³ includes at least one metal selected from the group consisting of Fe, Ni, Mn, Cu, Zn, Al, Sn, Cr, V, Ti, Mg, Ca, Sr, B, Ga, In, Si, and Ge.

In the above formulas, M is preferably a metal selected from the group consisting of Li, Na, and K, more preferably Li or Na, still more preferably Li.

To provide a high-energy-density, high-output secondary battery, preferred among these are MCoO₂, MMnO₂, MNiO₂, MMn₂O₄, MNi_{0.8}Co_{0.15}Al_{0.05}O₂, and MNi_{1/3}Co_{1/3}Mn_{1/3}O₂, for example, and preferred is a compound represented by the following formula (3):

MNiₕCoᵢMnⱼM⁵ₖO₂ (3)

wherein M includes at least one metal selected from the group consisting of Li, Na, and K; M⁵ includes at least one selected from the group consisting of Fe, Cu, Zn, Al, Sn, Cr, V, Ti, Mg, Ca, Sr, B, Ga, In, Si, and Ge; and (h + i + j + k) = 1.0, 0 ≤ h ≤ 1.0, 0 ≤ i ≤ 1.0, 0 ≤ j ≤ 1.5, and 0 ≤ k ≤ 0.2.

Examples of the alkali metal-containing transition metal phosphate compound include a compound represented by the following formula (4):

MₑM⁴_{f}(PO₄)_{g} (4)

wherein M includes at least one metal selected from the group consisting of Li, Na, and K; M⁴ includes at least one selected from the group consisting of V, Ti, Cr, Mn, Fe, Co, Ni, and Cu; and 0.5 ≤ e ≤ 3, 1 ≤ f ≤ 2, and 1 ≤ g ≤ 3. In the above formula, M is preferably a metal selected from the group consisting of Li, Na, and K, more preferably Li or Na, still more preferably Li. In other words, the alkali metal-containing transition metal phosphate compound is preferably a lithium-containing transition metal phosphate compound.

The transition metal of the lithium-containing transition metal phosphate compound is preferably V, Ti, Cr, Mn, Fe, Co, Ni, Cu, or the like. Specific examples thereof include iron phosphates such as LiFePO₄, Li₃Fe₂(PO₄)₃, and LiFeP₂O₇, cobalt phosphates such as LiCoPO₄, and those obtained by replacing any of transition metal atoms as main components of these lithium transition metal phosphate compounds with another element such as Al, Ti, V, Cr, Mn, Fe, Co, Li, Ni, Cu, Zn, Mg, Ga, Zr, Nb, or Si. The lithium-containing transition metal phosphate compound preferably has an olivine structure.

An example of a different positive electrode active material is a lithium-nickel complex oxide. The lithium-nickel complex oxide is preferably a positive electrode active material represented by the following formula (5):

Li_{y}Ni₁₋ₓMₓO₂ (5)

wherein x satisfies 0.01 ≤ x ≤ 0.7; y satisfies 0.9 ≤ y ≤ 2.0; and M is a metal atom (other than Li and Ni).

Other examples of the positive electrode active material include MFePO₄, MNi_{0.8}Co_{0.2}O₂, M_{1.2}Fe_{0.4}Mn_{0.4}O₂, MNi_{0.5}Mn_{1.5}O₂, MV₃O₆, and M₂MnO₃. In particular, a positive electrode active material such as M₂MnO₃ or MNi_{0.5}Mn_{1.5}O₂ is preferred because the crystal structure thereof does not collapse even when the secondary battery is operated at a voltage exceeding 4.4 V or at a voltage of 4.6 V or higher. An electrochemical device such as a secondary battery containing a positive electrode material including any of the positive electrode active materials mentioned above is preferred because the remaining capacity thereof is less likely to decrease or the resistance increase thereof is less likely to change even after high-temperature storage and the battery performance does not deteriorate even when the device is operated at high voltage.

Another example of the positive electrode active material is a solid solution material of M₂MnO₃ and MM⁶O₂ wherein M includes at least one metal selected from the group consisting of Li, Na, and K; and M⁶ is a transition metal such as Co, Ni, Mn, or Fe.

An example of the solid solution material is an alkali metal manganese oxide represented by the formula Mx [Mn_{(1-y)}M⁷_{y}]O_{z}. In the formula, M includes at least one metal selected from the group consisting of Li, Na, and K; and M⁷ includes at least one metal element other than M and Mn and includes, for example, one or two or more elements selected from the group consisting of Co, Ni, Fe, Ti, Mo, W, Cr, Zr, and Sn. The values of x, y, and z in the formula are within the ranges of 1 < x < 2, 0 ≤ y < 1, and 1.5 < z < 3, respectively. In particular, a manganese-containing solid solution material in which LiNiO₂ or LiCoO₂ is dissolved in a Li₂MnO₃ base such as Li_{1.2}Mn_{0.5}Co_{0.14}Ni_{0.14}O₂ is preferred because it can lead to an alkali metal ion secondary battery having a high energy density.

Mixing lithium phosphate into the positive electrode active material is preferred to improve the continuous charge characteristics. Lithium phosphate may be used in any manner, and is preferably used in admixture with the positive electrode active material. The lower limit of the amount of lithium phosphate used relative to the total amount of the positive electrode active material and lithium phosphate is preferably 0.1% by mass or more, more preferably 0.3% by mass or more, still more preferably 0.5% by mass or more, while the upper limit thereof is preferably 10% by mass or less, more preferably 8% by mass or less, still more preferably 5% by mass or less.

The positive electrode active material used may be one having a surface to which a substance having a composition different from that of the positive electrode active material is attached. Examples of the surface-attached substance include oxides such as aluminum oxide, silicon oxide, titanium oxide, zirconium oxide, magnesium oxide, calcium oxide, boron oxide, antimony oxide, and bismuth oxide; sulfates such as lithium sulfate, sodium sulfate, potassium sulfate, magnesium sulfate, calcium sulfate, and aluminum sulfate; carbonates such as lithium carbonate, calcium carbonate, and magnesium carbonate; and carbon.

These surface-attached substances may be attached to a surface of the positive electrode active material by, for example, a method of dissolving or suspending the substance in a solvent, impregnating the positive electrode active material with the solution or suspension, and drying the impregnated material; a method of dissolving or suspending a precursor of the substance in a solvent, impregnating the positive electrode active material with the solution or suspension, and heating the material and the precursor to cause a reaction therebetween; or a method of adding the substance to a precursor of the positive electrode active material and simultaneously sintering the substance and the precursor. In the case of attaching carbon, for example, a carbonaceous material in the form of activated carbon may be mechanically attached to the surface afterward.

The lower limit of the amount of the surface-attached substance, in terms of the mass relative to the amount of the positive electrode active material, is preferably 0.1 ppm or more, more preferably 1 ppm or more, still more preferably 10 ppm or more, while the upper limit thereof is preferably 20% or less, more preferably 10% or less, still more preferably 5% or less. The surface-attached substance can reduce oxidation of the electrolyte on the surface of the positive electrode active material and can thereby improve the battery life. Too small an amount of the substance may fail to sufficiently provide this effect. Too large an amount thereof may hinder the entrance and exit of lithium ions, increasing the resistance.

Particles of the positive electrode active material may have any shape conventionally used, such as a bulky shape, a polyhedral shape, a spherical shape, an ellipsoidal shape, a plate shape, a needle shape, or a pillar shape. The primary particles may agglomerate to form secondary particles.

The positive electrode active material has a tap density of preferably 0.5 g/cm³ or higher, more preferably 0.8 g/cm³ or higher, still more preferably 1.0 g/cm³ or higher. The positive electrode active material having a tap density below the lower limit may cause an increased amount of a dispersion medium required and increased amounts of a conductive material and a binder required in formation of the positive electrode active material layer, as well as a limited packing fraction of the positive electrode active material in the positive electrode active material layer, resulting in a limited battery capacity. Using a complex oxide powder having a high tap density enables formation of a high-density positive electrode active material layer. The tap density is commonly preferably as high as possible with no upper limit. Still, too high a tap density may be a rate-determining factor of diffusion of lithium ions in the positive electrode active material layer through the medium of the electrolyte, easily impairing the load characteristics. Thus, the upper limit is preferably 4.0 g/cm³ or lower, more preferably 3.7 g/cm³ or lower, still more preferably 3.5 g/cm³ or lower.

The tap density is determined as the powder packing density (tap density) g/cm³ when 5 to 10 g of the positive electrode active material powder is packed into a 10-ml glass graduated cylinder and the cylinder is tapped 200 times with a stroke of about 20 mm.

The particles of the positive electrode active material have a median size d50 (or a secondary particle size in the case where the primary particles agglomerate to form secondary particles) of preferably 0.3 µm or greater, more preferably 0.5 µm or greater, still more preferably 0.8 µm or greater, most preferably 1.0 µm or greater, while preferably 30 µm or smaller, more preferably 27 µm or smaller, still more preferably 25 µm or smaller, most preferably 22 µm or smaller. The particles having a median size below the lower limit may fail to provide a product with a high tap density. The particles having a median size greater than the upper limit may cause prolonged diffusion of lithium in the particles, impairing the battery performance. Mixing two or more positive electrode active materials having different median sizes d50 can further improve the easiness of packing in formation of a positive electrode.

The median size d50 is determined using a known laser diffraction/scattering particle size distribution analyzer. In the case of using LA-920 available from Horiba, Ltd. as the particle size distribution analyzer, the dispersion medium used in the measurement is a 0.1% by mass sodium hexametaphosphate aqueous solution and the measurement refractive index is set to 1.24 after 5-minute ultrasonic dispersion.

In the case where the primary particles agglomerate to form secondary particles, the average primary particle size of the positive electrode active material is preferably 0.05 µm or greater, more preferably 0.1 µm or greater, still more preferably 0.2 µm or greater. The upper limit thereof is preferably 5 µm or smaller, more preferably 4 µm or smaller, still more preferably 3 µm or smaller, most preferably 2 µm or smaller. The primary particles having an average primary particle size greater than the upper limit may have difficulty in forming spherical secondary particles, adversely affecting the powder packing, or may have a greatly reduced specific surface area, highly possibly impairing the battery performance such as output characteristics. In contrast, the primary particles having an average primary particle size below the lower limit may commonly be insufficiently grown crystals, causing poor charge and discharge reversibility, for example.

The average primary particle size is measured by scanning electron microscopic (SEM) observation. Specifically, the average primary particle size is determined as follows. A photograph at a magnification of 10000x is first taken. Any 50 primary particles are selected and the maximum length between the left and right boundary lines of each primary particle is measured along the horizontal line. Then, the average value of the maximum lengths is calculated, which is defined as the average primary particle size.

The positive electrode active material has a BET specific surface area of preferably 0.1 m²/g or larger, more preferably 0.2 m²/g or larger, still more preferably 0.3 m²/g or larger. The upper limit thereof is preferably 50 m²/g or smaller, more preferably 40 m²/g or smaller, still more preferably 30 m²/g or smaller. The positive electrode active material having a BET specific surface area smaller than the above range may easily impair the battery performance. The positive electrode active material having a BET specific surface area larger than the above range may less easily have an increased tap density, easily causing a difficulty in processing the material in formation of the positive electrode active material layer.

The BET specific surface area is defined by a value determined by single point BET nitrogen adsorption utilizing a gas flow method using a surface area analyzer (e.g., fully automatic surface area measurement device, available from Ohkura Riken Co., Ltd.), a sample pre-dried in nitrogen stream at 150°C for 30 minutes, and a nitrogen-helium gas mixture with the nitrogen pressure relative to the atmospheric pressure being accurately adjusted to 0.3.

In the case where the electrochemical device of the disclosure is used as a large-size lithium-ion secondary battery for hybrid vehicles or distributed generation, it needs to achieve high output. Thus, the particles of the positive electrode active material preferably mainly composed of secondary particles. The particles of the positive electrode active material preferably include 0.5 to 7.0% by volume of fine particles having an average secondary particle size of 40 µm or smaller and having an average primary particle size of 1 µm or smaller. The presence of fine particles having an average primary particle size of 1 µm or smaller can enlarge the contact area with the electrolyte solution and enables more rapid diffusion of lithium ions between the electrode mixture and the electrolyte, resulting in improved output performance of a battery.

The positive electrode active material may be produced by any common method of producing an inorganic compound. In particular, a spherical or ellipsoidal active material can be produced by various methods. For example, a material substance of transition metal is dissolved or crushed and dispersed in a solvent such as water, and the pH of the solution or dispersion is adjusted under stirring to form a spherical precursor. The precursor is recovered and, if necessary, dried. Then, a Li source such as LiOH, Li₂CO₃, or LiNO₃ is added thereto and the mixture is sintered at high temperature, thereby providing an active material.

In production of a positive electrode, one of the aforementioned positive electrode active materials may be used alone or two or more thereof having different compositions may be used in any combination at any ratio. Preferred examples of the combination in this case include a combination of LiCoO₂ with a ternary system such as LiNi_{0.33}Co_{0.33}Mn_{0.33}O₂, a combination of LiCoO₂ with either LiMn₂O₄ or LiMn₂O₄ in which one or more Mn atoms are replaced by a different transition metal, and a combination of LiFePO₄ with either LiCoO₂ or LiCoO₂ in which one or more Co atoms are replaced by a different transition metal.

To achieve a high battery capacity, the amount of the positive electrode active material is preferably 50 to 99.5% by mass, more preferably 80 to 99% by mass of the positive electrode mixture. The amount thereof in the positive electrode active material layer is preferably 80% by mass or more, more preferably 82% by mass or more, particularly preferably 84% by mass or more. The upper limit thereof is preferably 99% by mass or less, more preferably 98% by mass or less. Too small an amount of the positive electrode active material in the positive electrode active material layer may cause an insufficient electric capacity. In contrast, too large an amount thereof may cause insufficient strength of the positive electrode.

The negative electrode active material may be, but is not limited to, any one selected from lithium metal; a material containing a carbonaceous material such as artificial graphite, graphite carbon fiber, resin sintered carbon, pyrolytic vapor grown carbon, coke, mesocarbon microbeads (MCMB), furfuryl alcohol resin sintered carbon, polyacene, pitch-based carbon fiber, vapor-grown carbon fiber, natural graphite, and non-graphitizable carbon; a silicon-containing compound such as silicon or a silicon alloy; and Li₄Ti₅O₁₂, or a mixture of two or more of these. Particularly suitably used among these is a material containing a carbonaceous material at least in part or a silicon-containing compound.

The negative electrode active material used in the disclosure preferably contains silicon as a constituent element. The presence of silicon as a constituent element enables production of a high-capacity battery.

Preferred materials containing silicon include silicon particles, particles having a structure in which fine silicon particles are dispersed in a silicon-based compound, silicon oxide particles represented by the formula SiOx (0.5 ≤ x ≤ 1.6), and a mixture of any of these. Use of any of these can lead to a negative electrode mixture for lithium-ion secondary batteries with higher initial charge and discharge efficiency, high capacity, and excellent cycle characteristics.

The term "silicon oxide" herein is a generic term for amorphous silicon oxides. Silicon oxides prior to disproportionation are represented by the formula SiOx (0.5 ≤ x ≤ 1.6) where x preferably satisfies 0.8 ≤ x < 1.6, more preferably 0.8 ≤ x < 1.3. This silicon oxide can be obtained, for example, by cooling and precipitating silicon monoxide gas produced by heating a mixture of silicon dioxide and metal silicon.

Particles having a structure in which fine silicon particles are dispersed in a silicon-based compound can be obtained by, for example, a method including sintering a mixture of fine silicon particles with a silicon-based compound, or by heating silicon oxide particles before disproportionation represented by the formula SiOx at a temperature of 400°C or higher, suitably at 800°C to 1100°C in an inert, non-oxidizing atmosphere such as an argon atmosphere to perform a disproportionation reaction. A material obtained by the latter method is particularly suitable because silicon microcrystals are uniformly dispersed. The disproportionation reaction as described above can adjust the size of silicon nanoparticles to 1 to 100 nm. The silicon oxide in the particles having a structure in which silicon nanoparticles are dispersed in silicon oxide is preferably silicon dioxide. Dispersion of silicon nanoparticles (crystals) in amorphous silicon oxide can be confirmed using a transmission electron microscope.

The physical properties of the silicon-containing particles can be appropriately determined in accordance with the target composite particles. For example, the average particle size is preferably 0.1 to 50 µm. The lower limit is more preferably 0.2 µm or greater, still more preferably 0.5 µm or greater. The upper limit is more preferably 30 µm or smaller, still more preferably 20 µm or smaller. The average particle size is expressed as a weight average particle size determined by particle size distribution analysis by a laser diffraction method.

The BET specific surface area is preferably 0.5 to 100 m²/g, more preferably 1 to 20 m²/g. A BET specific surface area of 0.5 m²/g or larger may lead to no risk of decreasing the adhesiveness of the negative electrode material when processed into the electrode and of impairing the battery characteristics. The particles having a BET specific surface area of 100 m²/g or smaller can lead to an increased proportion of silicon dioxide on the particle surface, which may eliminate the risk of battery capacity reduction upon use of the particles as a negative electrode material for a lithium-ion secondary battery.

Coating the silicon-containing particles with carbon imparts conductivity, thereby improving the battery characteristics. Examples of a method for imparting conductivity include a method including mixing the silicon-containing particles with conductive particles such as graphite particles, a method including coating the silicon-containing particle surface with a carbon film, and a method combining these two methods. Preferred is a method including coating the surface with a carbon film, and more preferred is a method including chemical vapor deposition (CVD) .

To increase the capacity of the electrode mixture obtained, the amount of the negative electrode active material in the electrode mixture is preferably 40% by mass or more, more preferably 50% by mass or more, particularly preferably 60% by mass or more. The upper limit thereof is preferably 99% by mass or less, more preferably 98% by mass or less.

The solid electrolyte may be a sulfide-based solid electrolyte or may be an oxide-based solid electrolyte. In particular, using a sulfide-based solid electrolyte can advantageously lead the mixture sheet to be flexible.

The sulfide-based solid electrolyte used may include, but is not limited to, any one selected from Li₂S-P₂S₅, Li₂S-P₂S₃, Li₂S-P₂S₃-P₂S₅, Li₂S-SiS₂, LiI-Li₂S-SiS₂, LiI-Li₂S-P₂S₅, LiI-Li₂S-P₂O₅, LiI-Li₃PO₄-P₂S₅, LiI-Li₂S-SiS₂-P₂S₅, Li₂S-SiS₂-Li₄SiO₄, Li₂S-SiS₂-Li₃PO₄, Li₃PS₄-Li₄GeS₄, Li_{3.4}P_{0.6}Si_{0.4}S₄, Li_{3.25}P_{0.25}Ge_{0.76}S₄, Li₄₋ₓGe₁₋ₓPₓS₄ (X = 0.6 to 0.8), Li_{4+y}Ge_{1-y}Ga_{y}S₄ (y = 0.2 to 0.3), LiPSCl, LiCl, Li_{7-x-2y}PS_{6-x-y}Clₓ (0.8 5 x ≤ 1.7, 0 < y ≤ -0.25x + 0.5), and Li₁₀SnP₂S₁₂, or a mixture of two or more thereof.

The sulfide-based solid electrolyte preferably contains lithium. A sulfide-based solid electrolyte containing lithium is used in a solid-state battery in which lithium ions are used as carriers, and is particularly preferred in that it can lead to an electrochemical device having a high energy density.

The oxide-based solid electrolyte is preferably a compound that contains an oxygen atom (O), that has conductivity of metal ions belonging to Group 1 or Group 2 of the Periodic Table, and that has electronically insulating properties.

Specific examples of the compound include LiₓₐLa_{ya}TiO₃ (xa = 0.3 to 0.7, ya = 0.3 to 0.7) (LLT), Li_{xb}La_{yb}Zr_{zb}M^{bb}_{mb}O_{nb} (wherein M^{bb} includes at least one or more elements of Al, Mg, Ca, Sr, V, Nb, Ta, Ti, Ge, In, and Sn; xb satisfies 5 5 xb ≤ 10; yb satisfies 1 ≤ yb ≤ 4; zb satisfies 1 5 zb ≤ 4; mb satisfies 0 ≤ mb ≤ 2; and nb satisfies 5 ≤ nb 5 20), Li_{xc}B_{yc}M^{cc}_{zc}O_{nc} (wherein M^{cc} includes at least one or more elements of C, S, Al, Si, Ga, Ge, In, and Sn; xc satisfies 0 ≤ xc ≤ 5; yc satisfies 0 5 yc ≤ 1; zc satisfies 0 ≤ zc 5 1; and nc satisfies 0 ≤ nc 5 6), Li_{xd}(Al, Ga)_{yd}(Ti, Ge)_{zd}Si_{ad}P_{md}O_{nd} (wherein 1 ≤ xd ≤ 3, 0 ≤ yd ≤ 2, 0 ≤ zd ≤ 2, 0 ≤ ad ≤ 2, 1 ≤ md ≤ 7, 3 ≤ nd ≤ 15), Li₍₃₋₂ₓₑ₎M^{ee}ₓₑD^{ee}O (wherein xe is the number of 0 or greater and 0.1 or smaller; M^{ee} represents a divalent metal atom; D^{ee} represents a halogen atom or a combination of two or more halogen atoms), Li_{xf}Si_{yf}O_{zf} (wherein 1 ≤ xf ≤ 5, 0 < yf 5 3, 1 ≤ zf ≤ 10), Li_{xg}S_{yg}O_{zg} (1 ≤ xg ≤ 3, 0 < yg ≤ 2, 1 ≤ zg 5 10), Li₃BO₃-Li₂SO₄, Li₂O-B₂O₃-P₂O₅, Li₂O-SiO₂, Li₆BaLa₂Ta₂O₁₂, Li₃PO_{(4-3/2w)}N_{w} (wherein w is w < 1), Li_{3.5}Zn_{0.25}GeO₄ having a LISICON (Lithium super ionic conductor) crystal structure, La_{0.51}Li_{0.34}TiO_{2.94} having a perovskite crystal structure, La_{0.55}Li_{0.35}TiO₃, LiTi₂P₃O₁₂ having a NASICON (Natrium super ionic conductor) crystal structure, Li_{1+xh+yh}(Al, Ga)ₓₕ(Ti, Ge) ₂₋ₓₕSi_{yh}P_{3-yh}O₁₂ (wherein 0 ≤ xh ≤ 1, 0 ≤ yh ≤ 1), and Li₇La₃Zr₂O₁₂ (LLZ) having a garnet crystal structure. Ceramic materials in which element substitution is performed for LLZ are also known. Examples thereof include Li_{6.24}La₃Zr₂Al_{0.24}O_{11.98} and Li_{6.25}Al_{0.25}La₃Zr₂O₁₂ in which partial element substitution using Al is performed for LLZ, Li_{6.6}La₃Zr_{1.6}Ta_{0.4}O₁₂ in which partial element substitution using Ta is performed for LLZ, and Li_{6.75}La₃Zr_{1.75}Nb_{0.25}O₁₂ in which partial element substitution using Nb is performed for LLZ. Other examples include LLZ-based ceramic materials in which element substitution using at least one of magnesium (Mg) or A (A includes at least one element selected from the group consisting of calcium (Ca), strontium (Sr), and barium (Ba)) is performed for LLZ. Phosphorus compounds containing Li, P, and O are also preferred. Examples thereof include lithium phosphate (Li₃PO₄), LiPON in which one or more oxygen atoms in lithium phosphate are replaced with nitrogen, and LiPOD¹ (wherein D¹ includes at least one selected from Ti, V, Cr, Mn, Fe, Co, Ni, Cu, Zr, Nb, Mo, Ru, Ag, Ta, W, Pt, Au, and the like). LiA¹ON (wherein A¹ includes at least one selected from Si, B, Ge, Al, C, Ga, and the like) can also be preferably used. Specific examples thereof include Li₂O-Al₂O₃-SiO₂-P₂O₅-TiO₂-GeO₂ and Li₂O-Al₂O₃-SiO₂-P₂O₅-TiO₂.

The oxide-based solid electrolyte preferably contains lithium. An oxide-based solid electrolyte containing lithium is used in a solid-state battery in which lithium ions are used as carriers, and is particularly preferred in that it can lead to an electrochemical device having a high energy density.

The oxide-based solid electrolyte is preferably an oxide having a crystal structure. An oxide having a crystal structure is particularly preferred in terms of good Li ion conductivity. The oxide having a crystal structure may be of perovskite type (e.g., La_{0.51}Li_{0.34}TiO_{2.94}), NASICON type (e.g., Li_{1.3}Al_{0.3}Ti_{1.7}(PO₄)₃), or garnet type (e.g., Li₇La₃Zr₂O₁₂ (LLZ)). Preferred among these is the NASICON type.

The oxide-based solid electrolyte has a volume average particle size of preferably, but not limited to, 0.01 µm or greater, more preferably 0.03 µm or greater. The upper limit thereof is preferably 100 µm or smaller, more preferably 50 µm or smaller. The average particle size of the oxide-based solid electrolyte particles is measured by the following procedure. A 1% by mass dispersion of the oxide-based solid electrolyte particles is prepared by dilution with water (or heptane in the case of a substance unstable in water) in a 20-mL sample bottle. The diluted dispersion sample is irradiated with 1-kHz ultrasonic waves for 10 minutes, and immediately thereafter used for the test. Data is acquired from this dispersion sample 50 times using a quartz cell for measurement at a temperature of 25°C with a laser diffraction/scattering particle size distribution analyzer LA-920 (available from Horiba, Ltd.), and the volume average particle size is determined. For other detailed conditions, JIS Z8828:2013 "Particle size analysis - Dynamic light scattering" is referred as necessary. Five samples are prepared for each level and the average value is used.

The electrochemical device mixture of the disclosure preferably has a thickness of 300 µm or smaller, more preferably 250 µm or smaller, still more preferably 200 µm or smaller, further preferably 180 µm or smaller, particularly preferably 150 µm or smaller, while preferably 10 µm or greater, more preferably 15 µm or greater, still more preferably 20 µm or greater.

The electrochemical device mixture of the disclosure, when used as an electrode mixture, preferably further contains a conductive aid.

The conductive aid used may be any known conductive material. Specific examples thereof include metal materials such as copper and nickel, and carbon materials such as graphite, e.g., natural graphite and artificial graphite, carbon black, e.g., acetylene black, Ketjen black, channel black, furnace black, lamp black, and thermal black, and amorphous carbon, e.g., needle coke, carbon nanotube, fullerene, and VGCF. One of these may be used alone or two or more thereof may be used in any combination at any ratio.

The conductive aid is used in an amount of commonly 0.01% by mass or more, preferably 0.1% by mass or more, more preferably 1% by mass or more, while commonly 50% by mass or less, preferably 30% by mass or less, more preferably 15% by mass or less in the electrode mixture. The conductive aid in an amount less than this range may cause insufficient conductivity. In contrast, the conductive aid in an amount more than this range may cause a low battery capacity.

The electrochemical device mixture of the disclosure, when used as an electrode mixture, may further contain a thermoplastic resin. Examples of the thermoplastic resin include polyvinylidene fluoride, polypropylene, polyethylene, polystyrene, polyethylene terephthalate, and polyethylene oxide. One of these may be used alone, or two or more of these may be used in any combination at any ratio.

The proportion of the thermoplastic resin relative to the electrode active material is commonly 0.01% by mass or more, preferably 0.05% by mass or more, more preferably 0.10% by mass or more, while commonly 3.0% by mass or less, preferably 2.5% by mass or less, more preferably 2.0% by mass or less. Adding a thermoplastic resin can improve the mechanical strength of the electrode. The thermoplastic resin in a proportion higher than the above range may lower the proportion of the electrode active material in the electrode mixture, resulting in issues such as a low capacity of the battery and a high resistance between the active materials.

The electrochemical device mixture of the disclosure can suitably be used as a battery mixture, and can more suitably be used as a secondary battery mixture. In particular, the electrochemical device mixture of the disclosure is suitable for a lithium-ion secondary battery. The mixture of the disclosure, when used for a secondary battery, is commonly used in the form of sheet.

The disclosure also provides an electrochemical device mixture sheet containing the electrochemical device mixture of the disclosure.

The electrochemical device (preferably, secondary battery) mixture sheet of the disclosure preferably has a thickness of 300 µm or smaller, more preferably 250 µm or smaller, still more preferably 200 µm or smaller, further preferably 180 µm or smaller, particularly preferably 150 µm or smaller, while preferably 10 µm or greater, more preferably 15 µm or greater, still more preferably 20 µm or greater.

The electrochemical device mixture and electrochemical device mixture sheet of the disclosure can be produced using powdery components such as an electrode active material and a solid electrolyte and a binder (the TFE-based polymer composition).

The following describes an example of a specific method of producing a mixture sheet. The mixture sheet is obtainable by a production method including: (1) mixing a powdery component containing an electrode active material and/or a solid electrolyte, a binder, and optionally a conductive aid to prepare a raw material composition containing these; (2) molding the raw material composition obtained in the step (1) into a bulky shape; and (3) rolling the bulky raw material composition obtained in the step (2) into a sheet.

The raw material composition mixed in the step (1) is in a state where materials such as the powdery component and the binder are simply mixed and does not have a fixed shape. Specific examples of a mixing method include mixing with the use of a W-shaped mixer, a V-shaped mixer, a drum mixer, a ribbon mixer, a conical screw mixer, a single screw kneader, a twin-screw kneader, a mix muller, a stirring mixer, or a planetary mixer.

For the binder mixing conditions in the step (1), the rotational speed is preferably 3000 rpm or less. The rotational speed is preferably 10 rpm or more, more preferably 15 rpm or more, still more preferably 20 rpm or more, while preferably 2000 rpm or less, more preferably 1500 rpm or less, still more preferably 1000 rpm or less. Mixing at a rotational speed below this range may take a long time, affecting the productivity. Mixing at a rotational speed above this range may cause excessive fibrillation, resulting in a mixture sheet having poor strength and poor flexibility.

Molding the raw material composition into a bulky shape in the step (2) means forming the raw material composition into a single mass. Specific examples of a method of molding the raw material composition into a bulky shape include extrusion molding and press molding. The term "bulky" does not specify the shape and means any state of single mass, including a rod shape, a sheet shape, a spherical shape, a cubic shape, and the like.

A specific example of a rolling method in the step (3) is a method of rolling the bulky raw material composition using, for example, a roller press, a flat plate press, or a calender roller.

The step (3) is also preferably followed by a step (4) of applying a larger load to the resulting rolled sheet to form a thinner sheet-shaped product. Repeating the step (4) is also preferred. Thinning the rolled sheet not in one time but in steps as described can lead to better flexibility. The number of performing the step (4) is preferably twice or more and 10 times or less, more preferably 3 times or more and 9 times or less. A specific example of a rolling method is a method of rotating two or a plurality of rollers and passing the rolled sheet therebetween to provide a thinner sheet-shaped product.

To control the fibrillation size, the step (3) or the step (4) is also preferably followed by a step (5) of coarsely crushing the rolled sheet, again forming the coarsely crushed product into a bulky product, and then rolling the bulky product into a sheet-shaped product. Repeating the step (5) is also preferred. The number of performing the step (5) is preferably once or more and 12 times or less, more preferably twice or more and 11 times or less.

Specific examples of a method of coarsely crushing the rolled sheet and again forming the coarsely crushed product into a bulky product in the step (5) include a method of folding the sheet, a method of forming the sheet into a rod- or a thin sheet-shaped product, and a method of forming the sheet into chips. The term "coarsely crushing" herein means changing the form of the rolled sheet obtained in the step (3) or step (4) into a different form so as to roll the product into a sheet-shaped product in the subsequent step, and encompasses simply folding the rolled sheet.

The step (5) may be followed by the step (4), and may be repeated. In any of the steps (2), (3), (4), and (5), uniaxial stretching or biaxial stretching may be performed. The fibrillation size can also be controlled in accordance with the degree of coarse crushing in the step (5).

In the step (3), (4), or (5), the rolling percentage is preferably 10% or higher, more preferably 20% or higher, while preferably 80% or lower, more preferably 65% or lower, still more preferably 50% or lower. A rolling percentage below this range may cause an increase in the number of rolling operations and a longer duration, affecting the productivity. A rolling percentage above the range may cause excessive fibrillation, resulting in an electrode mixture sheet having poor strength and poor flexibility. The rolling percentage herein refers to the reduction in thickness of a sample after rolling processing relative to that before the processing. The sample before rolling may be a bulky raw material composition or may be a sheet-shaped raw material composition. The thickness of a sample refers to the thickness in the direction along which a load is applied during rolling.

The mixture sheet can also suitably be produced by a production method including:
a step (a) of mixing a powdery component and a binder to prepare a mixture; and
a step (b) of calendering or extrusion-molding the mixture to form a sheet,
the mixing in the step (a) including:
   (a1) homogenizing the powdery component and the binder into powder; and
   (a2) mixing the powdery raw material mixture obtained in the step (a1) to prepare the mixture.

For example, PTFE has two transition temperatures at about 19°C and about 30°C. At lower than 19°C, PTFE can be easily mixed while maintaining its shape. In contrast, at higher than 19°C, the PTFE particulate structure loosens and becomes more sensitive to mechanical shearing. At temperatures higher than 30°C, more significant fibrillation occurs.

Accordingly, the homogenizing in the step (a1) is preferably performed at 19°C or lower, preferably at a temperature of 0°C to 19°C.

In other words, such a step (a1) is preferably performed such that the materials are mixed and thereby homogenized while fibrillation is reduced.

The mixing in the subsequent step (a2) is preferably performed at a temperature of 30°C or higher to promote fibrillation.

The step (a2) is preferably performed at 30°C to 150°C, more preferably 35°C to 120°C, still more preferably 40°C to 80°C.

In an embodiment, the calendering or extrusion in the step (b) is performed at a temperature from 30°C to 150°C, preferably from 35°C to 120°C, more preferably from 40°C to 100°C.

The mixing in the step (a) is preferably performed with shearing force applied.

Specific examples of a mixing method include mixing with the use of a W-shaped mixer, a V-shaped mixer, a drum mixer, a ribbon mixer, a conical screw mixer, a single screw kneader, a twin-screw kneader, a mix muller, a stirring mixer, a planetary mixer, a Henschel mixer, or a rapid mixer.

For the mixing conditions, the rotational speed and the mixing duration are set as appropriate. For example, the rotational speed is preferably 15000 rpm or less. The rotational speed is preferably 10 rpm or more, more preferably 50 rpm or more, still more preferably 100 rpm or more, while preferably 12000 rpm or less, more preferably 10000 rpm or less, still more preferably 8000 rpm or less. Mixing at a rotational speed below this range may take a long time, affecting the productivity. Mixing at a rotational speed above this range may cause excessive fibrillation, resulting in an electrode mixture sheet having poor strength.

The step (a1) is preferably performed at a weaker shearing force than that in the step (a2).

The step (a1) is preferably performed for a shorter duration than that in the step (a2).

In the step (a2), the raw material composition preferably contains no liquid solvent, but a small amount of lubricant may be used. In other words, the powdery raw material mixture obtained in the step (a1) may be combined with a lubricant, whereby paste may be prepared.

Examples of the lubricant include, but are not limited to, water, ether compounds, alcohols, ionic liquids, carbonates, aliphatic hydrocarbons (e.g., low polar solvents such as heptane and xylene), isoparaffinic hydrocarbon compounds, and petroleum distillates (e.g., gasoline (C4-C10), naphtha (C4-C11), kerosene/paraffin (C10-C16), and mixtures of any of these).

The lubricant has a water content of preferably 1000 ppm or less.

The lubricant having a water content of 1000 ppm or less is preferred to reduce deterioration of an electrochemical device. The water content is more preferably 500 ppm or less.

The lubricant, when used, is particularly preferably a low polar solvent such as butyl butyrate or an ether compound.

The amount of the lubricant, when used, is 5.0 to 35.0 parts by weight, preferably 10.0 to 30.0 parts by weight, more preferably 15.0 to 25.0 parts by weight relative to the total weight of the composition fed to the step (a1).

The raw material composition preferably contains substantially no liquid medium. In a conventional method for producing an electrode mixture, typically, a solvent containing a binder dissolved therein is used to prepare slurry containing an electrode mixture component in the form of powder dispersed therein, and the slurry is applied and dried to produce an electrode mixture sheet. In this case, a solvent to disperse or dissolve a binder is used. Still, solvents that can dissolve a binder resin commonly used in conventional cases are limited to specific solvents such as N-methyl pyrrolidone. These solvents are highly polar and requires a drying step, so that the use of these solvents leads to additional steps and cost. These solvents react with an electrolyte such as an electrolyte solution and a solid electrolyte to deteriorate the electrolyte and thus may cause poor battery performance due to residual components in preparation of slurry or after drying. In addition, low polar solvents such as heptane can dissolve very limited types of binder resin and have a low flash point, which may cause a difficulty in handling.

Not using a solvent but using a powdery binder containing less water in forming a mixture sheet can lead to a battery with less deterioration of an electrolyte. The above production method can provide a mixture sheet containing a binder having a fine fibrous structure and can reduce a burden on the production process owing to elimination of slurry preparation.

The step (b) includes calendering or extrusion. The calendering and extrusion can be performed by well-known methods. Thereby, the mixture can be formed into the shape of a mixture sheet.

The step (b) preferably includes (b1) forming the mixture obtained in the step (a) into a bulky mixture and (b2) calendering or extrusion-molding the bulky mixture.

Molding the mixture into a bulky shape means forming the mixture into a single mass.

Specific examples of a method of molding the mixture into a bulky shape include extrusion molding and press molding.

The term "bulky" does not specify the shape and means any state of single mass, including a rod shape, a sheet shape, a spherical shape, a cubic shape, and the like. The size of the mass is preferably such that the diameter or minimum side of the cross section is 10000 µm or greater. The size is more preferably 20000 µm or greater.

A specific example of a method of calendering or extrusion molding in the step (b2) is a method of rolling the electrode mixture using, for example, a roller press or a calender roller.

The step (b) is preferably performed at 30°C to 150°C. As described above, PTFE has a glass transition temperature around 30°C and is thus easily fibrillated at 30°C or higher. Accordingly, the step (b) is preferably performed at such temperatures.

The calendering or extrusion molding applies a shearing force, which fibrillates the PTFE and gives the shape.

The step (b) is also preferably followed by a step (c) of applying a larger load to the resulting rolled sheet to form a thinner sheet-shaped product. Repeating the step (c) is also preferred. Thinning the rolled sheet not in one time but in steps as described can lead to better flexibility.

The number of performing the step (c) is preferably twice or more and 10 times or less, more preferably 3 times or more and 9 times or less.

A specific example of a rolling method is a method of rotating two or a plurality of rollers and passing the rolled sheet therebetween to provide a thinner sheet-shaped product.

To control the sheet strength, the step (b) or the step (c) is also preferably followed by a step (d) of coarsely crushing the rolled sheet, again forming the coarsely crushed product into a bulky product, and then rolling the bulky product into a sheet-shaped product. Repeating the step (d) is also preferred. The number of performing the step (d) is preferably once or more and 12 times or less, more preferably twice or more and 11 times or less.

Specific examples of a method of coarsely crushing the rolled sheet and again forming the coarsely crushed product into a bulky product in the step (d) include a method of folding the rolled sheet, a method of forming the rolled sheet into a rod- or a thin sheet-shaped product, and a method of forming the rolled sheet into chips. The term "coarsely crushing" herein means changing the form of the rolled sheet obtained in the step (b) or step (c) into a different form so as to roll the product into a sheet-shaped product in the subsequent step, and encompasses simply folding the rolled sheet.

The step (d) may be followed by the step (c), and may be repeated.

In any of the steps (a), (b), (c), and (d), uniaxial stretching or biaxial stretching may be performed.

The sheet strength can also be controlled in accordance with the degree of coarse crushing in the step (d) .

In the step (b), (c), or (d), the rolling percentage is preferably 10% or higher, more preferably 20% or higher, while preferably 80% or lower, more preferably 65% or lower, still more preferably 50% or lower. A rolling percentage below this range may cause an increase in the number of rolling operations and a longer duration, affecting the productivity. A rolling percentage above the range may cause excessive fibrillation, resulting in an electrode mixture sheet having poor strength and poor flexibility.

The rolling percentage herein refers to the reduction in thickness of a sample after rolling processing relative to that before the processing. The sample before rolling may be a bulky material composition or may be a sheet-shaped material composition. The thickness of a sample refers to the thickness in the direction along which a load is applied during rolling.

The steps (c) and (d) are preferably performed at 30°C or higher, more preferably 60°C or higher. The steps (c) and (d) are preferably performed at 150°C or lower.

The mixture sheet may be used as an electrode mixture sheet for an electrochemical device. The electrode mixture sheet may be for either a negative electrode or a positive electrode. In particular, the electrode mixture sheet is suitable for a lithium-ion secondary battery.

The disclosure also provides an electrode including the aforementioned electrochemical device mixture sheet of the disclosure. The electrode preferably includes the electrochemical device mixture sheet of the disclosure and a current collector. The electrode of the disclosure has excellent strength and excellent flexibility.

The electrode of the disclosure may include the aforementioned electrochemical device mixture of the disclosure (preferably the mixture sheet) and a current collector.

The electrode of the disclosure may be a positive electrode or may be a negative electrode.

The positive electrode is preferably composed of a current collector and an electrode mixture sheet containing the positive electrode active material. Examples of the material of the current collector for a positive electrode include metal materials such as aluminum, titanium, tantalum, stainless steel, and nickel, and alloys of any of these; and carbon materials such as carbon cloth and carbon paper. Preferred is any metal material, especially aluminum or an alloy thereof.

In the case of a metal material, the current collector may be in the form of metal foil, metal cylinder, metal coil, metal plate, expanded metal, perforated metal, metal foam, or the like. In the case of a carbon material, it may be in the form of carbon plate, carbon film, carbon cylinder, or the like. Preferred among these is metal foil. The metal foil may be in the form of mesh, as appropriate. The metal foil may have any thickness, and the thickness is commonly 1 µm or greater, preferably 3 µm or greater, more preferably 5 µm or greater, while commonly 1 mm or smaller, preferably 100 µm or smaller, more preferably 50 µm or smaller. The metal foil having a thickness smaller than this range may have insufficient strength as a current collector. Conversely, the metal foil having a thickness greater than the above range may have poor handleability.

Covering the surface of the current collector with a conductive aid is also preferred to reduce the electric contact resistance between the current collector and the positive electrode active material layer. Examples of the conductive aid include carbon and noble metals such as gold, platinum, and silver.

The positive electrode may be produced by a common method. In an exemplary method, the electrode mixture sheet and the current collector are laminated via an adhesive, followed by vacuum drying.

The positive electrode mixture sheet has a density of preferably 2.80 g/cm³ or higher, more preferably 3.00 g/cm³ or higher, still more preferably 3.20 g/cm³ or higher, while preferably 3.80 g/cm³ or lower, more preferably 3.75 g/cm³ or lower, still more preferably 3.70 g/cm³ or lower. The positive electrode mixture sheet having a density higher than the above range may cause low permeability of an electrolyte solution toward the vicinity of the interface between the current collector and the active material and poor charge and discharge characteristics particularly at a high current density, failing to provide high output. The positive electrode mixture sheet having a density lower than the above range may cause poor conductivity between the active materials and increase the battery resistance, failing to provide high output.

The positive electrode may have any thickness. To achieve a high capacity and high output, the lower limit of the thickness of the mixture layer on one side of the current collector excluding the thickness of the metal foil of the current collector is preferably 10 µm or greater, more preferably 20 µm or greater, while preferably 500 µm or smaller, more preferably 450 µm or smaller.

The negative electrode is preferably composed of a current collector and an electrode mixture sheet containing the negative electrode active material. Examples of the material of the current collector for a negative electrode include metal materials such as copper, nickel, titanium, tantalum, and stainless steel, and alloys of any of these; and carbon materials such as carbon cloth and carbon paper. Preferred is any metal material, especially copper, nickel, or an alloy of any of these.

In the case of a metal material, the current collector may be in the form of metal foil, metal cylinder, metal coil, metal plate, expanded metal, perforated metal, metal foam, or the like. In the case of a carbon material, it may be in the form of carbon plate, carbon film, carbon cylinder, or the like. Preferred among these is metal foil. The metal foil may be in the form of mesh, as appropriate. The metal foil may have any thickness, and the thickness is commonly 1 µm or greater, preferably 3 µm or greater, more preferably 5 µm or greater, while commonly 1 mm or smaller, preferably 100 µm or smaller, more preferably 50 µm or smaller. The metal foil having a thickness smaller than this range may have insufficient strength as a current collector. Conversely, the metal foil having a thickness greater than the above range may have poor handleability.

The negative electrode may be produced by a common method. In an exemplary method, the electrode mixture sheet and the current collector are laminated via an adhesive, followed by vacuum drying.

The negative electrode mixture has a density of preferably 1.3 g/cm³ or higher, more preferably 1.4 g/cm³ or higher, still more preferably 1.5 g/cm³ or higher, while preferably 2.0 g/cm³ or lower, more preferably 1.9 g/cm³ or lower, still more preferably 1.8 g/cm³ or lower. The negative electrode mixture having a density higher than the above range may cause low permeability of an electrolyte solution toward the vicinity of the interface between the current collector and the active material and poor charge and discharge characteristics particularly at a high current density, failing to provide high output. The negative electrode mixture sheet having a density lower than the above range may cause poor conductivity between the active materials and increase the battery resistance, failing to provide high output.

The negative electrode may have any thickness. To achieve a high capacity and high output, the lower limit of the thickness of the mixture layer on one side of the current collector excluding the thickness of the metal foil of the current collector is preferably 10 µm or greater, more preferably 20 µm or greater, while preferably 500 µm or smaller, more preferably 450 µm or smaller.

The disclosure also provides an electrochemical device including the aforementioned electrode of the disclosure.

The electrochemical device of the disclosure may be a secondary battery containing an electrolyte solution or may be a solid-state secondary battery.

The secondary battery containing an electrolyte solution may be obtained by use of components used for a known secondary battery, such as an electrolyte solution and a separator. These will be described in detail below.

The electrolyte solution preferably used is a non-aqueous electrolyte solution. The non-aqueous electrolyte solution used may be a solution obtained by dissolving a known electrolyte salt in a known organic solvent for dissolving an electrolyte salt.

The organic solvent for dissolving an electrolyte salt used may include, but is not limited to, one or two or more of known hydrocarbon solvents such as propylene carbonate, ethylene carbonate, butylene carbonate, γ-butyrolactone, 1,2-dimethoxyethane, 1,2-diethoxyethane, dimethyl carbonate, diethyl carbonate, and ethyl methyl carbonate; and fluorine solvents such as fluoroethylene carbonate, fluoroether, and fluorinated carbonate.

Examples of the electrolyte salt include LiClO₄, LiAsF₆, LiBF₄, LiPF₆, LiN(SO₂CF₃)₂, and LiN(SO₂C₂F₅)₂. To achieve good cycle characteristics, particularly preferred is LiPF₆, LiBF₄, LiN(SO₂CF₃)₂, LiN(SO₂C₂F₅)₂, or a combination of any of these.

The electrolyte salt is at a concentration of preferably 0.8 mol/L or higher, more preferably 1.0 mol/L or higher. The upper limit is commonly 1.5 mol/L, though it depends on the organic solvent for dissolving an electrolyte salt used.

The secondary battery containing an electrolyte solution preferably further includes a separator. The separator may be formed from any known material and may have any known shape as long as the resulting separator is stable to the electrolyte solution and is excellent in a liquid-retaining ability. The separator is preferably in the form of a porous sheet or a nonwoven fabric that is formed from a material stable to the electrolyte solution, such as resin, glass fiber, or inorganic matter, and that has an excellent liquid-retaining ability.

Examples of the material of a resin or glass-fiber separator include polyolefins such as polyethylene and polypropylene, aromatic polyamide, polytetrafluoroethylene, polyether sulfone, and glass filters. One of these materials may be used alone or two or more thereof may be used in any combination at any ratio, for example, in the form of a polypropylene/polyethylene bilayer film or a polypropylene/polyethylene/polypropylene trilayer film. To achieve good permeability of the electrolyte solution and a good shut-down effect, the separator is preferably a porous sheet or a nonwoven fabric formed from a polyolefin such as polyethylene or polypropylene.

The separator may have any thickness, and the thickness is commonly 1 µm or greater, preferably 5 µm or greater, more preferably 8 µm or greater, while commonly 50 µm or smaller, preferably 40 µm or smaller, more preferably 30 µm or smaller. A separator thinner than the above range may have poor insulation and mechanical strength. A separator thicker than the above range may cause not only poor battery performance such as poor rate characteristics but also a low energy density of the whole electrolyte solution battery.

Examples of a material of the inorganic matter include oxides such as alumina and silicon dioxide, nitrides such as aluminum nitride and silicon nitride, and sulfates such as barium sulfate and calcium sulfate, each in the form of particles or fibers.

The separator used may be in the form of a thin film such as a nonwoven fabric, a woven fabric, or a microporous film. The thin film used preferably has a pore size of 0.01 to 1 µm and a thickness of 5 to 50 µm. Instead of the above separate thin film, the separator used may have a structure in which a composite porous layer containing particles of the above inorganic matter is disposed on a surface of one or each of the positive and negative electrodes using a resin binder. For example, alumina particles having a 90% particle size of smaller than 1 µm may be applied to the respective surfaces of the positive electrode with fluororesin used as a binder to form a porous layer.

The external case may be made of any material that is stable to an electrolyte solution to be used. Specific examples thereof include metals such as nickel-plated steel plates, stainless steel, aluminum and aluminum alloys, and magnesium alloys, and a layered film (laminate film) of resin and aluminum foil. To reduce the weight, preferably used is a metal such as aluminum or an aluminum alloy or a laminate film.

An external case made of metal may have a sealed-up structure formed by welding the metal by laser welding, resistance welding, or ultrasonic welding, or a caulking structure using the metal with a resin gasket in between. An external case made of the laminate film may have a sealed-up structure formed by hot-melting resin layers. To improve the sealability, a resin that is different from the resin of the laminate film may be disposed between the resin layers. In particular, in the case of forming a sealed-up structure by hot-melting the resin layers with current collecting terminals in between, metal and resin are to be bonded. Thus, the resin to be disposed between the resin layers is preferably a resin having a polar group or a modified resin having a polar group introduced therein.

The secondary battery containing an electrolyte solution may have any shape, such as a cylindrical shape, a square shape, a laminate shape, a coin shape, or a large-size shape. The shapes and structures of the positive electrode, the negative electrode, and the separator may be changed in accordance with the shape of the battery.

The solid-state secondary battery is preferably an all-solid-state secondary battery. The solid-state secondary battery is preferably a lithium-ion battery or is preferably a sulfide-based solid-state secondary battery.

The solid-state secondary battery preferably includes a positive electrode, a negative electrode, and a solid electrolyte layer between the positive electrode and the negative electrode.

In the solid-state secondary battery, the electrochemical device mixture of the disclosure may be used for an electrode layer or a solid electrolyte layer.

A solid electrolyte layer (preferably a solid electrolyte layer sheet) containing the electrochemical device mixture (preferably a mixture sheet) of the disclosure is also encompassed by a preferred aspect of the disclosure.

The solid-state secondary battery may include a separator between the positive electrode and the negative electrode. Examples of the separator include porous films such as polyethylene and polypropylene films; nonwoven fabrics made of resin such as polypropylene, and nonwoven fabrics such as glass fiber nonwoven fabrics.

The solid-state secondary battery may further include a battery case. The battery case may have any shape that can accommodate the aforementioned components such as the positive electrode, the negative electrode, and the solid electrolyte layer. Specifically, the battery may be of cylindrical type, square type, coin type, or laminate type.

The solid-state secondary battery can be produced by, for example, stacking a positive electrode, a solid electrolyte layer sheet, and a negative electrode in this order and pressing them.

It should be appreciated that a variety of modifications and changes in the structure and other details may be made to the aforementioned embodiments without departing from the spirit and scope of the claims.

### EXAMPLES

The disclosure is more specifically described hereinbelow with reference to examples, but the disclosure is not limited to these examples.

The physical properties were determined by the following methods.

### <Oxygen concentration in reactor>

Gas from an exhaust gas line of the reactor in a N₂ flow was determined and analyzed using a trace oxygen analyzer (trade name "PS-820-L", available from Iijima Electronics Corp.), whereby the oxygen concentration during the reaction was determined.

### <Concentration of polymers (e.g., polymers D and K)>

About 1 g of an aqueous solution of a polymer was dried in a vacuum dryer under conditions of 60°C and 60 minutes and the mass of the heating residue was weighed. The ratio of the mass of the heating residue to the mass of the polymer aqueous solution (1 g), expressed in percentage, was used.

### <Methods of determining weight average molecular weight (Mw) and number average molecular weight (Mn) of polymer D>

The molecular weights Mw and Mn of the polymer D were calculated by gel permeation chromatography (GPC) using GPC HLC-8020 available from Tosoh Corp. and columns available from Shodex (one GPC KF-801, one GPC KF-802, and two GPC KF-806M connected in series) with a flow of tetrahydrofuran (THF) as a solvent at a flow rate of 1 ml/min and with monodispersed polystyrene standards.

### <Methods of determining weight average molecular weight (Mw) and number average molecular weight (Mn) of polymer L and amount of portion (fraction) having molecular weight of 3000 or lower in polymer L>

The molecular weights Mw and Mn of the polymer L were determined by gel permeation chromatography (GPC) using 1260 Infinity II available from Agilent Technologies and columns available from Tosoh Corp. (one TSKgel G3000PW_{XL} and one TSG gel GMPW_{XL}) in connection with a flow of solvent mixture of Tris buffer solution and acetonitrile (Tris buffer solution:acetonitrile = 8:2 (v/v)) at a flow rate of 0.5 ml/min, with the molecular weights being calculated using monodispersed polyethylene oxide (PEO) and polyethylene glycol (PEG) as standards.

### <Method of determining amount of dimer and trimer of monomers (monomers D and K) in polymers (polymers D and K)>

### (1) Extraction from aqueous solution

The solid content of an aqueous solution of the polymer was measured and the aqueous solution in an amount corresponding to a polymer solid content of 0.2 g was weighed. Water and methanol were added thereto so that the volume ratio of water, including the water contained in the aqueous solution, and methanol was 50/50 (% by volume), whereby a liquid mixture containing the polymer as well as water and methanol was obtained. The resulting liquid mixture was centrifuged at 4000 rpm for one hour, so that a supernatant containing the polymer was obtained. This supernatant obtained was filtered using a ultrafiltration disc (cut-off molecular weight: 3000 Da), whereby an extract was collected.

The extract was analyzed using a liquid chromatograph mass spectrometer (Waters, LC-MS ACQUITY UPLC/TQD), whereby a chromatogram of the extract was obtained.

The amount of the dimer and trimer of the monomer contained in the extract was determined by converting the integral values of the peaks derived from the dimer and trimer of the monomer in the chromatogram of the extract into the amount of the dimer and trimer of the monomer using a calibration curve.

### (2) Calibration curve of monomers

Methanol standard solutions of each monomer at five different known levels of amount from 1 ng/mL to 100 ng/mL were prepared and analyzed using a liquid chromatograph mass spectrometer (Waters, LC-MS ACQUITY UPLC/TQD). The relation between the amount of the individual monomer and the integral value of the peak corresponding to the amount was plotted, so that a calibration curve (first order approximation) of the individual monomer was drawn. Based on the calibration curve (first order approximation) of the individual monomer, calibration curves of the dimer and trimer of the individual monomer were drawn.

### Instrument configuration and LC-MS measurement conditions

**[Table 1]**

| LC system | | | | |
|---|---|---|---|---|
| | Device | Acquity UPLC from Waters | | |
| | Column | Acquity UPLC BEH C18 1.7 µm (2.1 × 50 mm) from Waters | | |
| | Mobile phase | A CH₃CN | | |
| | | B 20 mM CH₃COONH₄/H₂O | | |
| | | | 0 → 1.5 min | A:B = 10:90 |
| | | | 1.5 → 8.5 min | A:B = 10:90 → A:B = 90:10 Linear gradient |
| | | | 8.5 → 10 min | A:B = 90:10 |
| | Flow rate | | 0.4 mL/min | |
| | Column temperature | 40°C | | |
| | Sample injection amount | 5 µL | | |

| MS system | | | | |
|---|---|---|---|---|
| | Device | TQ Detector | | |
| | Measurement mode | MRM (multiple reaction monitoring) | | |
| | Ionization method | Electrospray ionization | | |
| | | SCAN | | |

was prepared and the measurement was performed by 70 measurement processes using ELSZ-1000S (available from Otsuka Electronics Co., Ltd.) at 25°C. The refractive index of the solvent (water) was 1.3328 and the viscosity of the solvent (water) was 0.8878 mPa·s.

### <Polymer solid concentration>

A TFE-based polymer aqueous dispersion in an amount of 1 g was dried in an air dryer at 150°C for 60 minutes, and the ratio of the mass of the heating residue to the mass (1 g) of the aqueous dispersion, expressed in percentage, was used.

### <Average primary particle size>

The average primary particle size was determined by dynamic light scattering. In dynamic light scattering, a TFE-based polymer aqueous dispersion with a solid concentration adjusted to about 1.0% by mass was prepared and the measurement was performed by 70 measurement processes using ELSZ-1000S (available from Otsuka Electronics Co., Ltd.) at 25°C. The refractive index of the solvent (water) was 1.3328 and the viscosity of the solvent (water) was 0.8878 mPa·s.

### <Water content>

The mass of the TFE-based polymer composition in an amount of about 20 g was weighed before and after heating at 150°C for two hours, and the water content was calculated by the following formula. The sample was taken three times and this calculation was performed for each sample; the values were then averaged and this average was taken as the water content.

Water content (% by mass) = [(mass (g) of TFE-based polymer composition before heating) - (mass (g) of TFE-based polymer composition after heating)]/(mass (g) of TFE-based polymer composition before heating) × 100

### <Standard specific gravity (SSG)>

The SSG was determined by the water displacement method in conformity with ASTM D792 using a sample molded in conformity with ASTM D4895-89.

### <Amount of modifying monomer>

The TFE-based polymer composition was press-molded into a thin-film disc and this thin-film disc was subjected to FT-IR measurement, so that the infrared absorbances were obtained. The HFP content was determined by multiplying the ratio (absorbance at 982 cm⁻¹)/(absorbance at 935 cm⁻¹) by 0.3.

### <Endothermic peak temperature>

The endothermic peak temperature was determined as follows. Specifically, about 10 mg of powder of a TFE-based polymer that had no history of being heated to 300°C or higher was precisely weighed, and the endothermic peak temperature was determined using DSC (differential scanning calorimeter). The endothermic peak temperature was defined as the temperature corresponding to the minimum value on a heat-of-fusion curve obtained by increasing the temperature at a rate of 10°C/min.

### <Amount of polymers (polymers D and L) in TFE-based polymer composition>

The polymer D content in the TFE-based polymer composition was determined from the spectrum obtained by solid-state ¹⁹F-MAS NMR analysis.

### <Extrusion pressure>

The extrusion pressure was determined by the following method in conformity with the method disclosed in JP 2002-201217 A.

A 100-g portion of the TFE-based polymer composition was combined with 21.7 g of lubricant (trade name: Isopar H^{®}, available from ExxonMobil Corp.), followed by mixing at room temperature in a glass bottle for three minutes. Next, the glass bottle was left to stand at room temperature (25°C) for at least one hour before extrusion, whereby a lubricated resin was obtained. The lubricated resin was paste-extruded through an orifice (diameter: 2.5 mm, land length: 11 mm, introduction angle: 30°) at room temperature at a reduction ratio of 100:1, whereby a uniform beading (extrudate) was obtained. The extrusion speed, i.e., ram speed was set to 20 inches/min (51 cm/min). The load at which the extrusion pressure reached equilibrium in the paste extrusion was measured, and the value obtained was divided by the cross-sectional area of the cylinder used in the paste extrusion, whereby the extrusion pressure was calculated.

### <Expansion test>

The expansion test was performed by the following method in conformity with the method disclosed in JP 2002-201217 A.

A beading obtained by the above paste extrusion was heated at 230°C for 30 minutes, whereby the lubricant was removed from the beading. The beading (extrudate) was then cut to an appropriate length and the resulting sample was clamped at each end with a gap between the clamps of 1.5 inches (38 mm), followed by heating to 300°C in an air-circulating furnace. The clamps were then moved apart at a desired speed (stretching speed) until the separation distance corresponds to a desired degree of stretching (total degree of stretching). Thereby, the expansion test (stretching test) was performed. The stretching method was essentially in conformity with the method disclosed in US 4576869 B except that the extrusion speed was different (not 84 cm/min but 51 cm/min). The "degree of stretching" refers to the increase in length attributable to expansion, and is typically expressed by the ratio to the original length. In the above stretching method, the stretching speed was 1000%/sec and the total degree of stretching was 2400%. Beadings that did not break during expansion in the expansion test were evaluated as expandable.

### <Amount of fluorine-containing compound>

A 1-g portion of each TFE-based polymer composition weighed was combined with 10 g (12.6 mL) of methanol, followed by ultrasonication for 60 minutes, whereby an extract was obtained. The resulting extract was subjected to a LC/MS/MS assay. The extract was subjected to measurement for fluorine-containing compounds therein using a liquid chromatograph mass spectrometer (Waters, LC-MS ACQUITY UPLC/TQD). The instrument configuration and LC-MS measurement conditions are shown in Table 2. Using aqueous solutions of a fluorine-containing compound at a known concentration, aqueous solutions of the fluorine-containing compound at five or more different levels of concentration were prepared, and the aqueous solutions of the respective amounts were subjected to LC/MS analysis. The relation between the amount and the area relative to the amount was plotted, so that a calibration curve was drawn. Based on the resulting calibration curve, the area of the fluorine-containing compound in the extract in the LC/MS chromatogram was converted to the amount of the fluorine-containing compound.

The lower limit of quantitation in this determination method is 10 ppb by mass.

**[Table 2]**

| LC system | | | | |
|---|---|---|---|---|
| | Device | Acquity UPLC from Waters | | |
| | Column | Acquity UPLC BEH C18 1.7 µm (2.1 × 50 mm) from Waters | | |
| | Mobile phase | A CH₃CN | | |
| | | B 20 mM CH₃COONH₄/H₂O | | |
| | | | 0 → 1.5 min | A:B = 10:90 |
| | | | 1.5 → 8.5 min | A:B = 10:90 → A:B = 90:10 Linear gradient |
| | | | 8.5 → 10 min | A:B = 90:10 |
| | Flow rate | | 0.4 mL/min | |
| | Column temperature | 40°C | | |
| | Sample injection amount | 5 µL | | |

| MS system | | | | |
|---|---|---|---|---|
| | Device | TQ Detector | | |
| | Measurement mode | MRM (multiple reaction monitoring) | | |
| | Ionization method | Electrospray ionization | | |
| | | Negative mode | | |

### <Fibril diameter (median)>

(1) A scanning electron microscope (model S-4800, available from Hitachi, Ltd.) was used to take a magnified image (7000x) of a secondary battery mixture sheet, whereby an image was obtained.
(2) This image was provided with two lines drawn at equal intervals in the horizontal direction, whereby the image was trisected.
(3) For all fibrillated binder pieces on the upper line, the diameter was measured at three points for each fibrillated binder piece, and the average was taken as the diameter of this fibrillated binder piece. The three points selected to measure the diameter included the intersection of the fibrillated binder piece and the line and the locations 0.5 µm above and below the intersection (excluding unfibrillated binder primary particles).
(4) The operation of the step (3) was performed for all fibrillated binder pieces on the lower line.
(5) Based on the first image, the field of view was moved 1 mm to the right, and another image was taken. The diameters of fibrillated binder pieces were measured through the steps (3) and (4) above. This process was repeated, and terminated when the number of measurements exceeded 80.
(6) The median of the diameters of all fibrillated binder pieces determined above was taken as the fibril diameter.

### <Self-supporting film test>

A film having a thickness of 10 µm or greater and 1000 µm or smaller was cut with a cutter to provide a piece having a size of 10 × 10 cm, and the center of gravity of this piece was picked with tweezers (PTS07, available from Engineer Inc.). When no crack or break occurred or no fold occurred, the film was determined as a self-supporting film.

### Preparation Example 1

A reactor was charged with 220 g of a monomer D represented by CH₂=CF(CF₂OCFCF₃COOH) and 513 g of water, as well as ammonium persulfate (APS) in an amount of 0.5 mol% relative to the monomer D. The contents were heated and stirred in a nitrogen atmosphere at 60°C for 24 hours, whereby a polymer D aqueous solution D-1 containing a polymer D, which is a homopolymer of CH₂=CF(CF₂OCFCF₃COOH), was obtained.

The resulting polymer D aqueous solution D-1 was subjected to GPC analysis. As a result, the polymer D had a Mw of 180000 and a Mn of 86000, and the amount of the dimer and trimer was 2.0% by mass relative to the polymer D.

The resulting polymer D aqueous solution D-1 was combined with water to adjust the concentration of the polymer D to 5.0% by mass, and then brought into contact with a ultrafiltration membrane (cut-off molecular weight: 50000 Da, made of polyethylene) at 30°C and a water pressure of 0.1 MPa, whereby ultrafiltration was performed. Ultrafiltration was continued while water was poured as appropriate until the amount of a water filtrate finally reached seven times the aqueous solution, whereby a polymer D aqueous solution D-2 was obtained. The resulting polymer D aqueous solution D-2 was subjected to GPC analysis. As a result, the polymer D had a Mw of 180000 and a Mn of 140000, and the amount of the dimer and trimer was less than 1 ppm relative to the polymer D. The resulting polymer D aqueous solution D-2 had a concentration of 5.0% by mass. The polymer D aqueous solution D-2 was subjected to DLS analysis, but the particle size was not measured. The polymer D had an ionic group content of 3.91 meq/g, a fluorine substitution percentage of 80%, and an ion exchange ratio of 4.

### Production Example 1

A 6-L stainless steel reactor equipped with a stirrer was charged with 3457 g of deionized water, 180 g of paraffin wax, 107.4 g of the polymer D aqueous solution D-2, 1.8 g of an aqueous solution of 0.1% by mass Triton^{®} X-100 (trade name, available from The Dow Chemical Co.), and 1.1 g of a 1.0% by mass isopropanol aqueous solution. Ammonia water was added to adjust the pH to 9.1. The contents of the reactor were then heated to 70°C while being suctioned and simultaneously the reactor was purged with TFE to remove oxygen in the reactor, and the contents were stirred. Then, 2.4 g of HFP was added to the reactor and TFE was added until the pressure reached 0.73 MPaG. Into the reactor was injected 17.9 mg of an ammonium persulfate (APS) initiator dissolved in 20 g of deionized water, and the pressure in the reactor was set to 0.83 MPaG. Injection of the initiator was followed by a pressure drop, so that start of polymerization was observed. TFE was added to the reactor so that the pressure was constant at 0.78 MPaG. At the timing when TFE consumed in the reaction reached about 180 g, TFE feed and stirring were stopped. The gas inside the reactor was then slowly released until the pressure inside the reactor reached 0.02 MPaG. TFE was then fed until the pressure inside the reactor reached 0.78 MPaG, and stirring was restarted to continue the reaction. At the timing when TFE consumed in the reaction reached about 540 g, 14.3 mg of hydroquinone dissolved in 20 g of deionized water was injected into the reactor to continue the reaction. At the timing when TFE consumed in the reaction reached about 1200 g, TFE feed was stopped and stirring was stopped, so that the reaction was completed. The reactor was vented until the pressure inside the reactor reached ambient pressure, and the contents were taken out of the reactor and cooled. Supernatant paraffin wax was removed from the TFE-based polymer aqueous dispersion. The resulting TFE-based polymer aqueous dispersion had a solid concentration of 24.4% by mass and an average primary particle size of 261 nm.

### Manufacturing Example 1

The TFE-based polymer aqueous dispersion obtained in Production Example 1 was diluted with deionized water to a solid concentration of 13% by mass. The dilution was stirred vigorously in a container equipped with a stirrer for coagulation, and water was filtered out, whereby a wet powder was obtained. The wet powder had a water content of approximately 45% by mass.

The resulting wet powder was placed in a stainless-steel mesh tray (amount: 2.0 g/cm²), and the mesh tray was heated in a hot air circulating electric furnace at 210°C. After 18 hours, the mesh tray was taken out and air-cooled, whereby a TFE-based polymer composition A was obtained.

The resulting TFE-based polymer composition A had a water content of 0.002% by mass, a standard specific gravity of 2.176, an endothermic peak temperature of 342°C, a HFP content of 0.094% by mass, and a polymer D content of 0.46% by mass. The extrusion pressure was 24.4 MPa, and the TFE-based polymer composition A was expandable.

### Manufacturing Example 2

A TFE-based polymer composition X was obtained as in Manufacturing Example 1 except that the mesh tray was replaced with a flat tray (tray with no air permeability on the bottom and sides) and the heat treatment duration was changed to five hours.

The resulting TFE-based polymer composition X had a water content of 0.072% by mass.

### Manufacturing Example 3

The TFE-based polymer aqueous dispersion obtained in Production Example 1 was diluted with deionized water to a solid concentration of 13% by mass. The polymer D aqueous solution D-2 was added thereto so that the dilution contained the polymer D in an amount corresponding to 1.0% by mass relative to the TFE-based polymer solid. The dilution was stirred vigorously in a container equipped with a stirrer for coagulation, and water was filtered out. The wet powder had a water content of approximately 45% by mass.

The resulting wet powder was placed in a stainless-steel mesh tray (amount: 2.0 g/cm²), and the mesh tray was heated in a hot air circulating electric furnace at 210°C. After 18 hours, the mesh tray was taken out and air-cooled, whereby a TFE-based polymer composition B was obtained.

The resulting TFE-based polymer composition B had a water content of 0.002% by mass and a polymer D content of 1.00% by mass.

### Manufacturing Example 4

The TFE-based polymer aqueous dispersion obtained in Production Example 1 was diluted with deionized water to a solid concentration of 13% by mass. The dilution was stirred vigorously in a container equipped with a stirrer for coagulation, and water was filtered out.

The polymer residue was washed with methanol in an amount equivalent to four times the TFE-based polymer solid, followed by washing with water, whereby a wet powder was obtained. The wet powder had a water content of approximately 45% by mass.

The resulting wet powder was placed in a stainless-steel mesh tray (amount: 2.0 g/cm²), and the mesh tray was heated in a hot air circulating electric furnace at 210°C. After 18 hours, the mesh tray was taken out and air-cooled, whereby a TFE-based polymer composition C was obtained.

The resulting TFE-based polymer composition C had a water content of 0.002% by mass and a polymer D content of 0.10% by mass.

### Preparation Example 2

A reactor was charged with 170 g of sodium 1,1,2,2-tetrafluoro-2-((1,2,2-trifluorovinyl)oxy)ethane-1-sulfonate (monomer K), 340 g of water, and ammonium persulfate (APS) in an amount equivalent to 2.0 mol% relative to the amount of the monomer K, and the contents were stirred in a N₂ flow at 40°C for 72 hours, whereby a polymer K aqueous solution K-1 containing a polymer K, which is a homopolymer of the monomer K, was obtained. The oxygen concentration in the reactor varied within a range from 15 ppm by volume to 800 ppm by volume.

The resulting polymer K aqueous solution K-1 was combined with water to adjust the concentration of the polymer K to 3.8% by mass, and then brought into contact with a ultrafiltration membrane (cut-off molecular weight: 6000 Da, made of polysulfone) at 25°C and a water pressure of 0.1 MPa, whereby ultrafiltration was performed. Ultrafiltration was continued while water was poured as appropriate until a water filtrate finally reached four times the aqueous solution, whereby a polymer K aqueous solution K-2 was obtained. The resulting aqueous solution had a concentration of 1.6% by mass.

Amberlite (IR120B(H)-HG), 300 ml, was weighed in a container, washed with water until no coloring occurred, and combined with 500 ml of 1M-HCl, followed by stirring at room temperature for one hour. The amberlite was charged into a column with a cock and water was passed therethrough until the acidity of waste water became neutral. The resulting polymer K aqueous solution K-2 was fed into the column with a cock and dropwise addition thereof was started. After the dropwise addition was completed, water was passed until the drip liquid became neutral. Thereby, a polymer L aqueous solution L-1 was obtained containing a polymer L of 1,1,2,2-tetrafluoro-2-((1,2,2-trifluorovinyl)oxy)ethane-1-sulfonic acid (monomer L). The resulting aqueous solution had a concentration of 1.5% by mass.

The polymer L aqueous solution L-1 was analyzed. The polymer L had a weight average molecular weight (Mw) of 1.0 × 10⁴ and a number average molecular weight (Mn) of 0.8 × 10⁴.

The amount of the dimer and trimer of the monomer L in the polymer L aqueous solution L-1 was 0.1% by mass or less relative to the polymer L. The amount of fractions having a molecular weight of 3000 or less in the polymer L aqueous solution L-1 was 0.5% or less. The polymer L aqueous solution L-1 was subjected to DLS analysis but the particle size was not measured. The polymer L had an ionic group content of 3.60 meq/g, a fluorine substitution percentage of 100%, and an ion exchange ratio of 4.

### Production Example 2

A 6-L stainless steel reactor equipped with a stirrer was charged with 3087 g of deionized water, 104 g of paraffin wax, 477 g of the polymer L aqueous solution L-1, and 3.58 g of a 0.1% by mass isopropanol aqueous solution. Ammonia water was added to adjust the pH to 9.0. The contents of the reactor were then heated to 70°C while being suctioned and simultaneously the reactor was purged with TFE to remove oxygen in the reactor, and the contents were stirred. Then, 5.8 g of HFP was added to the reactor and TFE was added until the pressure reached 0.73 MPaG. Into the reactor was injected 17.9 mg of an ammonium persulfate (APS) initiator dissolved in 20 g of deionized water, and the pressure in the reactor was set to 0.83 MPaG. Injection of the initiator was followed by a pressure drop, so that start of polymerization was observed. TFE was added to the reactor so that the pressure was constant at 0.78 MPaG. At the timing when TFE consumed in the reaction reached about 180 g, TFE feed and stirring were stopped.

The gas inside the reactor was then slowly released until the pressure inside the reactor reached 0.02 MPaG. TFE was then fed until the pressure inside the reactor reached 0.78 MPaG, and stirring was restarted to continue the reaction. At the timing when TFE consumed in the reaction reached about 540 g, 14.3 mg of hydroquinone dissolved in 20 g of deionized water was injected into the reactor to continue the reaction. At the timing when TFE consumed in the reaction reached about 1250 g, TFE feed was stopped and stirring was stopped, so that the reaction was completed. The reactor was vented until the pressure inside the reactor reached ambient pressure, and the contents were taken out of the reactor and cooled. Supernatant paraffin wax was removed from the TFE-based polymer aqueous dispersion.

The resulting TFE-based polymer aqueous dispersion had a solid concentration of 25.5% by mass and an average primary particle size of 182 nm.

### Manufacturing Example 5

The TFE-based polymer aqueous dispersion obtained in Production Example 2 was diluted with deionized water to a solid concentration of 13% by mass. The dilution was stirred vigorously in a container equipped with a stirrer for coagulation, and water was filtered out, whereby a wet powder was obtained. The wet powder had a water content of approximately 45% by mass.

The resulting wet powder was placed in a stainless-steel mesh tray (amount: 2.0 g/cm²), and the mesh tray was heated in a hot air circulating electric furnace at 240°C. After 18 hours, the mesh tray was taken out and air-cooled, whereby a TFE-based polymer composition D was obtained.

The resulting TFE-based polymer composition D had a water content of 0.002% by mass, a standard specific gravity of 2.165, an endothermic peak temperature of 344°C, a HFP content of 0.294% by mass, and a polymer L content of 0.58% by mass. The extrusion pressure was 17.9 MPa, and the TFE-based polymer composition D was expandable.

No fluorine-containing compounds represented by the following formulas were detected in the TFE-based polymer compositions obtained in Manufacturing Examples 1 to 5. In other words, the amounts of these compounds were less than 10 ppb by mass:

F(CF₂)₇COOH,

F(CF₂)₅COOH,

H(CF₂)₆COOH,

H(CF₂)₇COOH,

CF₃O(CF₂)₃OCHFCF₂COOH,

C₃F₇OCF(CF₃)CF₂OCF(CF₃)COOH,

CF₃CF₂CF₂OCF(CF₃)COOH,

CF₃CF₂OCF₂CF₂OCF₂COOH,

C₂FₛOCF(CF₃)CF₂OCF(CF₃)COOH,

CF₃OCF(CF₃)CF₂OCF(CF₃)COOH,

CF₂ClCF₂CF₂OCF(CF₃)CF₂OCF₂COOH,

CF₂ClCF₂CF₂OCF₂CF(CF₃)OCF₂COOH,

CF₂ClCF(CF₃)OCF(CF₃)CF₂OCF₂COOH,

CF₂ClCF(CF₃)OCF₂CF(CF₃)OCF₂COOH, and

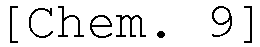

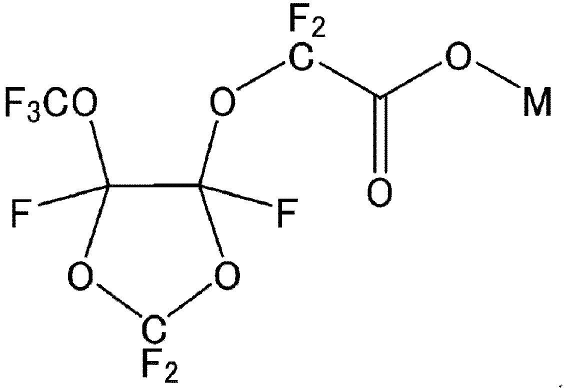

wherein M is H.

Positive electrode mixture sheets, electrodes, and lithium-ion secondary batteries were produced using the individual TFE-based polymer compositions obtained above and evaluated by the following methods.

### Evaluation of electrolyte solution-containing battery

By the following procedures, mixture sheets of Examples 1 to 7 and Comparative Example 1 were produced and evaluated, and the batteries were evaluated.

### <Production of positive electrode mixture sheet>

The active material and the conductive aid were weighed, and the materials were fed into a V-type mixer, followed by mixing at 37 rpm for 10 minutes, whereby a mixture containing the active material and the conductive aid was obtained. Then, the binder (TFE-based polymer composition) weighed was added to the mixture and the mixture was sufficiently cooled in a thermostatic bath at 5°C. The mixture containing the active material, the conductive aid, and the binder was fed into a Henschel mixer and processed at 1000 rpm for three minutes to homogenize the mixture.

Then, the mixture was thoroughly heated in a thermostatic bath at 50°C and processed in a Henschel mixer at 1500 rpm for 10 minutes so that fibrillation was promoted, whereby an electrode mixture was obtained.

The electrode mixture was fed to parallel metal rolls (temperature: 80°C, rotational speed: 1 m/min) and rolled, whereby an electrode mixture sheet was obtained. The resulting rolled sheet was folded into two and thereby coarsely crushed, and the electrode mixture was again fed to the metal rolls (temperature: 80°C, rotational speed: 1 m/min) and rolled, whereby an electrode mixture sheet with higher strength was obtained.

The electrode mixture sheet was then fed to a roll press machine and the gap was adjusted. This adjustment was such that the final thickness of the positive electrode mixture layer was 90 µm.

Tables 3 shows the material types and compositions.

The electrode mixture sheets obtained were each a self-supporting film.

**[Table 3]**

| | (A) Active material | (B) Binder | (C) Conductive aid | Compositional ratio A:B:C (mass ratio) |
|---|---|---|---|---|
| Comparative Example 1 | Li(Ni_{0.6}Mn_{0.2}Co_{0.2})O₂ | TFE-based polymer composition C | SuperP Li | 88:10:2 |
| Example 1 | Li(Ni_{0.6}Mn_{0.2}Co_{0.2})O₂ | TFE-based polymer composition X | SuperP Li | 95.8:2:2.2 |
| Example 2 | Li(Ni_{0.6}Mn_{0.2}Co_{0.2})O₂ | TFE-based polymer composition A | SuperP Li | 95.8:2:2.2 |
| Example 3 | Li(Ni_{0.6}Mn_{0.2}Co_{0.2})O₂ | TFE-based polymer composition B | SuperP Li | 95.8:2:2.2 |
| Example 4 | Li(Ni_{0.6}Mn_{0.2}Co_{0.2})O₂ | TFE-based polymer composition C | SuperP Li | 95.8:2:2.2 |
| Example 5 | Li(Ni_{0.6}Mn_{0.2}Co_{0.2})O₂ | TFE-based polymer composition D | SuperP Li | 95.8:2:2.2 |
| Example 8 | Li(Ni_{0.6}Mn_{0.2}Co_{0.2})O₂ | TFE-based polymer composition C | SuperP Li | 98.8:1.4:2 |
| Example 7 | Li(Ni_{0.6}Mn_{0.2}Co_{0.2})O₂ | TFE-based polymer composition C | SuperP Li | 97:1:2 |

| | | | | |
|---|---|---|---|---|
| SuperP Li: carbon black available from Imerys S.A. | | | | |

### <Measurement of strength of positive electrode mixture sheet>

The positive electrode mixture sheet was cut, whereby a strip-shaped test piece having a width of 4 mm was produced. A tensile tester (AGS-100NX, available from Shimadzu Corp.) was used to determine the strength of the test piece under the condition of 100 mm/min. The chuck-to-chuck distance was set to 30 mm. A displacement was applied to the test piece until breaking, and the maximum stress of the measured results was taken as the strength of each sample. The results were compared with that of Example 1 taken as 100. The test pieces were ranked from A to E in descending order of tensile strength and electrode strength.
A: 230 or higher
B: 180 to 229
C: 120 to 179
D: 105 to 119
E: lower than 105

The results are shown in Table 4.

### <Evaluation of flexibility of positive electrode mixture sheet (bending test)>

The positive electrode mixture sheets produced were cut, whereby test pieces having a width of 4 cm and a length of 10 cm were produced. The test pieces were then wrapped around a Φ10-mm round rod, and the test pieces were visually checked for damage such as scratches and cracks. When no damage was found, the test was conducted with an even thinner Φ5-mm round rod and the test pieces were checked for damage. When no damage was found again, the test was conducted with an even thinner Φ2-mm round rod and the test pieces were checked for damage. The results were classified from A to D.
A: No damage with Φ2-mm rod
B: Damaged with Φ2-mm rod
C: Damaged with Φ5-mm rod
D: Damaged with Φ10-mm rod

The results are shown in Table 4.

### <Production of positive electrode>

The positive electrode mixture sheet was bonded to 20-µm aluminum foil in the following manner.

The adhesive used was a slurry prepared by dissolving polyvinylidene fluoride (PVDF) in N-methylpyrrolidone (NMP) and dispersing carbon black therein at a ratio of 80:20. This adhesive was applied to aluminum foil and dried on an electric griddle at 120°C for 15 minutes, whereby a current collector with an adhesive layer was formed.

The positive electrode mixture sheet was then placed on the current collector with an adhesive layer, and the positive electrode mixture sheet and the current collector were bonded to each other using a roll press machine heated to 100°C. The workpiece was cut to provide a piece in a desired size, followed by tab attachment, whereby a positive electrode was obtained.

### <Production of negative electrode>

First, 98 parts by mass of a carbonaceous material (graphite) was mixed with 1 part by mass of an aqueous dispersion of sodium carboxymethyl cellulose (concentration of sodium carboxymethyl cellulose: 1% by mass) and 1 part by mass of an aqueous dispersion of styrene-butadiene rubber (concentration of styrene-butadiene rubber: 50% by mass) respectively serving as a thickening agent and a binder. The components were mixed using a disperser to form slurry. The resulting slurry was applied to 10-µm-thick copper foil and dried. The workpiece was rolled using a press and cut to provide a piece in a desired size, followed by tab attachment, whereby a negative electrode was obtained.

### <Preparation of electrolyte solution>

A solvent mixture of ethylene carbonate (EC) and ethyl methyl carbonate (EMC) (EC:EMC = 30:70 (volume ratio)) was weighed as an organic solvent into a sample bottle, and fluoroethylene carbonate (FEC) and vinylene carbonate (VC) each in an amount of 1% by mass were dissolved therein, whereby a solution mixture was prepared. A LiPF₆ salt was mixed with this solution mixture at 23°C so that the concentration thereof in the electrolyte solution was 1.1 mol/L, whereby a non-aqueous electrolyte solution was obtained.

### <Production of aluminum laminate cell>

The above positive electrode and negative electrode were placed to face each other with a 20-pm-thick microporous polyethylene film (separator) in between. The non-aqueous electrolyte solution prepared above was injected thereinto and the non-aqueous electrolyte solution was made to sufficiently permeate into the components such as the separator. The workpiece was then sealed, precharged, and aged, whereby a lithium-ion secondary battery was produced.

### <Evaluation of storage characteristics (remaining capacity ratio and amount of gas generated)>

The lithium-ion secondary battery produced above was subjected to constant current/constant voltage charge (hereinafter, referred to as CC/CV charge) (0.1 C cut off) to 4.3 V at a current corresponding to 0.33 C at 25°C, and then discharged to 3 V at a constant current of 0.33 C. This was counted as one cycle, and the discharge capacity at the third cycle was used to determine the initial discharge capacity.

The battery whose initial discharge capacity had been evaluated was again subjected to CC/CV charge (0.1 C cut off) at 25°C to 4.3 V, and the volume of the battery was determined by the Archimedes' method. After the volume of the battery was determined, the battery was stored at a high temperature of 60°C for 30 days. After completion of high-temperature storage, the battery was sufficiently cooled and the volume thereof was determined at 25°C. Based on the difference in volume of the battery before and after the storage test, the amount of gas generated was determined. The amount of gas generated was compared with that in Comparative Example 1 taken as 100.

After the amount of gas generated was determined, the battery was discharged to 3 V at 0.33 C at 25°C and the remaining capacity was determined.

The ratio of the remaining capacity after high-temperature storage to the initial discharge capacity was calculated, which was defined as the remaining capacity ratio (%). (Remaining capacity) / (Initial discharge capacity) × 100 = Remaining capacity rate (%)

The results are shown in Table 4.

**[Table 4]**

| | Strength | Bending test | Remaining capacity | Amount of gas generated | Fibril diameter (median [nm]) |
|---|---|---|---|---|---|
| Comparative Example 1 | A | D | 80% | 100% | 120 |
| Example 1 | - | B | 81% | 89% | 30 |
| Example 2 | D | B | 70% | 79% | 36 |
| Example 3 | D | A | 88% | 82% | 32 |
| Example 4 | B | B | 72% | 79% | 56 |
| Example 5 | C | B | 88% | 79% | 48 |
| Example 6 | C | B | 72% | 79% | 40 |
| Example 7 | D | B | 72% | 79% | 36 |

### Evaluation of electrode mixture sheet for solid-state battery

By the following procedures, mixture sheets of Examples 8 to 12 and Comparative Example 2 were evaluated. The production was performed in an argon atmosphere.

### <Production of positive electrode mixture sheet>

The active material and the conductive aid were weighed, and the materials were fed into a V-type mixer, followed by mixing at 37 rpm for 10 minutes, whereby a mixture containing the active material and the conductive aid was obtained. Then, the binder (TFE composition) weighed and a solid electrolyte were added to the mixture and the mixture was sufficiently cooled in a thermostatic bath at 5°C. The mixture containing the active material, the conductive aid, the binder, and the solid electrolyte was fed into a Henschel mixer and processed at 300 rpm for two minutes to homogenize the mixture.

Then, the mixture was thoroughly heated in a thermostatic bath at 40°C and processed in a Henschel mixer at 1000 rpm for three minutes so that fibrillation was promoted, whereby an electrode mixture was obtained.

The electrode mixture was fed to parallel metal rolls (temperature: 80°C, rotational speed: 1 m/min) and rolled, whereby an electrode mixture sheet was obtained. The resulting rolled sheet was folded into two and thereby coarsely crushed, and the electrode mixture was again fed to the metal rolls (temperature: 80°C, rotational speed: 1 m/min) and rolled, whereby an electrode mixture sheet with higher strength was obtained.

The electrode mixture sheet was then fed to a roll press machine and the gap was adjusted. This adjustment was such that the final thickness of the positive electrode mixture layer was 150 µm.

Tables 5 shows the material types and compositions.

The electrode mixture sheets obtained were each a self-supporting film.

**[Table 5]**

| | (A) Active material | (B) Binder | (C) Conductive aid | (D) Solid electrolyte | Compositional ratio A:B:C:D (mass ratio) |
|---|---|---|---|---|---|
| Example 8 | Li(Ni_{0.8}Mn_{0.1}Co_{0.1})O₂ | TFE-based polymer composition X | denkaLi-400 | Li₁₀SnP₂S₁₂ | 70:1:1.5:27.5 |
| Comparative Example 2 | Li(Ni_{0.8}Mn_{0.1}Co_{0.1})O₂ | TFE-based polymer composition C | denkaLi-400 | Li₁₀SnP₂S₁₂ | 60:10:2.5:27.5 |
| Example 9 | Li(Ni_{0.8}Mn_{0.1}Co_{0.1})O₂ | TFE-based polymer composition A | denkaLi-400 | Li₁₀SnP₂S₁₂ | 70:1:1.5:27.5 |
| Example 10 | Li(Ni_{0.8}Mn_{0.1}Co_{0.1})O₂ | TFE-based polymer composition B | denkaLi-400 | Li₁₀SnP₂S₁₂ | 70:1:1.5:27.5 |
| Example 11 | Li(Ni_{0.8}Mn_{0.1}Co_{0.1})O₂ | TFE-based polymer composition C | denkaLi-400 | Li₁₀SnP₂S₁₂ | 70:1:1.5:27.5 |
| Example 12 | Li(Ni_{0.8}Mn_{0.1}Co_{0.1})O₂ | TFE-based polymer composition D | denkaLi-400 | Li₁₀SnP₂S₁₂ | 70:1:1.5:27.5 |

denka Li-400: carbon black available from Denka Co., Ltd.

### <Measurement of strength of positive electrode mixture sheet (Tensile test)>

The positive electrode mixture sheet was cut, whereby a strip-shaped test piece having a width of 4 mm was produced. A tensile tester (AGS-100NX, available from Shimadzu Corp.) was used to determine the strength of the test piece under the condition of 100 mm/min. The chuck-to-chuck distance was set to 30 mm. A displacement was applied to the test piece until breaking, and the maximum stress of the measured results was taken as the strength of each sample. The results were compared with that of Example 8 taken as 100. The test pieces were ranked from A to E in descending order of tensile strength and electrode strength.
A: 230 or higher
B: 180 to 229
C: 120 to 179
D: 105 to 119
E: lower than 105

The results are shown in Table 6.

### <Evaluation of flexibility of positive electrode mixture sheet (bending test)>

The positive electrode mixture sheets produced were cut, whereby test pieces having a width of 4 cm and a length of 10 cm were produced. The test pieces were then wrapped around a Φ10-mm round rod, and the test pieces were visually checked for damage such as scratches and cracks. When no damage was found, the test was conducted with an even thinner Φ5-mm round rod and the test pieces were checked for damage. When no damage was found again, the test was conducted with an even thinner Φ2-mm round rod and the test pieces were checked for damage. The results were classified from A to D.
A: No damage with Φ2-mm rod
B: Damaged with Φ2-mm rod
C: Damaged with Φ5-mm rod
D: Damaged with Φ10-mm rod

The results are shown in Table 6.

**[Table 6]**

| | Strength | Bending test |
|---|---|---|
| Example 8 | - | C |
| Comparative Example 2 | A | D |
| Example 9 | D | C |
| Example 10 | D | B |
| Example 11 | B | C |
| Example 12 | C | C |

### Evaluation of solid electrolyte mixture sheet

By the following procedures, mixture sheets of Examples 13 to 19 and Comparative Example 3 were produced and evaluated.

### <Production of solid electrolyte mixture sheet>

The binder (TFE composition) weighed was cooled sufficiently in a thermostatic bath at 5°C, fed into a Henschel mixer, and processed at 300 rpm for two minutes for pulverization treatment.

The pulverized binder and the solid electrolyte were each weighed and cooled sufficiently in a thermostatic bath at 5°C. They were fed into a Henschel mixer and processed at 300 rpm for one minute to homogenize the mixture.

Then, the mixture was thoroughly heated in a thermostatic bath at 40°C and processed in a Henschel mixer at 1000 rpm for one minute so that fibrillation was promoted, whereby an electrolyte mixture was obtained.

The electrode mixture was fed to parallel metal rolls (temperature: 80°C, rotational speed: 1 m/min) and rolled, whereby an electrolyte mixture sheet was obtained. The resulting rolled sheet was folded into two and thereby coarsely crushed, and the electrolyte mixture was again fed to the metal rolls (temperature: 80°C, rotational speed: 1 m/min) and rolled, whereby an electrolyte mixture sheet with higher strength was obtained.

The electrolyte mixture sheet was then fed to a roll press machine and the gap was adjusted. This adjustment was such that the final thickness of the electrolyte mixture sheet was 120 µm.

Tables 7 shows the material types and compositions.

**[Table 7]**

| | (A) Active material | (B) Binder | (C) Conductive aid | (D) Solid electrolyte | Compositional ratio A:B:C:D (mass ratio) |
|---|---|---|---|---|---|
| Comparative Example 3 | None | TFE-based polymer composition C | None | Li₁₀SnP₂S₁₂ | 0:10:0:90 |
| Example 13 | None | TFE-based polymer composition X | None | Li₁₀SnP₂S₁₂ | 0:2:0:98 |
| Example 14 | None | TFE-based polymer composition A | None | Li₁₀SnP₂S₁₂ | 0:2:0:98 |
| Example 15 | None | TFE-based polymer composition B | None | Li₁₀SnP₂S₁₂ | 0:2:0:98 |
| Example 16 | None | TFE-based polymer composition C | None | Li₁₀SnP₂S₁₂ | 0:2:0:98 |
| Example 17 | None | TFE-based polymer composition D | None | Li₁₀SnP₂S₁₂ | 0:2:0:98 |
| Example 18 | None | TFE-based polymer composition D | None | Li₁₀SnP₂S₁₂ | 0:1.5:0:98.5 |
| Example 19 | None | TFE-based polymer composition D | None | Li₁₀SnP₂S₁₂ | 0:0.9:0:99.1 |

### <Measurement of strength of solid electrolyte mixture sheet (Tensile test)>

The solid electrolyte mixture sheet was cut, whereby a strip-shaped test piece having a width of 4 mm was produced. A tensile tester (AGS-100NX, available from Shimadzu Corp.) was used to determine the strength of the test piece under the condition of 100 mm/min. The chuck-to-chuck distance was set to 30 mm. A displacement was applied to the test piece until breaking, and the maximum stress of the measured results was taken as the strength of each sample. The results were compared with that of Example 13 taken as 100. The test pieces were ranked from A to E in descending order of tensile strength and electrode strength.
A: 230 or higher
B: 180 to 229
C: 120 to 179
D: 105 to 119
E: lower than 105

The results are shown in Table 8.

### <Evaluation of flexibility of solid electrolyte mixture sheet (bending test)>

The solid electrolyte mixture sheets produced were cut, whereby test pieces having a width of 4 cm and a length of 10 cm were produced. The test pieces were then wrapped around a Φ10-mm round rod, and the test pieces were visually checked for damage such as scratches and cracks. When no damage was found, the test was conducted with an even thinner Φ5-mm round rod and the test pieces were checked for damage. When no damage was found again, the test was conducted with an even thinner Φ2-mm round rod and the test pieces were checked for damage. The results were classified from A to D.
A: No damage with Φ2-mm rod
B: Damaged with Φ2-mm rod
C: Damaged with Φ5-mm rod
D: Damaged with Φ10-mm rod

The results are shown in Table 8.

### <Ion conductivity of solid electrolyte mixture sheet>

The solid electrolyte mixture sheet was cut to an appropriate size, and gold was vapor-deposited on both sides of the resulting sheet. Then, the resulting solid electrolyte mixture sheet was perforated to provide a Φ10-mm disc. This disc was placed in a pressure cell, the screws of the cell were tightened with 8 N, and the top and bottom of the cell were caused to function as electrodes. FIG. 1 shows a schematic diagram of the pressure cell used.

Using this sample, the ion conductivity was measured using an impedance measurement apparatus available from Toyo Corp. under the conditions including 25°C, an AC amplitude modulation of 10 mV, and a frequency of 5 × 10⁶ to 0.1 Hz.

The results are shown in Table 8.

**[Table 8]**

| | Strength | Bending test | Ion conductivity (mS/cm) |
|---|---|---|---|
| Comparative Example 3 | A | D | 0.05 |
| Example 13 | - | C | 0.3 |
| Example 14 | D | C | 1.1 |
| Example 15 | D | B | 0.8 |
| Example 18 | B | C | 1.3 |
| Example 17 | C | C | 0.9 |
| Example 18 | C | C | 0.9 |
| Example 19 | D | C | 1.1 |

Use of the electrochemical device mixture of the disclosure enables production of a mixture sheet leading to good mechanical properties (strength and flexibility) of an electrode, which allows for exertion of good battery characteristics.

### REFERENCE SIGNS LIST

1: screw
2: nut
3: insulating sheet
4: solid electrolyte mixture sheet
5: deposited gold
6: upper electrode
7: lower electrode

## Claims

1. An electrochemical device mixture comprising:
an electrode active material and/or a solid electrolyte; and
a binder,
the binder containing a tetrafluoroethylene-based polymer composition,
the tetrafluoroethylene-based polymer composition containing a tetrafluoroethylene-based polymer and a macromolecular compound containing an ionic group,
the binder being contained in an amount of 0.3% by mass or more and 8% by mass or less relative to the electrochemical device mixture.

2. The electrochemical device mixture according to claim 1,
wherein the ionic group includes at least one selected from the group consisting of -SO₃M³, -PO₃M³, and - COOM^{a}, wherein M^{a} is -H, a metal atom, -NR²₄, imidazolium optionally containing a substituent, pyridinium optionally containing a substituent, or phosphonium optionally containing a substituent, where R² is H or an organic group.

3. The electrochemical device mixture according to claim 2,
wherein the ionic group includes at least one selected from the group consisting of -SO₃M³ and -COOM^{a}, wherein M^{a} is -H or an alkali metal atom.

4. The electrochemical device mixture according to any one of claims 1 to 3,
wherein the ionic group is contained in an amount of 0.8 meq/g or more relative to the macromolecular compound.

5. The electrochemical device mixture according to any one of claims 1 to 4,
wherein the tetrafluoroethylene-based polymer and the macromolecular compound are contained in a total amount of 99.95% by mass or more of the tetrafluoroethylene-based polymer composition.

6. The electrochemical device mixture according to any one of claims 1 to 5,
wherein the macromolecular compound is contained in an amount of 0.08% by mass or more and 1.0% by mass or less relative to the tetrafluoroethylene-based polymer.

7. The electrochemical device mixture according to any one of claims 1 to 6,
wherein a proportion of hydrogen atoms replaced by fluorine atoms among those bonded to any carbon atom of the macromolecular compound is 50% or more.

8. The electrochemical device mixture according to any one of claims 1 to 7,
wherein the macromolecular compound has an ion exchange ratio of 53 or lower.

9. The electrochemical device mixture according to any one of claims 1 to 8,
wherein the macromolecular compound is a watersoluble macromolecular compound.

10. The electrochemical device mixture according to any one of claims 1 to 9,
wherein the macromolecular compound includes at least one selected from the group consisting of a polymer (I) containing a polymerized unit (I) based on a monomer represented by the following formula (I) and a compound (II) represented by the following formula (II),
the formula (I) being:
CX¹X³=CX²R(-CZ¹Z²-A⁰)ₘ (I)
wherein X¹ and X³ are each independently F, Cl, H, or CF₃; A⁰ is an anionic group; X² is H, F, an alkyl group, or a fluorine-containing alkyl group; R is a linking group; Z¹ and Z² are each independently H, F, an alkyl group, or a fluorine-containing alkyl group; and m is an integer of 1 or greater,
the formula (II) being:
T^{X}-X^{A}-R^{FA1}-R^{FA2}-X^{A}-T^{X}' (II)
wherein
R^{FA1} is -Rf¹ₚ-R^{F}-O_{q}-;
R^{FA2} is -Rf²ₚ-R^{FX}-O_{q}-;
R^{F} is a divalent fluoropolyether group;
R^{FX} is a divalent fluoropolyether group containing an anionic group;
Rf¹ and Rf² are each independently a C1-C6 alkylene group optionally substituted by one or more fluorine atoms;
ps are each independently 0 or 1;
qs are each independently 0 or 1;
X^{A}s are each independently a single bond or a divalent to decavalent group; and
T^{X} and T^{X}' are each independently selected from the group consisting of (i) a C1-C24 (hydro)(fluoro)carbon group optionally containing one or more species of H, O, and Cl and being free from the anionic group and (ii) a C1-C24 (hydro)(fluoro)carbon group containing at least one group identical with the anionic group.

11. The electrochemical device mixture according to claim 10,
wherein the macromolecular compound is the polymer (I) and, in the formula (I), X¹ and X³ are each independently F or H; A⁰ is -SO₃M^{a} or -COOM^{a}, wherein M^{a} is -H or an alkali metal atom; X² is F; R is a C1-C4 fluorinated alkylene group containing an ether bond; Z¹ and Z² are each independently F or CF₃; and m is 1.

12. The electrochemical device mixture according to any one of claims 1 to 11,
wherein the tetrafluoroethylene-based polymer is polytetrafluoroethylene.

13. The electrochemical device mixture according to any one of claims 1 to 12,
wherein the tetrafluoroethylene-based polymer contains a tetrafluoroethylene unit and a modifying monomer unit based on a modifying monomer copolymerizable with tetrafluoroethylene.

14. The electrochemical device mixture according to any one of claims 1 to 13,
wherein the binder has a fibrous structure having a fibril diameter (median) of 100 nm or smaller.

15. The electrochemical device mixture according to any one of claims 1 to 14,
wherein the tetrafluoroethylene-based polymer composition has a standard specific gravity of 2.280 or lower.

16. The electrochemical device mixture according to any one of claims 1 to 15,
wherein the solid electrolyte is a sulfide-based solid electrolyte or an oxide-based solid electrolyte.

17. The electrochemical device mixture according to any one of claims 1 to 16,
wherein the electrode active material is a lithium-nickel composite oxide.

18. The electrochemical device mixture according to any one of claims 1 to 17,
wherein the electrochemical device mixture is in a form of a self-supporting film.

19. The electrochemical device mixture according to any one of claims 1 to 18,
wherein the electrochemical device mixture has a thickness of 300 um or smaller.

20. The electrochemical device mixture according to any one of claims 1 to 19,
wherein the electrochemical device mixture is a mixture for a secondary battery.

21. The electrochemical device mixture according to claim 20,
wherein the electrochemical device mixture is a mixture for a lithium-ion secondary battery.

22. The electrochemical device mixture according to claim 20 or 21,
wherein the electrochemical device mixture is a mixture for a solid-state secondary battery.

23. The electrochemical device mixture according to any one of claims 1 to 19,
wherein the electrochemical device mixture is a mixture for a capacitor.

24. An electrochemical device mixture sheet comprising the electrochemical device mixture according to any one of claims 1 to 22.

25. An electrode comprising the electrochemical device mixture sheet according to claim 24.

26. An electrochemical device comprising the electrode according to claim 25.
